(19) Europäisches Patentamt
European Patent Office
Office européen des brevets

(11) **EP 2 501 585 B1**

(12) **EUROPÄISCHE PATENTSCHRIFT**

(45) Veröffentlichungstag und Bekanntmachung des Hinweises auf die Patenterteilung:
**22.05.2019   Patentblatt 2019/21**

(21) Anmeldenummer: **10772976.6**

(22) Anmeldetag: **18.10.2010**

(51) Int Cl.:
*B60Q 1/14* (2006.01)   *B60Q 1/08* (2006.01)
*B60Q 1/16* (2006.01)   *G06K 9/00* (2006.01)
*G06K 9/32* (2006.01)

(86) Internationale Anmeldenummer:
**PCT/EP2010/006345**

(87) Internationale Veröffentlichungsnummer:
**WO 2011/060861 (26.05.2011 Gazette 2011/21)**

(54) **VERFAHREN ZUM STEUERN EINER SCHEINWERFERANORDNUNG FÜR EIN FAHRZEUG UND SCHEINWERFERANORDNUNG**

METHOD OF CONTROL OF A VEHICLE HEADLAMP AND HEADLAMP ARRANGEMENT

PROCÉDÉ DE COMMADE D'UN PHARE DE VÉHICULE ET DISPOSITF DE PHARE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2009   DE 102009054227**

(43) Veröffentlichungstag der Anmeldung:
**26.09.2012   Patentblatt 2012/39**

(73) Patentinhaber: **Volkswagen Aktiengesellschaft 38440 Wolfsburg (DE)**

(72) Erfinder:
• **DIERKS, Karsten**
  **38486 Klötze (DE)**
• **FREESE, Martin**
  **38176 Wendeburg (DE)**
• **JAHRSAU, Bernd**
  **38524 Sassenburg (DE)**

(56) Entgegenhaltungen:
EP-A1- 2 060 441      EP-A1- 2 119 592
EP-A2- 1 605 202      WO-A1-2009/039882
DE-A1-102007 038 077  DE-A1-102007 045 150
US-A1- 2004 143 380

## Beschreibung

Die vorliegende Erfindung betrifft ein Verfahren zum Steuern einer Scheinwerferanordnung für ein Fahrzeug sowie eine Scheinwerferanordnung für ein Fahrzeug, die eine Steuervorrichtung umfasst.

Die Scheinwerfer eines Fahrzeugs haben die Aufgabe, bei schlechten Sichtverhältnissen, insbesondere bei Dunkelheit, die Umgebung in Fahrtrichtung von dem Fahrzeug, insbesondere die Fahrbahn, auszuleuchten. Zusätzlich dienen die Scheinwerfer als Erkennungsmerkmal für andere Verkehrsteilnehmer.

Es ist bekannt, für die Lichtemission in Fahrtrichtung Scheinwerfer vorzusehen, welche eine Abblendlichtfunktion und eine Fernlichtfunktion bereitstellen können. Dabei sorgt die Fernlichtfunktion für eine sehr umfassende Ausleuchtung der Umgebung. Sie besitzt jedoch den Nachteil, dass andere Verkehrsteilnehmer, insbesondere die Fahrer vorausfahrender und entgegenkommender Fahrzeuge, geblendet werden. Mit dem Abblendlicht kann hingegen eine Lichtverteilung erzeugt werden, welche andere Verkehrsteilnehmer nicht blendet. Die Ausleuchtung der Umgebung ist jedoch sehr viel geringer als bei der Fernlichtfunktion. Aufgrund der mittlerweile sehr hohen Verkehrsdichten kann die Fernlichtfunktion nur noch sehr selten eingesetzt werden. Es besteht daher ein Bedürfnis, Scheinwerferanordnungen bereitzustellen, die eine bessere Ausleuchtung als die herkömmliche Abblendlichtfunktion bereitstellen, die jedoch nicht wie die Fernlichtfunktion andere Verkehrsteilnehmer blenden.

Aus der DE 10 2007 045 150 A1 ist ein Verfahren zum Steuern einer Scheinwerferanordnung für ein Fahrzeug bekannt. Die Scheinwerferanordnung umfasst in diesem Fall zwei beabstandete Scheinwerfer, die jeweils einen Lichtstrahl zum Erzeugen einer Gesamtlichtverteilung emittieren. Des Weiteren umfassen die Scheinwerfer jeweils eine Blendenanordnung, deren Lage zum Verändern der Gesamtlichtverteilung veränderbar ist. Bei dem Verfahren wird ein Verkehrsteilnehmer in Richtung der Lichtemission der Scheinwerferanordnung erfasst. Wenn ein solcher Verkehrsteilnehmer erfasst wurde, wird die Lage zumindest einer Blendenanordnung so verändert, dass bei der Gesamtlichtverteilung in Richtung des erfassten Verkehrsteilnehmers ein Mittelbereich mit geringerer Leuchtweite und beidseitig neben diesem Mittelbereich Seitenbereiche mit größerer Leuchtweite gebildet werden. Dabei wird die Leuchtweite im Mittelbereich insbesondere in Richtung des erfassten Verkehrsteilnehmers in Abhängigkeit von dem vertikalen Winkel, d.h. dem Abstand des Verkehrsteilnehmers, geregelt. Die Lichtverteilung wird ausschließlich durch die Veränderung der Lage der Blenden der Blendenanordnung sowie gegebenenfalls durch das Schwenken der Lichtemissionsrichtung der Scheinwerfer um eine vertikale Achse erzeugt.

Aus der DE 10 2007 028 658 A1 ist ein weiteres Verfahren zum Steuern einer Scheinwerferanordnung für ein Fahrzeug beschrieben. Die Scheinwerferanordnung weist in diesem Fall eine rechte und eine linke Scheinwerfereinheit auf, die jeweils separate Scheinwerfer für ein Abblendlicht und ein Fernlicht umfassen. Bei dem Verfahren wird ein Verkehrsteilnehmer in Richtung der Lichtemission der Scheinwerferanordnung erfasst. Wenn ein solcher Verkehrsteilnehmer erfasst wurde, wird die von den Scheinwerfern für das Fernlicht erzeugte Lichtverteilung hinsichtlich der seitlichen Ausleuchtung verändert. Die von den separaten Scheinwerfern für das Abblendlicht erzeugte Lichtverteilung bleibt hingegen unverändert.

Schließlich ist aus der DE 10 2007 040 042 A1 ein System zum Erzeugen eines Lichtbündels im Vorfeld eines Kraftfahrzeugs beschrieben. Das System besteht aus einem Scheinwerfer mit einem LED-Feld, welches mehrere, separat elektrisch ansteuerbare Leuchtdioden umfasst. Das System umfasst ferner eine Objektdetektionseinrichtung zum Detektieren von Objekten im Umfeld des Kraftfahrzeugs und eine Positionsbestimmungseinrichtung zur Bestimmung der Position eines erkannten Objekts relativ zum Kraftfahrzeug. Bei diesem System werden die einzelnen Leuchtdioden so angesteuert, dass im Bereich eines erfassten Objekts ein Beleuchtungsstärkegrenzwert nicht überschritten wird.

Es ist die Aufgabe der vorliegenden Erfindung, ein Verfahren und eine Scheinwerferanordnung der eingangs genannten Art bereitzustellen, mit denen eine Gesamtlichtverteilung erzeugbar ist, welche die Umgebung des Fahrzeugs so gut wie möglich ausleuchtet, andere Verkehrsteilnehmer hingegen nicht blendet.

Erfindungsgemäß wird diese Aufgabe durch ein Verfahren mit den Merkmalen des Anspruchs 1 und eine Scheinwerferanordnung mit den Merkmalen des Anspruchs 7 gelöst. Vorteilhafte Aus- und Weiterbildungen ergeben sich aus den abhängigen Ansprüchen.

Gemäß der vorliegenden Erfindung wird ein Verfahren zum Steuern einer Scheinwerferanordnung für ein Fahrzeug bereitgestellt, bei dem die Scheinwerferanordnung zwei beabstandete Scheinwerfer aufweist und bei dem Verkehrsteilnehmer in Fahrtrichtung vor dem Fahrzeug erfasst werden. Des Weiteren ist eine erste Gesamtlichtverteilung erzeugbar, bei der die Leuchtweite auf einer ersten Seite einer Mittelachse größer ist als auf der anderen, zweiten Seite dieser Mittelachse. Die Leuchtweite auf der anderen, zweiten Seite reicht bis zu einer Abschneidegrenze, damit der erfasste Verkehrsteilnehmer nicht geblendet wird, wobei die erste Gesamtlichtverteilung von der Überlagerung einer ersten Teillichtverteilung des ersten Scheinwerfers und einer zweiten Teillichtverteilung des zweiten Scheinwerfers erzeugt wird, wobei die größere Leuchtweite auf der ersten Seite der Mittelachse von der Lichtemission beider Scheinwerfer erzeugt wird. Ferner ist eine zweite Gesamtlichtverteilung erzeugbar, die von der Überlagerung der ersten Teillichtverteilung des ersten Scheinwerfers und der zweiten Teillichtverteilung des zweiten Scheinwerfers erzeugt wird, bei der die Gesamtlichtverteilung so regelbar ist, dass sie in Richtung zumindest eines erfassten Verkehrsteilnehmers einen Mittelbereich mit einer Leuchtweite aufweist, die geringer als der Abstand zu dem erfassten Verkehrsteilnehmer ist und die beidseitig neben dem Mittelbereich zwei Seitenbereiche mit Leuchtweiten aufweist, die größer als der Abstand zu dem erfassten Verkehrsteilnehmer sind. Der Abstand ist dabei so definiert, dass er, wenn der erfasste Verkehrsteilnehmer ein anderes Fahrzeug ist, bis zur Stoßstange des anderen Fahrzeugs reicht, oder, wenn der erfasste Verkehrsteilnehmer ein Radfahrer oder Fußgänger ist, bis zu dem Punkt reicht, bei dem der erfasste Verkehrsteilnehmer den Boden berührt. Das Verfahren ist dadurch gekennzeichnet, dass beim Umschalten von der ersten Gesamtlichtverteilung auf die zweite Gesamtlichtverteilung, um eine Blendung des anderen Verkehrsteilnehmers(11) während des Umschaltens von der ersten Gesamtlichtverteilung (39) zur zweiten Gesamtlichtverteilung (40) zu vermeiden, zunächst die Leuchtweite zumindest des zweiten Scheinwerfers auf der ersten Seite der Mittelachse zumindest so weit verringert wird, dass sie kleiner ist als der Abstand zu dem erfassten Verkehrsteilnehmer, danach die zweite Gesamtlichtverteilung erzeugt wird und danach schließlich die zweite Gesamtlichtverteilung erzeugt wird.

Bei der Mittelachse handelt es sich insbesondere um die Trennlinie zwischen den Fahrbahnen bei einer geraden Strasse. In diesem Fall stellt die erste Seite dieser Mittelachse die rechte Fahrbahn und die zweite Seite dieser Mittelachse die linke Gegenfahrbahn dar. Bei Linksverkehr sind die Seiten entsprechend vertauscht.

Erfindungsgemäß werden bei der vorliegenden Erfindung verschiedene Gesamtlichtverteilungen bereitgestellt. Ferner wird zwischen diesen Gesamtlichtverteilungen hin- und hergeschaltet. Die Gesamtlichtverteilungen werden im Folgenden definiert:

Die erste Gesamtlichtverteilung ist insbesondere hinsichtlich einer Längsachse asymmetrisch, wenn man den Verlauf der Hell-Dunkel-Grenze auf der Strasse betrachtet. Auf der Seite der eigenen Fahrbahn, d.h. auf der ersten Seite der Mittelachse, wird eine größere Leuchtweite bereitgestellt als auf der Seite der Nachbarfahrbahn, welche bei einspurigen Strassen die Gegenfahrbahn darstellt. Auf der Nachbarfahrbahn reicht die Leuchtweite insbesondere nur bis zu einer Abschneidegrenze, damit entgegenkommende Verkehrsteilnehmer nicht geblendet werden. Die erste Gesamtlichtverteilung stellt z. B. insbesondere eine an sich bekannte Abblendlichtverteilung dar. Betrachtet man die Hell-Dunkel-Grenze auf einem senkrecht zur Fahrzeuglängsachse angeordneten Schirm, ergibt sich bei der Abblendlichtverteilung auf der Fahrseite ein charakteristischer Anstieg der Hell-Dunkel-Grenze um 15° zur Horizontalen. Dieser 15°-Anstieg entspricht der größeren Leuchtweite auf der Fahrseite des Fahrzeugs.

Die zweite erfindungsgemäß bereitgestellte Gesamtlichtverteilung, die im Folgenden auch als maskiertes Dauerfernlicht bezeichnet wird, zeichnet sich insbesondere durch eine Regelung der Leuchtweite in Abhängigkeit von einem erfassten Verkehrsteilnehmer oder mehreren erfassten Verkehrsteilnehmern aus. In Richtung eines solchen Verkehrsteilnehmers oder in Richtung mehrerer solcher Verkehrsteilnehmer, d.h. in einem Bereich mit einem Öffnungswinkel, welcher durch die Breite und die Entfernung des/der erfassten Verkehrsteilnehmer(s) bestimmt wird, ist die Leuchtweite geringer als der Abstand zu dem/den erfassten Verkehrsteilnehmer(n). Der Abstand wird dabei so definiert, dass der Verkehrsteilnehmer von der zweiten Gesamtlichtverteilung nicht geblendet werden kann. Handelt es sich bei dem erfassten Verkehrsteilnehmer beispielsweise um ein anderes Fahrzeug, kann der Abstand beispielsweise bis zur Stosstange des anderen Fahrzeugs reichen. Handelt es sich bei dem anderen Verkehrsteilnehmer um einen Radfahrer oder Fußgänger, kann der Abstand so definiert sein, dass er bis zu dem Punkt reicht, bei dem der andere Verkehrsteilnehmer den Boden berührt.

Das maskierte Dauerfernlicht zeichnet sich ferner dadurch aus, dass in einer anderen Richtung, d.h. insbesondere in einem Bereich seitlich neben dem Öffnungswinkel, welcher den erfassten Verkehrsteilnehmer umfasst, eine Leuchtweite bereitgestellt wird, die größer als der Abstand zu dem erfassten Verkehrsteilnehmer ist. Bei der zweiten Gesamtlichtverteilung wird in Richtung des erfassten Verkehrsteilnehmers ein Mittelbereich mit geringerer Leuchtweite und beidseitig neben diesem Mittelbereich werden Seitenbereiche mit größerer Leuchtweite gebildet. Auf diese Weise wird bei dem maskierten Dauerfernlicht eine optimale Ausleuchtung der Umgebung des Fahrzeugs in Fahrtrichtung bereitgestellt, bei der jedoch Verkehrsteilnehmer in Fahrtrichtung vor dem Fahrzeug nicht geblendet werden. Betrachtet man die Hell-Dunkel-Grenze des maskierten Dauerfernlichts auf einem senkrecht angeordneten Messschirm, wird insbesondere vor dem erfassten Verkehrsteilnehmer eine horizontale Hell-Dunkel-Grenze gebildet und neben dem erfassten Verkehrsteilnehmer wird eine senkrechte Hell-Dunkel-Grenze gebildet, welche der höheren Leuchtweite in dem Bereich neben dem erfassten Verkehrsteilnehmer entspricht. Die Leuchtweite im Mittelbereich, welche bei der zweiten Gesamtlichtverteilung insbesondere bis zum erfassten Verkehrsteilnehmer reicht, wird bevorzugt durch eine bereits vorhandene Leuchtweitenregulierung geregelt.

Schließlich wird bei einigen Aspekten der Erfindung eine dritte Gesamtlichtverteilung bereitgestellt, die im Folgenden auch als gleitende Leuchtweite bezeichnet wird. Bei der gleitenden Leuchtweite wird die maximale Leuchtweite so geregelt, dass sie bis zu einem erfassten Verkehrsteilnehmer reicht. Die Leuchtweite ist in diesem Fall somit geringer als der Abstand zu dem erfassten Verkehrsteilnehmer, wobei die Leuchtweite nicht statisch ist, sondern in Abhängigkeit von dem Abstand des erfassten Verkehrsteilnehmers geregelt wird. Bei der gleitenden Leuchtweite wird jedoch - anders als beim maskierten Dauerfernlicht - in der Mitte der Gesamtlichtverteilung keine vertikale Hell-Dunkel-Grenze ausgebildet.

Unter dem Begriff *Leuchtweite* wird im Sinne der Erfindung eine winkelabhängige Entfernung auf der Strasse verstanden, bei der die Lichtintensität einen Grenzwert unterschreitet. Der Grenzwert für die Lichtintensität ist insbesondere in derselben Weise definiert wie bei der Hell-Dunkel-Grenze. In Entfernungen, die über die Leuchtweite hinausgehen, ist die Lichtintensität insbesondere so gering, dass andere Verkehrsteilnehmer nicht mehr geblendet werden. Der Winkel ist insbesondere ein Horizontalwinkel, der von einer Längsachse durch einen Scheinwerfer oder eine Scheinwerferanordnung einerseits und eine Verbindungslinie von einem Punkt auf der Hell-Dunkel-Grenze und dem Schnittpunkt der Längsachse mit einer Querachse, welche durch den Scheinwerfer bzw. die Scheinwerferanordnung führt, gebildet wird.

Bei dem erfindungsgemäßen Verfahren werden die Gesamtlichtverteilungen von der Überlagerung einer ersten Teillichtverteilung des ersten Scheinwerfers und einer zweiten Teillichtverteilung des zweiten Scheinwerfers erzeugt. Beim Umschalten von einer Gesamtlichtverteilung auf die andere Gesamtlichtverteilung, insbesondere von der ersten Gesamtlichtverteilung auf die zweite Gesamtlichtverteilung wird die Leuchtweite zumindest des zweiten Scheinwerfers, insbesondere von beiden Scheinwerfern, auf der ersten Seite der Mittelachse verringert. Danach wird zum Erzeugen der zweiten Gesamtlichtverteilung die Lichtemissionsrichtung des zweiten Scheinwerfers um eine senkrechte Schwenkachse geschwenkt.

Wenn die zweite Gesamtlichtverteilung, d.h. das maskierte Dauerfernlicht dadurch erzeugt wird, dass bei Rechtsverkehr die Lichtemissionsrichtung des linken Scheinwerfers nach außen von der Lichtemissionsrichtung des rechten Scheinwerfers weggeschwenkt wird, so dass sich der Winkel zwischen den Lichtemissionsrichtungen der beiden Scheinwerfer vergrößert, und wenn der linke Scheinwerfer auf der rechten Seite der Mittelachse, d.h. auf der Seite der Fahrbahn, eine größere Leuchtweite aufweist als auf der linken Seite der Mittelachse, d.h. auf der Gegenfahrbahn, ergibt sich das Problem, dass beim Schwenken des Lichtkegels des linken Scheinwerfers gegebenenfalls ein anderer Verkehrsteilnehmer geblendet wird. Um dies zu verhindern, wird bei dem erfindungsgemäßen Verfahren die größere Leuchtweite auf der ersten Seite der Mittelachse zunächst verringert. Die Lichtemissionsrichtung wird erst dann nach außen geschwenkt.

Die Verringerung der Leuchtweite vor dem Erzeugen des maskierten Dauerfernlichts kann beispielsweise dadurch erfolgen, dass von der Scheinwerferanordnung eine sogenannte Stadtlichtfunktion erzeugt wird. Die Stadtlichtfunktion zeichnet sich dadurch aus, dass eine symmetrische Gesamtlichtverteilung mit begrenzter Leuchtweite erzeugt wird, wobei die Leuchtweite geringer ist als die maximale Leuchtweite der ersten Gesamtlichtverteilung, d.h. zum Beispiel des Abblendlichts. Der zweite Scheinwerfer kann dann wie bei einer Kurvenlichtfunktion nach außen geschwenkt werden. Danach wird die zweite Gesamtlichtverteilung erzeugt.

Wird umgekehrt von der zweiten Gesamtlichtverteilung, d.h. dem maskierten Dauerfernlicht, auf die erste Gesamtlichtverteilung, d.h. zum Beispiel auf das Abblendlicht umgeschaltet, wird zunächst eine Stadtlichtverteilung erzeugt, der zweite Scheinwerfer, und ggf. auch der erste Scheinwerfer, dann um eine senkrechte Schwenkachse geschwenkt und erst danach die asymmetrische erste Gesamtlichtverteilung erzeugt. Auf diese Weise wird auch beim Zurückschalten auf die erste Gesamtlichtverteilung eine Blendung anderer Verkehrsteilnehmer verhindert.

Des Weiteren wird gemäß der Erfindung eine Scheinwerferanordnung für ein Fahrzeug bereitgestellt. Die erfindungsgemäße Scheinwerferanordnung weist zumindest zwei beabstandete Scheinwerfer zum Erzeugen einer Gesamtlichtverteilung auf. Des Weiteren umfasst die Scheinwerferanordnung eine Einrichtung zum Erfassen von Verkehrsteilnehmern in Fahrtrichtung vor dem Fahrzeug und eine Steuervorrichtung, welche mit der Verkehrsteilnehmer-Erfassungsvorrichtung gekoppelt ist und mit welcher eine erste Gesamtlichtverteilung erzeugbar ist, bei der die Leuchtweite auf einer ersten Seite einer Mittelachse größer ist als auf der anderen, zweiten Seite dieser Mittelachse und die Leuchtweite auf der anderen, zweiten Seite bis zu einer Abschneidegrenze reicht, damit der erfasste Verkehrsteilnehmer nicht geblendet wird, wobei die erste Gesamtlichtverteilung von der Überlagerung einer ersten Teillichtverteilung des ersten Scheinwerfers und einer zweiten Teillichtverteilung des zweiten Scheinwerfers erzeugbar ist, wobei die größere Leuchtweite auf der ersten Seite der Mittelachse von der Lichtemission beider Scheinwerfer erzeugbar ist, und mit welcher eine zweite Gesamtlichtverteilung erzeugbar ist, die von der Überlagerung der ersten Teillichtverteilung des ersten Scheinwerfers und der zweiten Teillichtverteilung des zweiten Scheinwerfers erzeugbar ist, bei der die Gesamtlichtverteilung so regelbar ist, dass sie in Richtung zumindest eines erfassten Verkehrsteilnehmers einen Mittelbereich mit einer Leuchtweite aufweist, die geringer als der Abstand zu dem erfassten Verkehrsteilnehmer ist, und die beidseitig neben dem Mittelbereich zwei Seitenbereiche mit Leuchtweiten aufweist, die größer als der Abstand zu dem erfassten Verkehrsteilnehmer sind. Die Scheinwerferanordnung ist dadurch gekennzeichnet, dass mit der Steuervorrichtung beim Umschalten von der ersten Gesamtlichtverteilung auf die zweite Gesamtlichtverteilung die Scheinwerfer so ansteuerbar sind, dass, um eine Blendung des anderen Verkehrsteilnehmers(11) während des Umschaltens von der ersten Gesamtlichtverteilung (39) zur zweiten Gesamtlichtverteilung (40) zu vermeiden, zunächst die Leuchtweite zumindest des zweiten Scheinwerfers auf der ersten Seite der Mittelachse zumindest so weit verringert wird, dass sie kleiner ist als der Abstand zu dem erfassten Verkehrsteilnehmer, danach die zweite Gesamtlichtverteilung erzeugt wird und danach schließlich die zweite Gesamtlichtverteilung erzeugt wird.

Die Scheinwerferanordnung gemäß der Erfindung ist insbesondere so ausgebildet, das sie das erfindungsgemäße Verfahren vollständig oder teilweise ausführen kann.

Dieser Aspekt der Erfindung betrifft insbesondere den Übergang von einer asymmetrischen Lichtverteilung, wie beispielsweise einem Abblendlicht, zu dem sogenannten maskierten Dauerfernlicht. Durch das erfindungsgemäße Verfahren und die erfindungsgemäße Scheinwerferanordnung wird insbesondere erreicht, dass beim Umschalten zwischen diesen beiden Gesamtlichtverteilungen ein anderer Verkehrsteilnehmer nicht geblendet wird.

Die Leuchtweitenregulierung der erfindungsgemäßen Scheinwerferanordnung weist zum Schwenken der Lichtemissionsrichtung zumindest eines Scheinwerfers um eine horizontale Achse insbesondere einen ersten Aktuator auf. Des Weiteren kann die Scheinwerferanordnung zum Schwenken der Lichtemissionsrichtung zumindest eines Scheinwerfers um eine vertikale Achse einen zweiten Aktuator aufweisen. Bei diesem Aktuator kann es sich beispielsweise um einen bereits für eine Kurvenlichtfunktion vorhandenen Aktuator handeln.

Gemäß einer weiteren Ausgestaltung der erfindungsgemäßen Scheinwerferanordnung umfasst diese für die Scheinwerfer jeweils eine Blendenanordnung, die zumindest zwei vertikal und/oder horizontal bewegbare flächige Blenden aufweist. Bei der zweiten Gesamtlichtverteilung, d.h. bei dem maskierten Dauerfernlicht, bilden die Seitenbereiche jeweils eine vertikale Hell-Dunkel-Grenze zu dem Mittelbereich, die durch Veränderung der vertikalen Lage und/oder der horizontalen Lage zumindest einer der beiden Blenden erzeugbar sind. Zum vertikalen und horizontalen Verschieben der beiden Blenden weist die Scheinwerferanordnung insbesondere einen gemeinsam mit beiden Blenden gekoppelten dritten Aktuator auf. Auf diese Weise können die verschiedenen gemäß der Erfindung erzeugten Gesamtlichtverteilungen von nur drei Aktuatoren erzeugt werden. Dadurch wird erreicht, dass die erfindungsgemäßen Scheinwerferanordnung kostengünstig hergestellt und betrieben werden kann.

Gemäß einer weiteren Ausgestaltung des erfindungsgemäßen Verfahrens wird bei der Lichtverteilung die Richtung des erfassten Verkehrsteilnehmers ein Mittelbereich mit geringerer Leuchtweite und beidseitig neben diesem Mittelbereich ein erster und ein zweiter Seitenbereich mit größerer Leuchtweite gebildet, wenn kein entgegenkommender Verkehrsteilnehmer erfasst worden ist. Es wird in diesem Fall somit ein maskiertes Dauerfernlicht bereitgestellt, bei dem der zweite Seitenbereich die Nachbarfahrbahn ausleuchtet. In diesem Fall ist die Abbaurate größer, wenn der erste, d.h. rechte Seitenbereich eine größere Leuchtweite als der Mittelbereich aufweist, als wenn der erste Seitenbereich eine kleinere oder gleiche Leuchtweite als bzw. wie der Mittelbereich aufweist. Die Nachbarfahrbahn wird in diesem Fall somit schneller wieder ausgeleuchtet, wenn der andere Seitenbereich des maskierten Dauerfernlichts ausgeleuchtet ist. Die Ausleuchtung des ersten Seitenbereichs wird in diesem Fall auch insbesondere in Abhängigkeit von dem Erfassen eines Verkehrsteilnehmers zu- bzw. abgeschaltet. Insgesamt kann somit eine weitgehende Beruhigung des Lichtbildes bei einem höheren Verkehrsaufkommen durch das erfindungsgemäße Verfahren realisiert werden.

Gemäß einer weiteren Ausgestaltung des erfindungsgemäßen Verfahrens wird die Kurvigkeit der Fahrbahn bestimmt und in den zweiten Leuchtzustand mit einer geringeren Ausleuchtung der Nachbarfahrbahn geschaltet, wenn die Kurvigkeit einen Grenzwert überschreitet. Die Kurvigkeit der Fahrbahn kann aus Daten bestimmt werden, die von Sensoren des Fahrzeugs bestimmt werden, wie beispielsweise der zeitlichen Veränderung des Lenkwinkeleinschlags, oder anhand der aktuellen Position des Fahrzeugs und einer zum Beispiel im Navigationssystem vorliegenden digitalen geographischen Karte bestimmt werden.

Gemäß einer Ausgestaltung des erfindungsgemäßen Verfahrens erfolgt die Auswahl der Gesamtlichtverteilung ferner in Abhängigkeit von der Position anderer erfasster Verkehrsteilnehmer und/oder von der Fahrzeuggeschwindigkeit. Beispielsweise wird mit jedem erfassten Verkehrsteilnehmer eine erste Schrittweite erzeugt. Die bei jedem erfassten Verkehrsteilnehmer erzeugten ersten Schrittweiten werden integriert und von der integrierten Schrittweite wird eine zweite Schrittweite subtrahiert, die von der Fahrzeuggeschwindigkeit abhängt. Hierdurch wird ein erstes Ausgabesignal erzeugt, welches eine der Gesamtlichtverteilungen kennzeichnet. Dabei kann auch die erste Schrittweite zusätzlich von der Fahrzeuggeschwindigkeit abhängen.

Gemäß einer weiteren Ausgestaltung des erfindungsgemäßen Verfahrens erfolgt die Auswahl der Gesamtlichtverteilung alternativ oder zusätzlich in Abhängigkeit von zeitlichen Lenkwinkeländerungen des Fahrzeugs. Insbesondere wird in Abhängigkeit von Lenkwinkeländerungen ein erster Lenkwinkelwert erzeugt. Ferner wird in Abhängigkeit von der Fahrzeuggeschwindigkeit und dem Lenkwinkel ein zweiter Lenkwinkelwert erzeugt. In Abhängigkeit von dem ersten und zweiten Lenkwinkelwert wird dann ein zweites Ausgabesignal erzeugt, welches eine der Gesamtlichtverteilungen kennzeichnet. Durch die Berücksichtigung der zeitlichen Lenkwinkeländerungen kann eine kurvenreiche Fahrbahn erfasst werden. Der Einsatz bestimmter Gesamtlichtverteilungen, wie beispielsweise der Einsatz des maskierten Dauerfernlichts, sind bei kurvigen Fahrbahnen nachteilig. Durch das erfindungsgemäße Verfahren kann somit ferner bei kurvigen Fahrbahnen eine Gesamtlichtverteilung erzeugt werden, die für solche Fahrbahnen geeignet ist. Beispielsweise kann in diesem Fall eine gleitende Leuchtweite erzeugt werden.

Im Folgenden werden mögliche Aus- und Weiterbildungen der Erfindung beschrieben, die mit allen vorgenannten Aspekten der Erfindung kombiniert werden können. Ferner sind die im Folgenden beschriebenen Aus- und Weiterbildungen untereinander beliebig kombinierbar.

Bei einer Ausgestaltung des erfindungsgemäßen Verfahrens erfolgt das Umschalten von einer Gesamtlichtverteilung auf eine andere Gesamtlichtverteilung automatisch, insbesondere in Abhängigkeit von dem Erfassen eines Verkehrsteilnehmers. Des Weiteren ist es auch möglich, dass das Umschalten von einer Gesamtlichtverteilung auf eine andere Gesamtlichtverteilung durch einen Betätigungsvorgang eines Nutzers ausgelöst wird.

Gemäß einer weiteren Ausgestaltung des erfindungsgemäßen Verfahrens ist der Energieverbrauch zumindest einer Gesamtlichtverteilung einstellbar. Insbesondere die zweite Gesamtlichtverteilung lässt sich in einem energiesparenden Modus als sogenannter Fernlichtassistent betreiben, der nur zwischen einem Abblendlicht und einem herkömmlichen Fernlicht auf- bzw. abblendet. In diesem energiesparenden Modus wird durch die verminderte Bewegungshäufigkeit, insbesondere durch eine seltenere Betätigung von Aktuatoren Energie gespart.

Bei dem erfindungsgemäßen Verfahren kann weiterhin erfasst werden, ob eine mehrspurige Strasse befahren wird. Unter einer mehrspurigen Strasse wird hier verstanden, dass mehrere nebeneinander liegende Fahrspuren derselben Fahrrichtung zugeordnet sind. Wenn eine mehrspurige Strasse erfasst worden ist, wird auf einen Leuchtzustand für die benachbarte Fahrbahn geschaltet, bei welcher diese Nachbarfahrbahn mit einer geringeren Leuchtweite ausgeleuchtet wird. Beispielsweise kann auf die dritte Gesamtlichtverteilung für die gleitende Leuchtweite geschaltet werden.

Gemäß einer Ausgestaltung des erfindungsgemäßen Verfahrens wird beim Hin- und Herschalten zwischen zwei Gesamtlichtverteilungen eine Hysterese durchlaufen. Durch diese Ausgestaltung wird erreicht, dass ein zu häufiges Hin- und Herschalten zwischen zwei Gesamtlichtverteilungen vermieden wird. Dies führt zu einer Beruhigung des Lichtbildes.

Andere Verkehrsteilnehmer können bei dem erfindungsgemäßen Verfahren und bei der erfindungsgemäßen Scheinwerferanordnung durch eine Kamera, insbesondere eine CCD-Kamera mit nachgeschalteter Bildverarbeitungssoftware und/oder einen Laser-, Infrarot- und/oder Radarsensor erfasst werden. Mittels dieser Sensoren wird erfasst, ob sich ein anderer Verkehrsteilnehmer in einem Erfassungsbereich befindet. Falls dies der Fall ist, wird außerdem erfasst, bei welcher Position sich der andere Verkehrsteilnehmer relativ zu dem eigenen Fahrzeug befindet. Auf diese Weise lassen sich nicht nur beleuchtete Verkehrsteilnehmer erfassen, sondern auch Verkehrsteilnehmer, die keine eigenen Lichtquellen haben, wie beispielsweise Fußgänger.

Bei allen vorgenannten Aspekten des erfindungsgemäßen Verfahrens kann der Verkehrsteilnehmer, wenn es sich um ein beleuchtetes Fahrzeug handelt, in Fahrtrichtung vor dem Fahrzeug insbesondere dadurch erfasst werden, dass ein Bild eines Verkehrsbereichs im sichtbaren Spektralbereich aufgenommen wird, aus dem Bild zusammenhängende Bereiche mit einer Helligkeit extrahiert werden, die einen Schwellwert überschreitet, die Bereiche zumindest in Abhängigkeit von ihrer Größe klassifiziert werden, für jeden Bereich ein Konfidenzwert, der ein Maß für die Ähnlichkeit des Bereichs des Bildes zu einem Fahrzeuglicht darstellt, aus der Klassifikation des Bereiches und einer physikalischen Größe, die dem Bereich zugeordnet ist, gebildet wird, und schließlich in Abhängigkeit von dem Konfidenzwert bestimmt wird, ob ein Bereich einem Fahrzeuglicht zugeordnet ist.

Das erfindungsgemäße Verfahren berücksichtigt, dass sich helle Bereiche des Bildes, die von weit entfernten Lichtquellen stammen, von hellen Bereichen unterscheiden, die von nahen Lichtquellen stammen. An Hand dieser Unterscheidung werden die hellen Bereiche des Bildes klassifiziert. Da durch die Klassifikation jedoch in vielen Fällen keine eindeutige Zuordnung eines Bereichs zu einem Fahrzeuglicht möglich ist, wird anschließend zumindest für die Bereiche, die nicht eindeutig einem Fahrzeuglicht zugeordnet werden können, ein Konfidenzwert bestimmt. In Abhängigkeit von diesem Konfidenzwert kann sehr zuverlässig ermittelt werden, ob ein Bereich einem Fahrzeuglicht zugeordnet werden kann.

Bei der von der Scheinwerferanordnung erzeugten Lichtverteilung handelt es sich insbesondere um die vorstehend genannte zweite Gesamtlichtverteilung, d.h. um das maskierte Dauerfernlicht. Bei den beiden Leuchtzuständen dieser Gesamtlichtverteilung wird bei dem erfindungsgemäßen Verfahren die Leuchtweite eines Seitenbereichs neben einem ersten erfassten Verkehrsteilnehmer in Abhängigkeit von dem Erfassen eines weiteren Verkehrsteilnehmers angepasst. Geht die Anpassung so weit, dass die Leuchtweite in den Seitenbereichen der Leuchtweite dem Mittelbereich des maskierten Dauerfernlichts entspricht, ergibt sich, dass der erste Leuchtzustand der Lichtverteilung dem maskierten Dauerfernlicht entspricht und der zweite Leuchtzustand der Lichtverteilung der vorstehend genannten dritten Gesamtlichtverteilung entspricht, d.h. der gleitenden Leuchtweite.

Die Verzögerungszeit ist insbesondere umso größer, desto häufiger weitere, insbesondere entgegenkommende Verkehrsteilnehmer erfasst werden. Beispielsweise wird mit jedem erfassten weiteren Verkehrsteilnehmer die Verzögerungszeit um ein Verlängerungsintervall verlängert und die Verzögerungszeit mit einer definierten zeitlichen Abbaurate verkürzt. Gegebenenfalls kann jedoch ein Minimalwert und ein Maximalwert für die Verzögerungszeit vorgegeben werden, damit die Verzögerungszeit bei einer sehr hohen Verkehrsdichte nicht beliebig lang wird. Durch die spezielle Wahl der Verzögerungszeit wird erreicht, dass für den Fahrer ein angenehmes Lichtbild erzeugt wird, welches nicht durch zu häufige Wechsel unruhig wirkt.

Des Weiteren kann das Verlängerungsintervall in Abhängigkeit davon bestimmt werden, in welcher horizontalen Winkelposition der weitere, insbesondere entgegenkommende Verkehrsteilnehmer erfasst worden ist Es kann insbesondere berücksichtigt werden, ob der Verkehrsteilnehmer auf der linken oder rechten Seite oder in der Mitte vor dem Fahrzeug auftaucht. Schließlich kann das Verlängerungsintervall und/oder die Abbaurate auch in Abhängigkeit von der Fahrzeuggeschwindigkeit bestimmt werden. Beispielsweise kann in einem Geschwindigkeitsbereich, der typisch für Landstrassen ist, die Verzögerungszeit beim Erfassen entgegenkommender Verkehrsteilnehmer nur langsam erhöht, jedoch schnell erniedrigt werden. Andererseits kann bei hohen Geschwindigkeiten, wie sie beispielsweise auf einer Autobahn typisch sind, ein neu erfasster weiterer Verkehrsteilnehmer zu einer großen Verlängerung der Verzögerungszeit führen, wobei die Reduktion der Verzögerungszeit durch die Abbaurate langsam erfolgt.

Die Verzögerungszeit liegt beispielsweise in einem Bereich von einer Sekunde bis 400 Sekunden, insbesondere in einem Bereich von 2 Sekunden bis 200 Sekunden.

Gemäß einer weiteren Ausgestaltung des erfindungsgemäßen Verfahrens wird bei der Lichtverteilung die Richtung des erfassten Verkehrsteilnehmers ein Mittelbereich mit geringerer Leuchtweite und beidseitig neben diesem Mittelbereich ein erster und ein zweiter Seitenbereich mit größerer Leuchtweite gebildet, wenn kein entgegenkommender Verkehrsteilnehmer erfasst worden ist. Es wird in diesem Fall somit ein maskiertes Dauerfernlicht bereitgestellt, bei dem der zweite Seitenbereich die Nachbarfahrbahn ausleuchtet. In diesem Fall ist die Abbaurate größer, wenn der erste, d.h. rechte Seitenbereich eine größere Leuchtweite als der Mittelbereich aufweist, als wenn der erste Seitenbereich eine kleinere oder gleiche Leuchtweite als bzw. wie der Mittelbereich aufweist. Die Nachbarfahrbahn wird in diesem Fall somit schneller wieder ausgeleuchtet, wenn der andere Seitenbereich des maskierten Dauerfernlichts ausgeleuchtet ist. Die Ausleuchtung des ersten Seitenbereichs wird in diesem Fall auch insbesondere in Abhängigkeit von dem Erfassen eines Verkehrsteilnehmers zu- bzw. abgeschaltet. Insgesamt kann somit eine weitgehende Beruhigung des Lichtbildes bei einem höheren Verkehrsaufkommen durch das erfindungsgemäße Verfahren realisiert werden.

Gemäß einer weiteren Ausgestaltung des erfindungsgemäßen Verfahrens wird die Kurvigkeit der Fahrbahn bestimmt und in den zweiten Leuchtzustand mit einer geringeren Ausleuchtung der Nachbarfahrbahn geschaltet, wenn die Kurvigkeit einen Grenzwert überschreitet. Die Kurvigkeit der Fahrbahn kann aus Daten bestimmt werden, die von Sensoren des Fahrzeugs bestimmt werden, wie beispielsweise der zeitlichen Veränderung des Lenkwinkeleinschlags, oder anhand der aktuellen Position des Fahrzeugs und einer zum Beispiel im Navigationssystem vorliegenden digitalen geographischen Karte bestimmt werden.

Gemäß dem vierten Aspekt der Erfindung wird ferner eine Scheinwerferanordnung für ein Fahrzeug bereitgestellt, die zumindest zwei beabstandete Scheinwerfer zum Erzeugen einer Gesamtlichtverteilung und einer Einrichtung zum Erfassen vorausfahrender und entgegenkommender Verkehrsteilnehmer in Fahrtrichtung vor dem Fahrzeug aufweist. Ferner umfasst die Scheinwerferanordnung eine Steuervorrichtung, welche mit der Verkehrsteilnehmer-Erfassungsvorrichtung gekoppelt ist und mit welcher eine Gesamtlichtverteilung erzeugbar ist, die so regelbar ist, dass sie in Richtung eines erfassten vorausfahrenden Verkehrsteilnehmers eine Leuchtweite aufweist, die geringer als der Abstand zu dem erfassten vorausfahrenden Verkehrsteilnehmer ist, und deren Leuchtweite in Richtung der Nachbarfahrbahn in Abhängigkeit von dem Erfassen eines entgegenkommenden Verkehrsteilnehmers zwischen zumindest einem ersten Leuchtzustand mit einer erhöhten Ausleuchtung der Nachbarfahrbahn und einem zweiten Leuchtzustand mit einer geringeren Ausleuchtung der Nachbarfahrbahn hin- und hergeschaltet wird. Die Scheinwerferanordnung ist dadurch gekennzeichnet, dass die Steuervorrichtung eine Verzögerungseinheit aufweist, mit welcher das Umschalten zwischen den beiden Leuchtzuständen für die Leuchtweite in Richtung der Nachbarfahrbahn in Abhängigkeit von der Erfassungsrate von entgegenkommenden Verkehrsteilnehmern verzögerbar ist.

Durch den vierten Aspekt der Erfindung kann insbesondere ein zu häufiges Hin- und Herschalten zwischen verschiedenen Lichtverteilungen vermieden werden. Hierdurch wird die erzeugte Lichtverteilung beruhigt und es kann eine Ablenkung des Fahrers durch die Veränderungen der Lichtverteilung vermieden werden.

Gemäß einem fünften Aspekt der Erfindung wird ein Verfahren zum Steuern einer Scheinwerferanordnung eines Fahrzeugs bereitgestellt, bei dem Verkehrsteilnehmer in Richtung vor dem Fahrzeug erfasst werden und die von der Scheinwerferanordnung erzeugte Lichtverteilung so geregelt wird, dass sie in Richtung zumindest eines erfassten Verkehrsteilnehmers eine Leuchtweite aufweist, die geringer als der Abstand zu dem erfassten Verkehrsteilnehmer ist, und die in einer anderen Richtung eine Leuchtweite aufweist, die größer als der Abstand zu dem erfassten Verkehrsteilnehmer ist. Das Verfahren ist dadurch gekennzeichnet, dass die Leuchtweite in der anderen Richtung in Abhängigkeit von dem horizontalen Winkel zwischen der Fahrtrichtung des Fahrzeugs und der Verbindungslinie von dem Fahrzeug zu dem erfassten Verkehrsteilnehmer oder einem weiteren erfassten Verkehrsteilnehmer geregelt wird. Bei der von der Scheinwerferanordnung erzeugten Lichtverteilung handelt es sich insbesondere um die vorstehend genannte zweite Gesamtlichtverteilung.

Die Leuchtweite ist insbesondere in der anderen Richtung umso größer, desto kleiner der horizontale Winkel ist. Gemäß einer Ausgestaltung des erfindungsgemäßen Verfahrens gilt für die Leuchtweite L in der anderen Richtung Folgendes:

$$LW = L_{\max}\left(-m\Phi + n\right),$$

wobei $L_{\max}$ die maximale Leuchtweite ist, $\Phi$ der horizontale Winkel ist, für m gilt:

$$0,167 Grad^{-1} \leq m \leq 0,4 Grad^{-1},$$

insbesondere

$$0,2 Grad^{-1} \leq m \leq 0,3 Grad^{-1}$$

und besonders bevorzugt

$$m = 0,25 Grad^{-1}$$

und für n gilt:

$$1 \leq n \leq 1,2,$$

insbesondere

$$1,1 \leq n \leq 1,15$$

und besonders bevorzugt

$$n = 1,125.$$

Außerdem wird bevorzugt festgelegt, dass bis zu einem bestimmten Winkel die Leuchtweite der maximalen Leuchtweite entspricht und ab einem bestimmten Winkel die Leuchtweite minimal ist. Für horizontale Winkel $\Phi \leq \Phi_1$ entspricht die Leuchtweite in der anderen Richtung der maximalen Leuchtweite, wobei $\Phi_1$ in einem Bereich von 0° bis 2°, insbesondere von 0,2° bis 0,8° liegt. Ferner entspricht für horizontale Winkel $\Phi \geq \Phi_2$ die Leuchtweite in der anderen Richtung der minimalen Leuchtweite, wobei $\Phi_2$ in einem Bereich von 3° bis 6°, insbesondere von 4° bis 5°, liegt.

Durch die vorstehend genannten Parameter kann sichergestellt werden, dass die Verringerung der Leuchtweite bei einem entgegenkommenden Verkehrsteilnehmer oder bei einem Verkehrsteilnehmer, der überholt wird, nicht zu abrupt erfolgt. Auch diese Maßnahme trägt zu einer Beruhigung des Lichtbildes bei.

Die Leuchtweite in der anderen Richtung wird insbesondere in Abhängigkeit von dem horizontalen Winkel zwischen der Fahrtrichtung des Fahrzeugs und der Verbindungslinie von dem Fahrzeug zu dem weiteren erfassten Verkehrsteilnehmer geregelt. In diesem Fall leuchtet die Lichtverteilung unter anderem die Gegenfahrbahn aus.

Des Weiteren kann die Leuchtweite in der anderen Richtung in Abhängigkeit von dem horizontalen Winkel zwischen der Fahrtrichtung des Fahrzeugs und der Verbindungslinie von dem Fahrzeug zu dem erfassten Verkehrsteilnehmer geregelt werden. In diesem Fall leuchtet die Lichtverteilung in der anderen Richtung bei einem Überholvorgang den Bereich neben der Fahrbahn des erfassten Verkehrsteilnehmers aus, d.h. bei Rechtsverkehr den rechten Bereich neben dem Verkehrsteilnehmer, der überholt wird. Die Regelung der Leuchtweite in der anderen Richtung kann insbesondere erfolgen, nachdem ein Signal für einen Überholvorgang in Richtung der Gegenfahrbahn gesetzt wurde, zum Beispiel der Fahrtrichtungsanzeiger in Richtung der Gegenfahrbahn getätigt wurde.

Gemäß einer Ausgestaltung des erfindungsgemäßen Verfahrens werden bei der Lichtverteilung in Richtung zumindest des erfassten Verkehrsteilnehmers ein Mittelbereich mit geringerer Leuchtweite und beidseitig neben diesem Mittelbereich Seitenbereiche mit größerer Leuchtweite gebildet, d.h. es wird die zweite Gesamtlichtverteilung bereitgestellt. In diesem Fall wird die Leuchtweite in einem Seitenbereich in Abhängigkeit von dem horizontalen Winkel zwischen der Fahrtrichtung des Fahrzeugs und der Verbindungslinie des Fahrzeugs mit dem erfassten Verkehrsteilnehmer oder dem weiteren erfassten Verkehrsteilnehmer geregelt.

Bei der Steuerung der Leuchtweite in Abhängigkeit von dem horizontalen Winkel kann außerdem ein Hysterese durchlaufen werden.

Gemäß dem fünften Aspekt der Erfindung wird ferner eine Scheinwerferanordnung für ein Fahrzeug mit zumindest zwei beabstandeten Scheinwerfern zum Erzeugen einer Gesamtlichtverteilung und einer Einrichtung zum Erfassen eines Verkehrsteilnehmers in Fahrtrichtung vor dem Fahrzeug bereitgestellt. Die Scheinwerferanordnung umfasst

ferner eine Steuervorrichtung, welche mit der Verkehrsteilnehmer-Erfassungsvorrichtung gekoppelt ist und mit welcher eine Gesamtlichtverteilung erzeugbar ist, die so regelbar ist, dass sie in Richtung zumindest eines erfassten Verkehrsteilnehmers eine Leuchtweite aufweist, die geringer als der Abstand zu dem erfassten Verkehrsteilnehmer ist, und die in einer anderen Richtung eine Leuchtweite aufweist, die größer als der Abstand zu dem erfassten Verkehrsteilnehmer ist. Die Scheinwerferanordnung ist dadurch gekennzeichnet, dass mit der Steuervorrichtung die Scheinwerfer so ansteuerbar sind, dass die Leuchtweite in der anderen Richtung in Abhängigkeit von dem horizontalen Winkel zwischen der Fahrtrichtung des Fahrzeugs und der Verbindungslinie von dem Fahrzeug zu dem erfassten Verkehrsteilnehmer oder einem weiteren erfassten Verkehrsteilnehmer regelbar ist.

Durch das Verfahren und die Scheinwerferanordnung des fünften Aspektes der Erfindung kann die Lichtverteilung insbesondere gesteuert werden, wenn ein Fahrzeug vor dem eigenen Fahrzeug fährt und ein anderes Fahrzeug entgegenkommt oder wenn das eigene Fahrzeug ein anderes vorausfahrendes Fahrzeug überholt. Dabei wird sichergestellt, dass sich die erzeugte Gesamtlichtverteilung nicht zu abrupt verändert.

Gemäß einem sechsten Aspekt der vorliegenden Erfindung wird ein Verfahren zum Steuern einer Scheinwerferanordnung eines Fahrzeugs bereitgestellt, mit welcher zumindest zwei Gesamtlichtverteilungen erzeugbar sind, wobei zwischen den beiden Gesamtlichtverteilungen hin- und herschaltbar ist. Bei dem Verfahren werden Verkehrsteilnehmer in Fahrtrichtung vor dem Fahrzeug erfasst. Die Auswahl einer der beiden Gesamtlichtverteilungen erfolgt erfindungsgemäß in Abhängigkeit von der Erfassungsrate anderer Verkehrsteilnehmer.

Durch das Verfahren gemäß dem sechsten Aspekt der Erfindung wird erreicht, dass eine bestimmte Gesamtlichtverteilung erzeugt werden kann, wenn die Verkehrsdichte zu hoch ist, d.h. sehr viele Verkehrsteilnehmer innerhalb eines Zeitintervalls erfasst werden. Bei den zwei Gesamtlichtverteilungen handelt es sich insbesondere um die vorstehend genannte zweite Gesamtlichtverteilung, d.h. das maskierte Dauerfernlicht, und die dritte Gesamtlichtverteilung, d.h. die gleitende Leuchtweite. Übersteigt die Erfassungsrate einen bestimmten Grenzwert, wird die gleitende Leuchtweite als Gesamtlichtverteilung erzeugt. Dadurch kann verhindert werden, dass die Bereiche des maskierten Dauerfernlichts, welche eine sehr große Leuchtweite aufweisen, zu häufig an- und abgeschaltet werden müssen.

Gemäß einer Ausgestaltung des erfindungsgemäßen Verfahrens erfolgt die Auswahl der Gesamtlichtverteilung ferner in Abhängigkeit von der Position anderer erfasster Verkehrsteilnehmer und/oder von der Fahrzeuggeschwindigkeit. Beispielsweise wird mit jedem erfassten Verkehrsteilnehmer eine erste Schrittweite erzeugt. Die bei jedem erfassten Verkehrsteilnehmer erzeugten ersten Schrittweiten werden integriert und von der integrierten Schrittweite wird eine zweite Schrittweite subtrahiert, die von der Fahrzeuggeschwindigkeit abhängt. Hierdurch wird ein erstes Ausgabesignal erzeugt, welches eine der Gesamtlichtverteilungen kennzeichnet. Dabei kann auch die erste Schrittweite zusätzlich von der Fahrzeuggeschwindigkeit abhängen.

Gemäß einer weiteren Ausgestaltung des erfindungsgemäßen Verfahrens erfolgt die Auswahl der Gesamtlichtverteilung alternativ oder zusätzlich in Abhängigkeit von zeitlichen Lenkwinkeländerungen des Fahrzeugs. Insbesondere wird in Abhängigkeit von Lenkwinkeländerungen ein erster Lenkwinkelwert erzeugt. Ferner wird in Abhängigkeit von der Fahrzeuggeschwindigkeit und dem Lenkwinkel ein zweiter Lenkwinkelwert erzeugt. In Abhängigkeit von dem ersten und zweiten Lenkwinkelwert wird dann ein zweites Ausgabesignal erzeugt, welches eine der Gesamtlichtverteilungen kennzeichnet. Durch die Berücksichtigung der zeitlichen Lenkwinkeländerungen kann eine kurvenreiche Fahrbahn erfasst werden. Der Einsatz bestimmter Gesamtlichtverteilungen, wie beispielsweise der Einsatz des maskierten Dauerfernlichts, sind bei kurvigen Fahrbahnen nachteilig. Durch das erfindungsgemäße Verfahren kann somit ferner bei kurvigen Fahrbahnen eine Gesamtlichtverteilung erzeugt werden, die für solche Fahrbahnen geeignet ist. Beispielsweise kann in diesem Fall eine gleitende Leuchtweite erzeugt werden.

Gemäß einer weiteren Ausgestaltung des erfindungsgemäßen Verfahrens wird die dritte Gesamtlichtverteilung erzeugt, wenn das erste oder das zweite Ausgabesignal diese Gesamtlichtverteilung kennzeichnet. Außerdem kann beim Hin- und Herschalten zwischen den beiden Gesamtlichtverteilungen eine Hysterese durchlaufen werden, um ein zu häufiges Umschalten zu vermeiden.

Gemäß dem sechsten Aspekt der Erfindung wird ferner eine Scheinwerferanordnung für ein Fahrzeug bereitgestellt, mit zumindest zwei beabstandeten Scheinwerfern zum Erzeugen von zwei Gesamtlichtverteilungen, einer Steuervorrichtung, mit welcher zwischen den beiden Gesamtlichtverteilungen hin- und herschaltbar ist, und einer Einrichtung zum Erfassen von Verkehrsteilnehmern in Fahrtrichtung vor dem Fahrzeug. Die erfindungsgemäße Scheinwerferanordnung ist dadurch gekennzeichnet, dass die Steuervorrichtung so ausgebildet ist, dass eine der beiden Gesamtlichtverteilungen in Abhängigkeit von der Erfassungsrate anderer Verkehrsteilnehmer auswählbar ist.

Die erfindungsgemäße Scheinwerferanordnung ist insbesondere so ausgebildet, dass sie die Schritte des Verfahrens des sechsten Aspektes der Erfindung vollständig oder teilweise ausführen kann.

Im Folgenden werden mögliche Aus- und Weiterbildungen der Erfindung beschrieben, die mit allen vorgenannten Aspekten der Erfindung kombiniert werden können. Ferner sind die im Folgenden beschriebenen Aus- und Weiterbildungen untereinander beliebig kombinierbar.

Bei einer Ausgestaltung des erfindungsgemäßen Verfahrens erfolgt das Umschalten von einer Gesamtlichtverteilung auf eine andere Gesamtlichtverteilung automatisch, insbesondere in Abhängigkeit von dem Erfassen eines Verkehrsteilnehmers. Des Weiteren ist es auch möglich, dass das Umschalten von einer Gesamtlichtverteilung auf eine andere Gesamtlichtverteilung durch einen Betätigungsvorgang eines Nutzers ausgelöst wird.

Gemäß einer weiteren Ausgestaltung des erfindungsgemäßen Verfahrens ist der Energieverbrauch zumindest einer Gesamtlichtverteilung einstellbar. Insbesondere die zweite Gesamtlichtverteilung lässt sich in einem energiesparenden Modus als sogenannter Fernlichtassistent betreiben, der nur zwischen einem Abblendlicht und einem herkömmlichen Fernlicht auf- bzw. abblendet. In diesem energiesparenden Modus wird durch die verminderte Bewegungshäufigkeit, insbesondere durch eine seltenere Betätigung von Aktuatoren Energie gespart.

Bei dem erfindungsgemäßen Verfahren kann weiterhin erfasst werden, ob eine mehrspurige Strasse befahren wird. Unter einer mehrspurigen Strasse wird hier verstanden, dass mehrere nebeneinander liegende Fahrspuren derselben Fahrrichtung zugeordnet sind. Wenn eine mehrspurige Strasse erfasst worden ist, wird auf einen Leuchtzustand für die benachbarte Fahrbahn geschaltet, bei welcher diese Nachbarfahrbahn mit einer geringeren Leuchtweite ausgeleuchtet wird. Beispielsweise kann auf die dritte Gesamtlichtverteilung für die gleitende Leuchtweite geschaltet werden.

Gemäß einer Ausgestaltung des erfindungsgemäßen Verfahrens wird beim Hin- und Herschalten zwischen zwei Gesamtlichtverteilungen eine Hysterese durchlaufen. Insbesondere bei dem vierten Aspekt des erfindungsgemäßen Verfahrens wird beim Hin- und Herschalten zwischen den beiden Leuchtzuständen für die Leuchtweite in Richtung der Nahbarfahrbahn eine Hysterese durchlaufen. Durch diese Ausgestaltung wird erreicht, dass ein zu häufiges Hinund Herschalten zwischen zwei Gesamtlichtverteilungen vermieden wird. Dies führt zu einer Beruhigung des Lichtbildes.

Andere Verkehrsteilnehmer können bei dem erfindungsgemäßen Verfahren und bei der erfindungsgemäßen Scheinwerferanordnung durch eine Kamera, insbesondere eine CCD-Kamera mit nachgeschalteter Bildverarbeitungssoftware und/oder einen Laser-, Infrarot- und/oder Radarsensor erfasst werden. Mittels dieser Sensoren wird erfasst, ob sich ein anderer Verkehrsteilnehmer in einem Erfassungsbereich befindet. Falls dies der Fall ist, wird außerdem erfasst, bei welcher Position sich der andere Verkehrsteilnehmer relativ zu dem eigenen Fahrzeug befindet. Auf diese Weise lassen sich nicht nur beleuchtete Verkehrsteilnehmer erfassen, sondern auch Verkehrsteilnehmer, die keine eigenen Lichtquellen haben, wie beispielsweise Fußgänger.

Bei allen vorgenannten Aspekten des erfindungsgemäßen Verfahrens kann der Verkehrsteilnehmer, wenn es sich um ein beleuchtetes Fahrzeug handelt, in Fahrtrichtung vor dem Fahrzeug insbesondere dadurch erfasst werden, dass ein Bild eines Verkehrsbereichs im sichtbaren Spektralbereich aufgenommen wird, aus dem Bild zusammenhängende Bereiche mit einer Helligkeit extrahiert werden, die einen Schwellwert überschreitet, die Bereiche zumindest in Abhängigkeit von ihrer Größe klassifiziert werden, für jeden Bereich ein Konfidenzwert, der ein Maß für die Ähnlichkeit des Bereichs des Bildes zu einem Fahrzeuglicht darstellt, aus der Klassifikation des Bereiches und einer physikalischen Größe, die dem Bereich zugeordnet ist, gebildet wird, und schließlich in Abhängigkeit von dem Konfidenzwert bestimmt wird, ob ein Bereich einem Fahrzeuglicht zugeordnet ist.

Das erfindungsgemäße Verfahren berücksichtigt, dass sich helle Bereiche des Bildes, die von weit entfernten Lichtquellen stammen, von hellen Bereichen unterscheiden, die von nahen Lichtquellen stammen. An Hand dieser Unterscheidung werden die hellen Bereiche des Bildes klassifiziert. Da durch die Klassifikation jedoch in vielen Fällen keine eindeutige Zuordnung eines Bereichs zu einem Fahrzeuglicht möglich ist, wird anschließend zumindest für die Bereiche, die nicht eindeutig einem Fahrzeuglicht zugeordnet werden können, ein Konfidenzwert bestimmt. In Abhängigkeit von diesem Konfidenzwert kann sehr zuverlässig ermittelt werden, ob ein Bereich einem Fahrzeuglicht zugeordnet werden kann.

Gemäß einer Ausgestaltung des erfindungsgemäßen Verfahrens wird bei der Klassifikation der Bereiche ein Klassifikationswert aus Eigenschaften des Bereichs gewonnen. Dieser Klassifikationswert wird jedem Bereich zugeordnet und der Konfidenzwert wird aus dem Klassifikationswert des Bereichs und der physikalischen Größe gebildet. Der Klassifikationswert beschreibt wie gut bzw. eindeutig sich der Bereich der jeweiligen Klasse bei der Klassifikation zuordnen lässt. Der Klassifikationswert gibt somit eine Unterscheidung innerhalb einer Klasse wieder.

Für die Klassifikation für jeden Bereich werden insbesondere Eigenschaften bestimmt. Diese Eigenschaften können beispielsweise die Helligkeit des Bereichs, die Form bzw. die Umrandung des Bereichs und/oder die Farbe innerhalb des Bereichs umfassen. Des Weiteren können die Eigenschaften Werte zum Schwerpunkt, zur Ausdehnung und/oder den Hauptachsen des Bereichs sowie zusätzlich oder alternativ zur Intensität monochromer Pixel des Bereichs umfassen. Zur Intensität monochromer Pixel des Bereichs kann die Maximalintensität, ein Mittelwert, die Standardabweichung, die Position des Maximums innerhalb des Bereichs, die Verteilung des Histogramms und/oder der Wert des mittleren Gradienten berücksichtigt werden. Außerdem können diese Werte alternativ oder zusätzlich nur für Pixel einer Farbe bestimmt werden, welche der Farbe eines Rücklichts eines Fahrzeuglichts entspricht, d. h. üblicherweise rot.

Des Weiteren können Eigenschaften.berücksichtigt werden, mit denen mittelbar Farbinformationen gewonnen werden, indem verschiedene Vergleiche zwischen monochromen und roten Pixeln bestimmt werden, z. B. das Verhältnis zwischen dem Mittelwert des monochromen Niveaus und dem Mittelwert des roten Niveaus. Unter "monochrom" wird in diesem Zusammenhang auch der Grauwert bzw. die Helligkeit in diesem Bereich verstanden.

Schließlich ist es bei dem erfindungsgemäßen Verfahren möglich, einen Mittelwert der Eigenschaften unter Berücksichtigung mehrerer aufeinander folgender Bilder zu bilden.

Gemäß einer Ausgestaltung des erfindungsgemäßen Verfahrens werden die Klassifikationswerte der Bereiche mittels eines Lernalgorithmus gewonnen und anschließend werden die Klassifikationswerte diskreten gewichteten Klassifikationswerten zugeordnet. Der Konfidenzwert wird dann aus dem gewichteten Klassifikationswert des Bereichs und der physikalischen Größe gebildet.

Gemäß einer Ausgestaltung des erfindungsgemäßen Verfahrens ist die physikalische Größe, die bei der Bildung des Konfidenzwertes herangezogen wird, der maximale Grauwert innerhalb des Bereichs, insbesondere der maximale Grauwert innerhalb des Bereichs normalisiert über den maximal möglichen Grauwert. Bei einer derartigen Bestimmung des Konfidenzwertes wird berücksichtigt, dass Fahrzeuge, die näher am eigenen Fahrzeug sind, hellere Bereiche auf dem Bild erzeugen als Fahrzeuge, die weiter weg sind. Entsprechend haben Bereiche, die Fahrzeugen zugeordnet werden, die in der Nähe des eigenen Fahrzeugs sind, einen höheren Konfidenzwert als Bereiche, die Fahrzeugen zugeordnet werden, die weiter weg sind. Ferner erhält ein heller Bereich, der von einer Reflexion des Eigenlichts des Fahrzeugs herrührt, einen niedrigen Konfidenzwert, wobei dieser Konfidenzwert sich nochmals verringert, falls die Reflexion von einem Infrastrukturelement herrührt, das sehr weit weg ist.

Gemäß einer weiteren Ausgestaltung des erfindungsgemäßen Verfahrens wird bereits an Hand der Klassifikation bestimmt, ob ein Bereich einem Fahrzeuglicht oder den Lichtern eines Fahrzeugs zugeordnet werden kann. Anschließend wird nur für die Bereiche, denen an Hand der Klassifikation nicht eindeutig ein Fahrzeuglicht zugeordnet werden kann, der Konfidenzwert gebildet.

Gemäß einer weiteren Ausgestaltung des erfindungsgemäßen Verfahrens kann zur Verbesserung der Verlässlichkeit des Verfahrens die Umgebung der Bereiche untersucht werden, wobei bestimmt wird, ob sich in der Nähe eines Bereichs ein weiterer Bereich befindet, so dass die zwei Bereiche zwei Scheinwerfern oder Rücklichtern eines Fahrzeugs zugeordnet werden können. Es wird somit eine Paarbildung von Bereichen durchgeführt. Hieraus können Hinweise auf Doppelbereiche gewonnen werden, die insbesondere Lichtern von Kraftfahrzeugen zugeordnet werden können. An Hand dieser Untersuchung kann der Klassifikationswert eines Bereichs angepasst werden.

Gemäß einer weiteren Ausgestaltung des erfindungsgemäßen Verfahrens kann die zeitliche Entwicklung eines Bereichs an Hand einer Bildsequenz verfolgt werden. Da ein Verfolgen der Bereiche häufig jedoch schwierig ist, kann das erfindungsgemäße Verfahren auch unabhängig von einer solchen Verfolgung der Bereiche durchgeführt werden, indem die zeitliche Kohärenz der Konfidenzwerte bestimmt wird. Ein Konfidenzwert wird in diesem Fall in Abhängigkeit von seiner zeitlichen Kohärenz verändert. Hierfür wird insbesondere ein Akkumulationsfeld gebildet, bei dem für die Bildpunkte des Bildes der Konfidenzwert aufakkumuliert wird. Beispielsweise kann sich bei dem Akkumulationsfeld beim Übergang von einem Bild zu einem folgenden Bild der Konfidenzwert für einen Bildpunkt um einen festen Wert verringern und um den Konfidenzwert des entsprechenden Bildpunkts des folgenden Bildes erhöhen. Außerdem kann sich bei dem Akkumulationsfeld beim Übergang von einem Bild zu einem folgenden Bild der Bereich in Abhängigkeit von der zu erwartenden Bewegung eines dem Bereich zugeordneten Objekts ausbreiten. Schließlich kann an Hand der zeitlichen Entwicklung des Akkumulationsfeldes bestimmt werden, ob ein Bereich einem Fahrzeuglicht zugeordnet wird, wobei die Konfidenzwerte des Akkumulationsfeldes einer zeitlichen Hysterese unterworfen sind.

Vorteilhaft an der erfindungsgemäßen Bestimmung der zeitlichen Kohärenz der Konfidenzwerte ist, dass das schwierig umzusetzende Verfolgen eines Bereichs innerhalb einer Bildsequenz nicht erforderlich ist. Dabei reicht es aus, das Akkumulationsfeld für nur sehr wenige Vollbilder zu berücksichtigen, um verlässlich die Bereiche Fahrzeuglichtern zuzuordnen, so dass die Zuordnung sehr schnell erfolgen kann.

Gemäß einer weiteren Ausgestaltung des erfindungsgemäßen Verfahrens wird der Verkehrsbereich in einem horizontalen Öffnungswinkel von mehr als 40° aufgenommen. Vorteilhaft an der Verwendung eines solchen Öffnungswinkels ist, dass das Bild nicht nur zum Detektieren von Fahrzeugen bei Dunkelheit verwendet werden kann, sondern auch von anderen Fahrzeuganwendungen, insbesondere Fahrerassistenzsystemen, genutzt werden kann. Bei einem derartigen Öffnungswinkel ist es jedoch schwierig, weit entfernte Fahrzeuglichter nachzuweisen. Gemäß einer Weiterbildung des erfindungsgemäßen Verfahrens wird das Bild daher mit einem Sensor aufgenommen, der einen Bereich aufweist, der nur in dem Wellenlängenbereich empfindlich ist, welcher der Rücklichtfarbe eines Fahrzeugs entspricht, d. h. üblicherweise rot, und einen anderen Bereich aufweist, der die Helligkeit des einfallenden Lichts, insbesondere im sichtbaren Spektrum, detektiert. Der Bereich, der die Helligkeit des einfallenden Lichts detektiert, detektiert dabei insbesondere kein Licht aus dem nahen Infrarotbereich.

Der Bereich, der nur in dem Wellenlängenbereich ist, welcher der Rücklichtfarbe eines Fahrzeugs entspricht, nimmt z. B. 25 % ein.

Das Bild wird insbesondere von einer Monochromkamera aufgenommen.

Die Erfindung wird nun an Hand von Ausführungsbeisielen mit Bezug zu den beigefügten Zeichnungen erläutert.

Fig. 1        zeigt schematisch ein Ausführungsbeispiel eines Scheinwerfers der erfindungsgemäßen Scheinwerferanordnung,

Fig. 2        zeigt schematisch ein Ausführungsbeispiel der erfindungsgemäßen Scheinwerferanordnung,

| Fig. 3 | zeigt die Abstrahlcharakteristik der ersten Gesamtlichtverteilung auf einem Messschirm, die von einem Ausführungsbeispiel des erfindungsgemäßen Verfahrens erzeugt wird, |
|---|---|
| Fig. 4 | zeigt die Abstrahlcharakteristik der ersten Gesamtlichtverteilung auf der Strasse, die von dem Ausführungsbeispiel des erfindungsgemäßen Verfahrens erzeugt wird, |
| Fig. 5 | zeigt die Abstrahlcharakteristik der zweiten Gesamtlichtverteilung auf einem Messschirm, die von dem Ausführungsbeispiel des erfindungsgemäßen Verfahrens erzeugt wird, |
| Fig. 6 | zeigt die Abstrahlcharakteristik der zweiten Gesamtlichtverteilung auf der Strasse, die von dem Ausführungsbeispiel des erfindungsgemäßen Verfahrens erzeugt wird, |
| Fig. 7 | zeigt die dritte Gesamtlichtverteilung auf der Strasse, die von dem Ausführungsbeispiel des erfindungsgemäßen Verfahrens erzeugt wird, |
| Fig. 8 | zeigt schematisch den Aufbau der Einrichtung zum Erfassen anderer Verkehrsteilnehmer, |
| Fig. 9 | zeigt die Verfahrensschritte zum Erfassen anderer Verkehrsteilnehmer, welche bei dem Ausführungsbeispiel des erfindungsgemäßen Verfahrens ausgeführt werden, |
| Fig. 10 | zeigt einen Hysterese-Prozess, welcher beim Erfassen anderer Verkehrsteilnehmer durchgeführt wird, |
| Fig. 11 | zeigt weitere mögliche Verfahrensschritte, die beim Erfassen eines anderen Verkehrsteilnehmers bei einem Ausführungsbeispiel eines erfindungsgemäßen Verfahrens durchgeführt werden, |
| Fig. 12 | zeigt eine Lichtverteilung bei einem bekannten Verfahren beim Umschalten von der ersten Gesamtlichtverteilung zu der zweiten Gesamtlichtverteilung, |
| Fig. 13 | zeigt die Lichtverteilung beim Schwenken von der ersten Gesamtlichtverteilung zu der zweiten Gesamtlichtverteilung gemäß dem Ausführungsbeispiel des erfindungsgemäßen Verfahrens, |
| Fig. 14 | zeigt ein Beispiel der zweiten Gesamtlichtverteilung, |
| Fig. 15 | zeigt die Veränderung der Leuchtweite im Mittelbereich der zweiten Gesamtlichtverteilung gemäß dem Ausführungsbeispiel des erfindungsgemäßen Verfahrens, |
| die Fig. 16 und 17 | zeigen die Veränderung der zweiten Gesamtlichtverteilung im linken Seitenbereich bei einem entgegenkommenden Fahrzeug gemäß dem Ausführungsbeispiel des erfindungsgemäßen Verfahrens, |
| die Fig.18 und 19 | zeigen die Veränderung des rechten Seitenbereichs der zweiten Gesamtlichtverteilung bei einem Überholvorgang gemäß dem Ausführungsbeispiel des erfindungsgemäßen Verfahrens und |
| Fig. 20 | zeigt ein Diagramm, aus dem sich die Leuchtweite in einem Seitenbereich bei der zweiten Gesamtlichtverteilung in Abhängigkeit von dem horizontalen Winkel zu einem erfassten Verkehrsteilnehmer gemäß dem Ausführungsbeispiel des erfindungsgemäßen Verfahrens ergibt. |
| Fig. 21 | zeigt ein Diagramm zum Veranschaulichen der Überblendzeit beim Umschalten von der ersten Gesamtlichtverteilung zu der zweiten Gesamtlichtverteilung gemäß dem Ausführungsbeispiel des erfindungsgemäßen Verfahrens, |
| Fig. 22 | zeigt ein Flussdiagramm zur Berechnung einer Verzögerungszeit, |
| Fig. 23 | zeigt ein Flussdiagramm zum Erzeugen eines Umschaltvorgangs zwischen der zweiten und der dritten Gesamtlichtverteilung gemäß dem Ausführungsbeispiel des erfindungsgemäßen Verfahrens, |

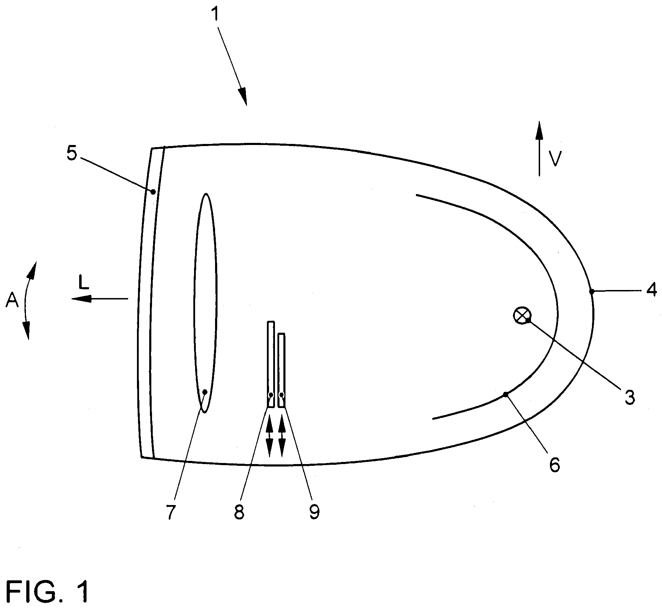

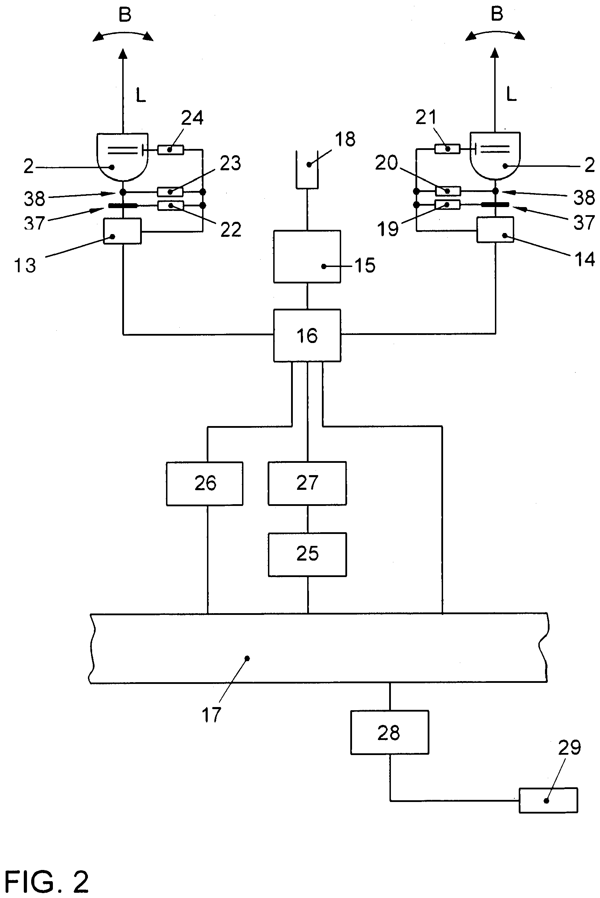

Die Scheinwerferanordnung, die allgemein in Figur 2 gezeigt ist, umfasst zwei beabstandete Projektionsscheinwerfer 1 und 2, die vorne auf der rechten und linken Seite des Fahrzeugs auf an sich bekannte Weise angeordnet sind. Einer dieser Projektionsscheinwerfer 1, 2 ist in Fig. 1 gezeigt. Der auf der anderen Seite angeordnete Projektionsscheinwerfer 2 ist im wesentlichen identisch aufgebaut.

In Fig. 1 ist ein Schnitt des Projektionsscheinwerfers 1 in einer Ebene dargestellt, die parallel zu der von der Fahrzeuglängsachse und der Vertikalen V aufgespannten Ebene ist. Der Projektionsscheinwerfer 1 umfasst auf an sich bekannte Art und Weise eine Lichtquelle 3, die von einem als Rotationsellipsoid ausgebildeten Reflektor 6 umgeben ist. Der Reflektor 6 weist somit zwei Brennpunkte auf. Die Lichtquelle 3 befindet sich in einem der Brennpunkte des Reflektors 6. Das von der Lichtquelle 3 emittierte Licht wird von dem Reflektor 6 in Lichtemissionsrichtung L des Projektionsscheinwerfers 1 in Richtung einer Projektionslinse 7 reflektiert. Eine Blendenanordnung mit den flächigen Blenden 8 und 9 ist an dem Brennpunkt der Projektionslinse 7 und nahe dem zweiten Brennpunkt des Reflektors 6 angeordnet. Die Normalen der flächigen Blenden 8 und 9 sind im wesentlichen parallel zur Lichtemissionsrichtung L ausgerichtet. Die Lichtquelle 3, der Reflektor 6, die Linse 7 und die Blenden 8, 9 sind innerhalb eines Gehäuses 4 angeordnet, das von einer Lichtscheibe 5 abgeschlossen ist. Die Form der Hell-Dunkel-Grenze der Gesamtlichtverteilung des Projektionsscheinwerfers 1 lässt sich dadurch verändern, dass die Blenden 8 und 9 in vertikaler und/oder horizontaler Richtung bewegt werden.

Die Art und Weise, wie verschiedene Gesamtlichtverteilungen durch die Bewegung der Blenden 8 und 9 erzeugt werden können, ist beispielsweise in der DE 10 2007 045 150 A1 beschrieben, deren diesbezüglicher Inhalt durch Bezugnahme in die vorliegende Anmeldung aufgenommen wird.

Mit Bezug zur Figur 2 wird im Folgenden ein Ausführungsbeispiel der Scheinwerferanordnung beschrieben, welche auf der rechten und linken Seite jeweils einen Scheinwerfer 1, 2 umfasst, wie er in Figur 1 gezeigt ist.

Der rechte Scheinwerfer 1 der Scheinwerferanordnung ist mit einem Steuergerät 13 verbunden, der linke Scheinwerfer 2 mit einem Steuergerät 14. Mittels der Steuergeräte 13 und 14 werden die Teillichtverteilungen der Scheinwerfer 1 und 2 gesteuert, welche überlagert eine Gesamtlichtverteilung ergeben.

Die Steuergeräte 13 und 14 steuern eine Leuchtweitenregulierung für die Scheinwerfer 1 und 2, bei welcher die Scheinwerfer 1 und 2 um eine horizontale Achse 37 mittels des Aktuators 19 bzw. 22 schwenkbar sind. Die Lichtemissionsrichtung L der Scheinwerfer kann auf diese Weise in Richtung des Pfeils A (Figur 1) geschwenkt werden. Ferner steuern die Steuergeräte 13 und 14 die Aktuatoren 20 bzw. 23, mit denen die Scheinwerfer 1 und 2 um eine vertikale Achse 38 schwenkbar sind. Mittels der Aktuatoren 20 und 23 kann die Lichtemissionsrichtung L des Scheinwerfers 1 bzw. des Scheinwerfers 2 in Richtung des Pfeils B geschwenkt werden. Die Aktuatoren 20 und 23 sind beispielsweise Teil eines bereits vorhandenen Kurvenlichts. Schließlich steuern die Steuergeräte 13 und 14 die vertikale und/oder horizontale Lage der Blenden 8 und 9 der Blendenanordnungen für den rechten und linken Scheinwerfer 1, 2, mittels der Aktuatoren 21 und 24.

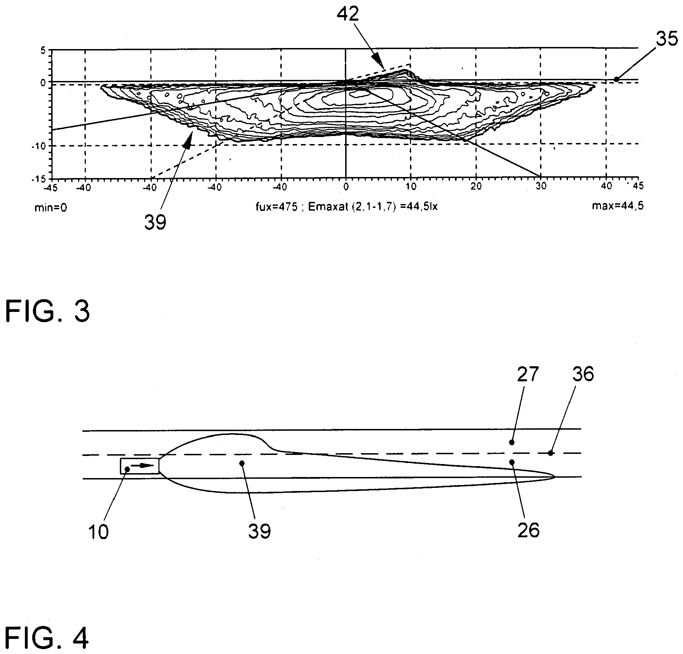

Im Folgenden werden mit Bezug zu den Figuren 3 - 7 verschiedene Gesamtlichtverteilungen beschrieben, welche von den Scheinwerfern 1 und 2 der erfindungsgemäßen Scheinwerferanordnung erzeugt werden können:

Die erste von der Scheinwerferanordnung erzeugte Gesamtlichtverteilung 39 ist in Figur 3 als Isolux-Diagramm auf einem Messschirm und in Figur 4 anhand einer Hell-Dunkel-Grenze auf einer Strasse gezeigt. Die Gesamtlichtverteilung 39 ist asymmetrisch hinsichtlich einer Mittelachse 36, die bei einer geraden Fahrbahn die Fahrbahn 26 des Fahrzeugs 10, welche die Scheinwerferanordnung umfasst, von der Gegenfahrbahn 27 abgrenzt. Die Leuchtweite im Bereich der Gegenfahrbahn 27 ist sehr viel geringer als die Leuchtweite im Bereich der Fahrbahn 26 und bei Rechtsverkehr auch geringer als auf der rechten Seite neben der Fahrbahn 26. Diese Asymmetrie ist auch bei der in Figur 3 gezeigten Lichtverteilung auf dem Messschirm erkennbar. Auf der rechten Seite der ersten Gesamtlichtverteilung 39 ergibt sich ein Anstieg 42, der einen Winkel von 15° mit der Horizontalen 35 einschließt. Der Verlauf der Hell-Dunkel-Grenze bzw. der Lichtverteilung auf dem Messschirm entspricht bei dem vorliegenden Ausführungsbeispiel den Vorgaben der derzeitigen europäischen Norm ECE-R 112 für ein Abblendlicht eines Scheinwerfers.

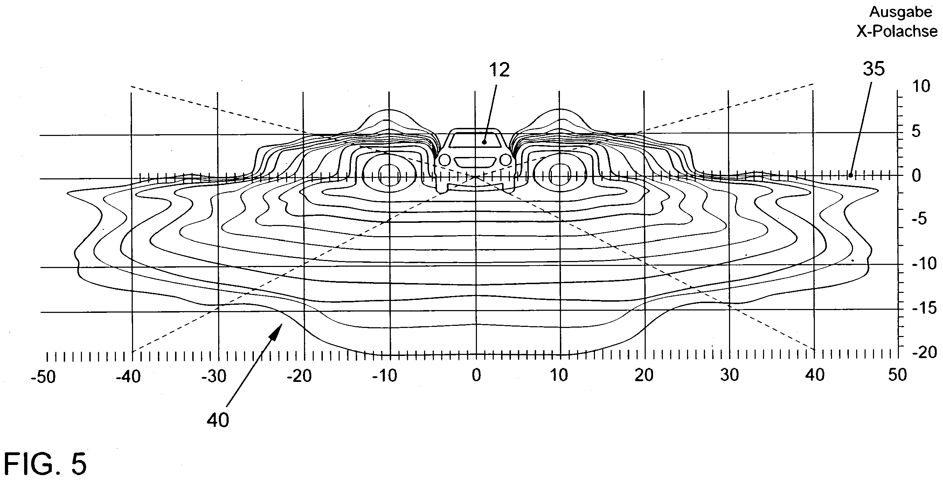

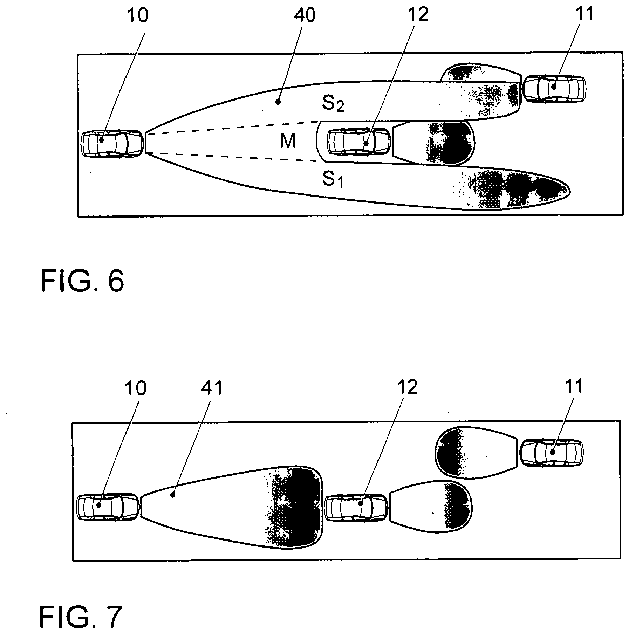

Die zweite von der erfindungsgemäßen Scheinwerferanordnung bzw. dem erfindungsgemäßen Verfahren erzeugte Gesamtlichtverteilung 40 ist als Isolux-Diagramm auf einem Messschirm in Figur 5 gezeigt und als Hell-Dunkel-Grenze auf der Strasse in Figur 6 gezeigt. Bei der zweiten Gesamtlichtverteilung 40 handelt es sich um ein maskiertes Dauerfernlicht. Diese Gesamtlichtverteilung 40 zeichnet sich dadurch aus, dass sie in Richtung eines erfassten Verkehrsteilnehmers 12, d.h. im Bereich M der Gesamtlichtverteilung 40, eine Leuchtweite aufweist, die so geregelt wird, dass sie zumindest geringer als der Abstand zu dem erfassten Verkehrsteilnehmer 12 ist und insbesondere bis zu dem anderen Verkehrsteilnehmer 12 reicht. Handelt es sich bei dem anderen Verkehrsteilnehmer 12 um ein vorausfahrendes Fahrzeug, kann die Leuchtweite im Bereich M der Gesamtlichtverteilung 40 beispielsweise bis zur hinteren Stoßstange des vorausfahrenden Fahrzeugs 12 reichen.

Auf zumindest einer Seite neben dem Mittelbereich M in Richtung des erfassten Verkehrsteilnehmers 12 ist ein Seitenbereich $S_1$ gebildet, bei dem die Leuchtweite größer ist als die Leuchtweite im Bereich M der Gesamtlichtverteilung 40. Neben dem Verkehrsteilnehmer 12 wird somit vorbeigeleuchtet, um dem Fahrer des Fahrzeugs 10 eine bessere Ausleuchtung des Verkehrsbereichs vor dem Fahrzeug 10 bereitzustellen. Die Leuchtweite im Seitenbereich $S_1$ kann beispielsweise der Leuchtweite bei einer herkömmlichen Fernlichtfunktion entsprechen. Bevorzugt wird auch auf der anderen Seite bei der zweiten Gesamtlichtverteilung 40 ein Seitenbereich $S_2$ gebildet, welcher auch eine größere Leuchtweite besitzt als die Leuchtweite in dem Mittelbereich M. Auch die Leuchtweite des Seitenbereichs $S_2$ kann der Leuchtweite einer herkömmlichen Fernlichtfunktion entsprechen, so dass die Gesamtlichtverteilung 40 einem herkömmlichen Fernlicht entsprechen kann, bei dem in der Lichtverteilung ein Bereich beim erfassten Verkehrsteilnehmer 12 und in Fahrtrichtung vor dem Verkehrsteilnehmer 12 ausgeschnitten ist. Auf diese Weise kann dem Fahrer des Fahrzeugs 10 eine optimale Ausleuchtung des Verkehrsraums bereitgestellt werden, ohne den anderen Verkehrsteilnehmer 12 zu blenden. Wird im Bereich der Ausleuchtung der Scheinwerferanordnung ein noch weiterer Verkehrsteilnehmer, wie beispielsweise ein entgegenkommendes Fahrzeug 11 erfasst, kann die Leuchtweite ferner auch in Richtung dieses Verkehrsteilnehmers 11 so geregelt werden, dass sie nur bis zu diesem Verkehrsteilnehmer 11 reicht.

In dem in Figur 6 gezeigten Fall wird die Leuchtweite im Seitenbereich $S_2$ der zweiten Gesamtlichtverteilung 40 kontinuierlich an den Abstand des eigenen Fahrzeugs 10 zu dem entgegenkommenden Fahrzeug 11 angepasst. Des Weiteren ist es gemäß einer anderen Ausgestaltung möglich, dass die Breite des Mittelbereichs M so gewählt wird, dass sich in dem Korridor zwischen den Seitenbereichen $S_1$ und $S_2$ alle erfassten Verkehrsteilnehmer befinden, d.h. zum Beispiel die in Figur 6 gezeigten Fahrzeuge 11 und 12. Auch in diesem Fall kann jedoch die Leuchtweite für den zweiten Seitenbereich $S_2$ in Abhängigkeit insbesondere von der Position eines entgegenkommenden Fahrzeugs 11 geregelt werden, wie es später erläutert wird.

Wie es später im Detail beschrieben wird, werden für die Regelung der Leuchtweite im Mittelbereich M und gegebenenfalls in den Seitenbereichen $S_1$ und $S_2$ dem Steuergerät 16 von einer Bildverarbeitungsvorrichtung 15 kontinuierlich Daten zu anderen Verkehrsteilnehmern in Fahrtrichtung vor dem Fahrzeug 10 übertragen. In Abhängigkeit von der Position anderer erfasster Verkehrsteilnehmer 12 bzw. 11 überträgt das Steuergerät 16 Steuersignale an die Steuergeräte 13 und 14 für die Scheinwerfer 1 und 2. Die Steuergeräte 13 und 14 steuern daraufhin die Aktuatoren 19 bis 21 für den rechten Scheinwerfer 1 und die Aktuatoren 22 bis 24 für den linken Scheinwerfer 2 so an, dass die gewünschte zweite Gesamtlichtverteilung 40 erzeugt wird. Dabei wird die vertikale Hell-Dunkel-Grenze zum einen durch ein Verschwenken der Scheinwerfer 1 und 2 um die vertikalen Achsen 38 und zum anderen durch Betätigung der Blenden 8 und 9 mittels der Aktuatoren 21 und 24 erzeugt. Die horizontale Hell-Dunkel-Grenze im Mittelbereich M, d.h. die Leuchtweite im Mittelbereich M, wird hingegen nicht von einer Verlagerung der Blenden 8 und 9 erzeugt, sondern bevorzugt ausschließlich durch die Leuchtweitenregulierung, d.h. durch ein Verschwenken der Scheinwerfer 1 und 2 um die horizontale Achse 37 mittels der Aktuatoren 19 und 22.

Die in Bezug auf die Hell-Dunkel-Grenze verwendeten Begriffe horizontal und vertikal beziehen sich auf die Lichtverteilung auf einem senkrecht zur Lichtabstrahlrichtung L angeordneten Messschirm. Eine horizontale Hell-Dunkel-Grenze ist in diesem Fall parallel zu der Horizontalachse 35, die bei einem 10 Meter entfernten Schirm 10 Zentimeter unterhalb der Anbauhöhe der Scheinwerfer 1 und 2 angeordnet ist. Eine vertikale Hell-Dunkel-Grenze verläuft senkrecht zu der Horizontalachse 35.

In Figur 7 ist eine dritte von der erfindungsgemäßen Scheinwerferanordnung und dem erfindungsgemäßen Verfahren erzeugte Gesamtlichtverteilung 41 als Hell-Dunkel-Grenze auf einer Strasse dargestellt. Diese dritte Gesamtlichtverteilung 41 wird auch als gleitende Leuchtweite bezeichnet. Sie zeichnet sich dadurch aus, dass die maximale Leuchtweite der Lichtverteilung 41 so geregelt wird, dass sie bis zu einem erfassten Verkehrsteilnehmer 12 in Fahrtrichtung vor dem Fahrzeug 10 reicht. Bei dieser dritten Gesamtlichtverteilung 41 wird somit eine optimale Ausleuchtung bis zu dem anderen erfassten Verkehrsteilnehmer 12 garantiert, ohne diesen Verkehrsteilnehmer 12 zu blenden. Die Seitenbereiche $S_1$ und $S_2$ des maskierten Dauerfernlichts werden jedoch nicht bereitgestellt. Die dritte Gesamtlichtverteilung 41 ist im Wesentlichen symmetrisch zu einer zwischen den Scheinwerfern 1 und 2 verlaufenden vertikalen Ebene in Richtung der Lichtemissionsrichtung L. Die maximale Leuchtweite wird bei der dritten Gesamtlichtverteilung 41 im Wesentlichen über den gesamten Öffnungswinkel erzeugt, wie es in Figur 7 dargestellt ist. Der Öffnungswinkel wird jedoch so gewählt, dass entgegenkommende Fahrzeuge 11 auf der Gegenfahrbahn nicht geblendet werden, wenn sie das Fahrzeug 10 mit der dritten Gesamtlichtverteilung 41 passieren. Die Regelung der maximalen Leuchtweite der dritten Gesamtlichtverteilung 41 erfolgt mittels der Blenden 8 und 9, d. h. anders als die Regelung der Leuchtweite im Mittelbereich M der zweiten Gesamtlichtverteilung 40.

Des Weiteren ist eine Einrichtung zum Erfassen eines Verkehrsteilnehmers in Fahrtrichtung des Fahrzeugs, d.h. üblicherweise in Richtung der Lichtemission L der Scheinwerfer 1, 2 vorgesehen. Bei dieser Erfassungseinrichtung kann es sich - wie in Figur 2 gezeigt - um eine Kamera 18 mit angeschlossener Bildverarbeitungseinheit 15 handeln, welche die Lichter vorausfahrender und entgegenkommender Fahrzeuge 11, 12 erfasst. Mittels der Bildverarbeitungseinrichtung 15 kann die Richtung dieser Lichter sowohl in einer horizontalen als auch in einer vertikalen Richtung erfasst werden. Die Bildverarbeitungseinheit 15 analysiert die von der nach vorne gerichteten Kamera aufgenommene Szene. In dieser Szene wird die Lage der Lichter von vorausfahrenden und entgegenkommenden Fahrzeugen 11, 12 detektiert. Anhand des horizontalen Abstands zweier Scheinwerfer bzw. Rücklichter eines anderen Fahrzeugs 11, 12 kann die Bildverarbeitung zusätzlich auf die Breite des Fahrzeugs schließen. Des Weiteren können Lichtquellen anderer Verkehrsteilnehmer erfasst werden. Schließlich können Lichtquellen erkannt werden, welche auf eine Straßenbeleuchtung bzw. eine Ortschaft schließen lassen. Eine Straßenbeleuchtung lässt sich in der Regel von Fahrzeuglichtern über die Position im Kamerabild oder über die mit dem Netz frequenzmodulierte Intensität unterscheiden. Der Öffnungswinkel der Kamera entspricht vorzugsweise dem Öffnungswinkel der Scheinwerferanordnung.

Gemäß einer anderen Ausgestaltung des Systems ist die Erfassungseinrichtung 15 als Laser- oder Radarsensor ausgebildet, mit welchem die Entfernung von Objekten in Richtung der Lichtemissionsrichtung L gemessen werden kann. Hierbei können insbesondere auch unbeleuchtete oder unzureichend beleuchtete Verkehrsteilnehmer, wie beispielsweise Fußgänger und ggf. auch Radfahrer erfasst werden. Außerdem können über die Entfernungsmessung gezielt Verkehrsteilnehmer erfasst werden, die sich innerhalb der Blendungsgrenzen einer Lichtverteilung befinden. Schließlich kann über die Messung von Entfernung, Geschwindigkeit und Bewegungsrichtung der Verkehrsteilnehmer eine gute Klassifikation von Fahrzeugen bzw. Verkehrsteilnehmern erfolgen, wodurch Fehlsteuerungen der Scheinwerferanordnung vermieden werden. Aus dem Abstand des Objekts lässt sich der vertikale Winkel, d.h. der Abstand von dem eigenen Fahrzeug, berechnen, der als Steuergröße für die Scheinwerferanordnung verwendet werden kann.

Mit der Entfernungsmessung durch den Laser- oder Radarsensor ist es außerdem möglich, ein fahrendes Fahrzeug mittels der Geschwindigkeitserfassung von stehenden Objekten zu unterscheiden. Darüber hinaus kann mit einem scannenden Laserentfernungsmesser die Breite der erfassten Objekte vermessen werden, so dass mit höherer Sicherheit die Art von Objekten, d.h. ob es sich um einen Verkehrsteilnehmer, ein Kraftfahrzeug oder Radfahrer oder um einen Leitposten handelt, rückgeschlossen werden.

Der Laser- oder Radarsensor kann auch mit einer Kamera kombiniert werden, um die Erkennungssicherheit insbesondere hinsichtlich der Erfassung der Vertikalposition des Verkehrsteilnehmers zu erhöhen. Da Kameras, Laser- oder Radarsensoren in zunehmendem Maße Verwendung in Fahrzeugen mit Fahrassistenzsystemen finden, kann diese Sensorik für die Steuerung der Scheinwerferanordnung mitverwendet werden, ohne dass zusätzliche Kosten entstehen.

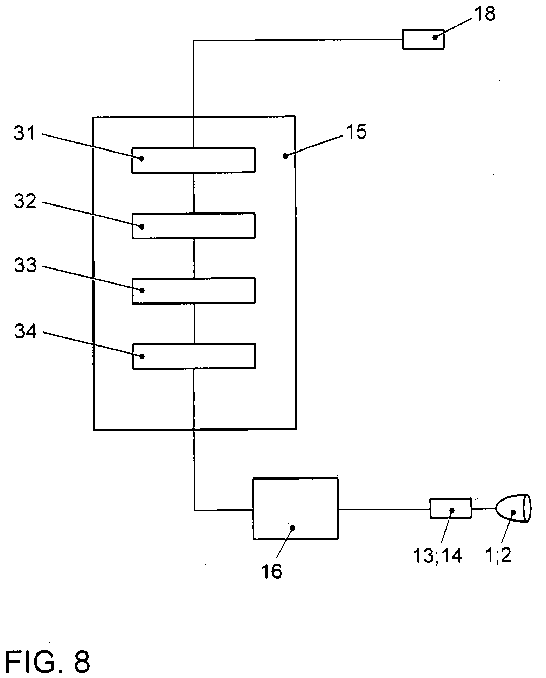

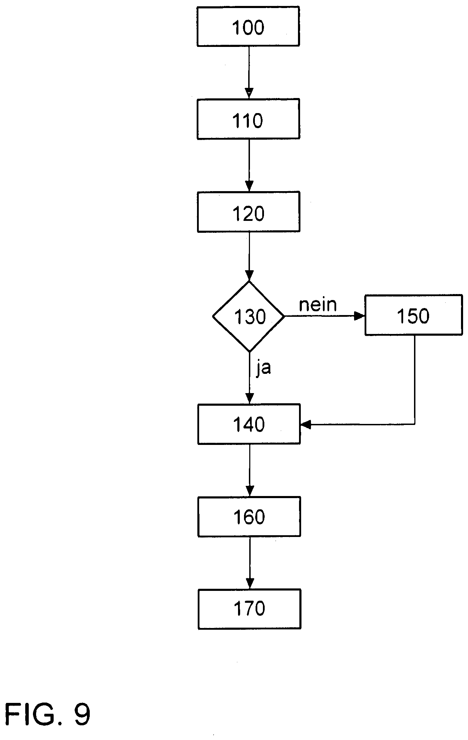

Im Folgenden wird mit Bezug zu den Figuren 8 bis 11 im Detail eine weitere mögliche Ausgestaltung der Vorrichtung zum Erfassen eines Verkehrsteilnehmers gemäß einem Ausführungsbeispiel der Erfindung beschrieben: Die Erfassungsvorrichtung umfasst in diesem Fall einen Sensor, der ein Bild eines Verkehrsbereichs im sichtbaren Spektralbereich aufnimmt. Der Sensor kann beispielsweise hinter der Windschutzscheibe in Fahrtrichtung auf die Straße vor dem Fahrzeug ausgerichtet sein. Bei dem Sensor handelt sich um ein monokulares Bildaufnahmesystem, mit welchem in Echtzeit Lichtquellen erfasst werden können, die sich über 600 m entfernt vor dem eigenen Fahrzeug befinden. Es können insbesondere über 600 m entfernte Scheinwerfer eines anderen Fahrzeugs und über 400 m entfernte Rücklichter eines anderen Fahrzeugs detektiert werden.

Der Sensor kann in die Kamera 18 integriert sein. Er kann nicht nur für eine Bildaufnahme verwendet werden, die nach einer Bildverarbeitung für die Steuerung der Scheinwerfer 1, 2 des Fahrzeugs verwendet wird. Vielmehr kann die Bildaufnahme des Sensors auch für andere Fahrerassistenzsysteme wie einen Fahrspurassistenten und eine Verkehrszeichenerkennung benutzt werden. Diese Mehrfachverwendung des Sensors senkt die Kosten bei der Herstellung des Fahrzeugs.

Fahrzeuge werden üblicherweise bei Dunkelheit an Hand der Lichtemission ihrer Scheinwerfer bzw. der Lichtemission ihrer Rücklichter detektiert. Dabei hat sich herausgestellt, dass eine einfache Schwellwertbildung hinsichtlich der in dem aufgenommenen Bild auftretenden Lichtintensität nicht zu einer verlässlichen Fahrzeugdetektion führt. Das von dem Fahrzeug selbst emittierte Licht, welches an verschiedenen Objekten, die sich im Verkehrsbereich vor dem Fahrzeug befinden, zurück zu dem Fahrzeug reflektiert wird, führt dazu, dass für mittlere und große Entfernungen schwer zwischen solchen Eigenlichtreflexionen und anderen Fahrzeugen unterschieden werden kann. Aus diesem Grund ist es erforderlich, sowohl den Sensor als auch die anschließende Bildverarbeitung des von dem Sensor aufgenommenen Bildes an diese Problematik anzupassen.

Um zunächst wirksam zwischen einem Scheinwerfer und einem Rücklicht unterscheiden zu können, weist der Sensor einen Bereich auf, der nur in dem Wellenlängenbereich empfindlich ist, welcher der Rücklichtfarbe eines Fahrzeugs entspricht, d. h. dieser Sensorbereich ist nur für rotes Licht empfindlich. Da jedoch Farbsensoren im Vergleich zu monochromen Sensoren, d. h. Sensoren, welche die Helligkeit bzw. den Grauwert messen, umfasst der Sensor ferner einen Bereich, welcher die Helligkeit im sichtbaren Spektralbereich detektiert. Bei dem Sensor nimmt der Sensorbereich für die Helligkeit 75 % der Bildpunkte ein und der Bereich für rotes Licht 25 % der Bildpunkte. Mit einem solchen Sensor lassen sich Bilder aufnehmen, die auch für andere Anwendungen verwendet werden können.

Der horizontale Öffnungswinkel des Sensors ist z.B. größer als 40°. Bei einem solchen Öffnungswinkel ist es schwierig, weit entfernte Rücklichter zu detektieren. Beispielsweise wird ein Rücklicht mit einer Größe von 10 cm x 10 cm bei einem Abstand von mehr als 100 m auf weniger als einem Bildpunkt des Sensors abgebildet. Allerdings bildet das von dem Rücklicht emittierte Licht einen größeren Kegel, so dass ein Rücklicht in etwa 400 m Entfernung noch auf einen Bereich von etwa 4 bis 10 Bildpunkten trifft. Um jedoch Farbinformationen aus dem von dem Sensor gewonnenen Bild zu gewinnen, wird die vorgestellte Filteranordnung mit einem Rot- und drei Pixeln ohne Farbfilter bzw. eine so genannte Bayer-Matrix verwendet. Der Sensor enthält 2 x 2 Blöcke mit einem einzelnen, im roten Spektralbereich empfindlichen Sektor und drei herkömmlichen monochromen Detektoren, die eine höhere Empfindlichkeit als farbempfindliche Detektoren haben, die jedoch auch Licht im roten Spektralbereich erfassen. Mit einem solchen Sensor ist es möglich, rote Lichtquellen von weißen Lichtquellen zu unterscheiden, gleichzeitig jedoch eine hohe Empfindlichkeit für die Bildpunkte ohne Farbfilter bereitzustellen. Es wird bemerkt, dass der Sensor unempfindlich im nahen Infrarotbereich ist und mit 10 Bits pro Bildpunkt unter Verwendung einer logarithmischen Kurve arbeitet, die im Wesentlichen vollständig gesättigte Lichtpunkte verhindert, bei denen Information verloren geht.

Der Sensor ist mit einer Bildverarbeitungsvorrichtung 15 verbunden. Die Bildverarbeitungsvorrichtung 15 analysiert das von dem Sensor aufgenommene Bild so, dass helle Bildbereiche des aufgenommenen Bildes Fahrzeugen im Verkehrsbereich des eigenen Fahrzeugs zugeordnet werden können. Bei der Bildverarbeitung wird berücksichtigt, dass helle, von dem Sensor aufgenommene Bereiche sich für Fahrzeuge in der Nähe des eigenen Fahrzeugs wesentlich von solchen Bereichen für weit entfernte Fahrzeuge unterscheiden. Entsprechende Unterschiede ergeben sich ferner für helle Bereiche, die von Scheinwerfern und solchen, die von Rücklichtern herrühren. Die Intensität von hellen Bereichen, die von Scheinwerfern herrühren, ist höher und weiß, wohingegen helle Bereiche, die von Rücklichtern herrühren, von geringerer Intensität und röter sind. Ferner wird bei der Bildverarbeitung berücksichtigt, dass die Vorrichtung für Fahrzeuge, die näher an dem eigenen Fahrzeug sind, schneller reagieren muss als für Fahrzeuge, die weiter von dem eigenen Fahrzeug entfernt sind.

Im Folgenden werden die einzelnen Einheiten der Bildverarbeitungsvorrichtung 15 und die bei einer ersten Ausgestaltung des Verfahrens durchgeführten Schritte zum Erfassen eines anderen Verkehrsteilnehmers mit Bezug zu den Figuren 8 bis 10 erläutert:

Zunächst wird im Schritt 100 wie vorstehend beschrieben mittels des Sensors ein Bild des Verkehrsbereichs im sichtbaren Spektrum vor dem eigenen Fahrzeug 10 aufgenommen.

Im Schritt 110 wird mittels der Extraktionseinheit 31 ermittelt, welche zusammenhängenden Bereiche des Bildes eine Helligkeit aufweisen, die einen bestimmten Schwellwert überschreiten. Diese Bildbereiche werden extrahiert. Für sie muss im Folgenden bestimmt werden, ob sie einem anderen Fahrzeug oder einem anderen Objekt, welches kein Fahrzeug ist, zugeordnet werden. Da die Extraktion auf einer einfachen Schwellwertbildung beruht, kann sie von der Bildverarbeitungsvorrichtung 15 sehr schnell, d. h. bevorzugt in Echtzeit, durchgeführt werden. Die zusammenhängenden Bereiche des Bildes, welche hinsichtlich ihrer Helligkeit den Schwellwert überschreiten, werden auch als Blobs bezeichnet.

Für jeden Bereich werden dann die folgenden Schritte 120 bis 140 durchgeführt:

Im Schritt 120 werden die Bereiche von einem Klassifikator 32 klassifiziert. Ferner wird ihnen ein Klassifikationswert zugeordnet. Hierfür werden zunächst verschiedene Eigenschaften des Bereichs bestimmt. Von den Eigenschaften ist der maximale Grauwert des Bereichs und der Rotanteil des Bereichs besonders wichtig. Bei dem Verfahren werden ferner insbesondere folgende weitere potenziell nützlichen Eigenschaften des Bereichs bestimmt und bei der Klassifikation verwendet: (1) die Binärwerte des Bereichs, insbesondere die Fläche, der Schwerpunkt, die Ausdehnung, die Umrandung und/oder die Hauptachsen; (2) die Intensität bzw. der Grauwert, der nur von monochromen Bildpunkten herrührt, insbesondere das Maximum, der Mittelwert, die Standardabweichung, die Position des Maximums innerhalb des Bereichs, die Verteilung des Histogramms und/oder die Größe des mittleren Gradienten; (3) dieselben Eigenschaften nur für rote Bildpunkte und (4) Eigenschaften, aus denen man Farbinformationen durch verschiedene Vergleiche zwischen monochromen und roten Bildpunkten gewinnen kann, z. B. das Verhältnis zwischen dem Mittelwert des monochromen Levels und dem Mittelwert des roten Levels.

Da es normalerweise nicht möglich ist, an Hand einer einzelnen Eigenschaft oder der vorstehend beschriebenen Eigenschaften sicher auf ein Fahrzeug als Lichtquelle zu schließen, werden die Eigenschaften der Bereiche einem Lernalgorithmus unterzogen. Mittels des Lernalgorithmus' erlangt man schließlich eine Klassifikation mit Klassifikationswerten für die Bereiche und schließlich mit diskreten gewichteten Klassifikationswerten für die Bereiche. Als Lernalgorithmus wird der Real-AdaBoost-Algorithmus verwendet, wie er in R. Schapire und Y. Singer, "Improved boosting using confidence-rated predictions" in Machine Learning, Bd. 37, Nr. 3, Seiten 297-336, 1999, beschrieben ist. Durch diesen Lernalgorithmus werden offensichtliche Unterschiede in den Eigenschaften von Fahrzeuglichtern berücksichtigt, um die verschiedenen Bereiche von vornherein zu unterteilen: Kleine und nicht kleine Bereiche sehen verschieden aus, ferner unterscheiden sich Bereiche, die von Scheinwerfern herrühren, von denen, die von Rücklichtern herrühren. Entsprechend diesem Ansatz wurden die Bereiche in vier Basisklassen eingeteilt:

- $C_{h,s}$: für die Detektion von entgegenkommenden Fahrzeugen 11, die sich in mittlerer bis großer Entfernung von dem eigenen Fahrzeug befinden;
- $C_{h,ns}$: für die Detektion entgegenkommender Fahrzeuge 11, die sich in Entfernungen in der Nähe des eigenen Fahrzeugs bis zu einer mittleren Entfernung befinden;
- $C_{t,s}$: für die Detektion vorausfahrender Fahrzeuge 12 in mittlerer bis großer Entfernung;
- $C_{t,ns}$: für die Detektion vorausfahrender Fahrzeuge 12, die sich in der Nähe des eigenen Fahrzeugs bis zu einer mittleren Entfernung befinden.

Gemäß dem Grundsatz, dass es besser ist, eine falsche Zuordnung zu einem Fahrzeug zu erzeugen als eine richtige Zuordnung zu verpassen, wird nach der Einteilung der Bereiche in die Klassen der Maximalwert der vier Ausgangssignale des Lernalgorithmus' genommen.

Im Schritt 130 kann bereits an Hand dieser Basisklassifizierung eine erste Entscheidung getroffen werden, ob ein Bereich einem Fahrzeug zugeordnet werden soll oder nicht. Falls eine solche grobe Zuordnung möglich ist, fährt das Verfahren mit dem Schritt 140 fort. Falls eine solche grobe Zuordnung nicht möglich ist, fährt das Verfahren mit dem Schritt 150 fort, der später erläutert wird.

Selbst wenn die grobe Zuordnung zu einem Fahrzeug im Schritt 130 möglich ist, hat sich herausgestellt, dass diese grobe Zuordnung nicht zu einer hundertprozentigen Erkennung von Fahrzeugen führt. Außerdem kann nicht ausgeschlossen werden, dass eine Eigenlichtreflexion oder die Lichtemission eines anderen Objekts für ein Fahrzeuglicht gehalten wird.

Bei dem erfindungsgemäßen Verfahren wird daher im Schritt 140 mittels einer Konfidenzeinheit 33 für jeden Bereich ein Konfidenzwert ermittelt, der ein Maß für die Ähnlichkeit des Bereichs des Bildes zu einem Fahrzeuglicht darstellt. Dieser Konfidenzwert kann aus einem zuvor bestimmten Klassifikationswert des Bereichs und einer physikalischen Größe, die dem Bereich zugeordnet ist, berechnet werden. Bevorzugt werden jedoch mittels des Lernalgorithmus' aus den Klassifikationswerten diskrete, gewichtete Klassifikationswerte für die Bereiche gewonnen.

Der Klassifikationswert ergibt sich aus dem vorstehend beschriebenen Real-AdaBoost-Algorithmus unter Verwendung von Beispielen von Bereichen, die von Fahrzeuglichtquellen herrühren, und entsprechenden Gegenbeispielen. Es ergibt sich ein Klassifikationswert c, wobei positive Klassifikationswerte anzeigen, dass ein Bereich einem Fahrzeuglicht ähnlich ist, und negative Klassifikationswerte, die auf das Gegenteil hinweisen. Die Klassifikationswerte c werden nun in entsprechende gewichtete Klassifikationswerte diskretisiert, wobei die Gewichtungen wie folgt zugeordnet werden:

$$\omega = \begin{cases} \omega_+ & \text{wenn} & c \geq t_+ & \text{gilt} \\ \omega_0 & \text{wenn} & t_0 \leq c < t_+ & \text{gilt} \\ \omega_- & \text{wenn} & t_- \leq c < t_0 & \text{gilt} \\ 0 & \text{wenn} & c < t_- & \text{gilt} \end{cases}$$

wobei $t_+$, $t_0$ und $t_-$ Schwellwerte sind, die für jede Klasse gesetzt sind, und $\omega_+$, $\omega_0$ und $\omega_-$ entsprechende Gewichtungen sind, die für jede Klasse definiert sind. Oberhalb $t_+$ ist man sicher, dass ein Bereich einem Fahrzeug zugeordnet werden kann, und unterhalb $t_-$ ist man sicher, dass dieser Bereich keinem Fahrzeug zugeordnet werden kann. Der Bereich von $t_-$ bis $t_+$ wird als nicht sicherer Ausgang der Klassifikation gewertet, wobei von $t_-$ bis $t_0$ angenommen wird, dass der Bereich einer Lichtquelle, die nicht von einem anderen Fahrzeug herrührt, ähnlicher ist, wohingegen im Bereich von $t_0$ bis $t_-$ angenommen wird, dass die Bereiche ähnlicher einem Fahrzeuglicht sind. Die folgende Tabelle zeigt ein Beispiel für die verwendeten Schwellwerte:

| Um keine falsch klassifizierten Bereiche zu erhalten | Scheinwerferklassifikation | | Rücklichtklassifikation | |
|---|---|---|---|---|
| | klein | nicht klein | klein | nicht klein |
| $(t, \omega)_+$ | (1, 1) | (1, 1'5) | (1, 0'5) | (1, 1) |
| $(t, \omega)_0$ | (0, 0'5) | (0, 1) | (0, 0'25) | (0, 0'25) |
| $(t, \omega)_-$ | (-2, 0) | (-2, 0) | (-2, 0) | (-2, 0) |
| richtig klassifiziert (Fahrzeuge/ keine Fahrzeuge) | 78 % / 75 % | 97 % / 97 % | 60 % / 65 % | 94 % / 93 % |
| keine sichere Entscheidung (Fahrzeuge/ keine Fahrzeuge) | 22 % / 25 % | 3 % / 3 % | 40 % / 35 % | 6%/7% |

Es ergibt sich, dass bei diesen Schwellwerten für vorstehende Gleichung keine Bereiche falsch klassifiziert werden. Ferner ist die richtige Klassifizierung für nicht kleine Bereiche über 90 %.

Aus den gewichteten Klassifikationswerten wird nun ein Konfidenzwert v für jeden Bereich berechnet. Nimmt man an, dass g der maximale Grauwert eines gegebenen Bereichs normalisiert über den maximal möglichen Grauwert für einen Bereich ist, wird der Konfidenzwert wie folgt definiert:

$$v = \omega \times g$$

wobei $\omega$ der dem Bereich zugeordnete gewichteten Klassifikationswerte ist. Der Konfidenzwert ergibt sich somit aus der Sicherheit bei der Klassifikation mal der Sicherheit einer physikalischen Größe, die im vorliegenden Fall der maximale Grauwert des Bereichs, insbesondere der maximale Grauwert eines gegebenen Bereichs normalisiert über den maximal möglichen Grauwert, ist. Der maximale Grauwert beeinflusst somit sowohl den gewichteten Klassifikationswert als auch die physikalische Größe. Jedoch werden bei der Gewinnung der gewichteten Klassifikationswerte mittels eines Algorithmus' erlernte Schwellwerte mittels verschiedener Eigenschaften des Grauwerts verwendet, wohingegen der Grauwert bei der Berechnung der physikalischen Größe direkt verwendet wird.

Bei der vorstehend angegebenen Berechnung des Konfidenzwertes wird berücksichtigt, dass Fahrzeuge, die näher am eigenen Fahrzeug sind, hellere Bereiche in dem von dem Sensor aufgenommenen Bild erzeugen werden als Fahrzeuge, die weiter weg sind. Folglich werden Bereiche, die als zugehörig zu einem Fahrzeug klassifiziert werden, und zwar zu einem Fahrzeuge in der Nähe des eigenen Fahrzeugs, einen höheren Konfidenzwert haben. Falls ein Fahrzeug weiter weg ist, wird der zugehörige Bereich des Bildes des Sensors zwar einen hohen Konfidenzwert haben, jedoch einen geringeren als der Bereich, der einem näheren Fahrzeug zugeordnet ist. Ein heller Bereich, der von einer Reflexion herrührt, wird einen nicht so hohen Konfidenzwert haben, falls er richtig klassifiziert wurde, und dieser Konfidenzwert wird noch geringer für Bereiche sein, die von Reflexionen herrühren, die von weit entfernten Objekten herrühren.

Falls sich im Schritt 130 ergeben hat, dass sich die Basisklassifikation zu einem Fahrzeug nicht herstellen lässt, werden im Schritt 150 zusätzliche Informationen für die Klassifizierung hinzugezogen. Dabei kann insbesondere die Umgebung des Bereichs untersucht werden. Bei dieser Untersuchung kann bestimmt werden, ob sich in der Nähe eines Bereichs ein weiterer Bereich befindet, so dass die beiden Bereiche zwei Scheinwerfern oder Rücklichtern eines anderen Fahrzeugs zugeordnet werden können. Beispielsweise kann für die Bereiche, für welche sich bei der Basisklassifikation im Schritt 120 ergeben hat, dass $t_- \le c \le t_+$ gilt, insbesondere eine solche Umgebungsuntersuchung durchgeführt werden. Ergibt sich bei der Umgebungsuntersuchung ein Lichtpaar, ist dies ein Hinweis auf einen Zwillingsbereich, welcher von dem rechten und linken Scheinwerfer bzw. dem rechten und linken Rücklicht eines Fahrzeugs herrührt. Selbstverständlich führt diese Untersuchung nur für Fahrzeuge mit zwei Scheinwerfern bzw. Rücklichtern zu einem positiven Ergebnis, jedoch nicht für Motorräder oder dergleichen.

Bei der Untersuchung der Umgebung wird für jeden Bereich ein Fenster einer Größe, die proportional zu der Umrandung des Bereichs ist, auf der linken und rechten Seite des Bereichs platziert. Innerhalb jedes Fensters auf der linken und auf der rechten Seite wird nach anderen Bereichen gesucht, deren Schwerpunkt innerhalb eines der Fenster liegt. Wenn ein solcher möglicher Zwillingsbereich gefunden wurde, werden einige der vorstehend beschriebenen Eigenschaften miteinander verglichen. Jeder Vergleich umfasst die Berechnung eines Verhältnisses, z. B. das Verhältnis der maximalen Grauwerte der beiden Bereiche. Diese Verhältnisse bilden einen Eigenschaftssatz, der mit anderen Eigenschaften wie dem Abstand der Schwerpunkte, dem Absolutwert des maximalen Grauwerts usw. verknüpft werden kann. Diese Werte bilden einen Eigenschaftssatz, der für den vorstehend beschriebenen Real-AdaBoost-Algorithmus zur Klassifikation verwendet wird. Das neue Klassifikationsresultat des Lernalgorithmus' wird verwendet, um den gewichteten Klassifikationswert $\omega$ zu modifizieren, der während der vorstehend beschriebenen Klassifikation erlangt wurden. Dabei wird folgende Regel verwendet: Falls sich aus der Paarungsklassifikation ein negativer Wert ergibt (keine Zwillingsbereiche) wird der gewichteten Klassifikationswert $\omega$ nicht modifiziert, andernfalls wird dieser gewichteten Klassifikationswert hochgesetzt, d. h. $\omega_-$ wird zu $\omega_0$ oder $\omega_0$ wird zu $\omega_+$. Diese gewichteten Klassifikationswerte werden dann bei den weiteren Verfahrensschritten zu Grunde gelegt.

Nachdem im Schritt 140 die Konfidenzwerte für die Bereiche bestimmt worden sind, wird im Schritt 160 die zeitliche Kohärenz der Konfidenzwerte bestimmt. Hierfür wird eine zeitliche Kohärenzanalyse durchgeführt. Es wird darauf hingewiesen, dass die Konfidenzwerte für die anschließende zeitliche Kohärenzanalyse auch auf andere Weise als die vorstehend beschriebene gewonnen werden können. Andererseits kann die zeitliche Kohärenzanalyse auch weggelassen werden, wenn die gewichteten Konfidenzwerte wie vorstehend beschrieben ermittelt worden sind.

Eine Möglichkeit für eine Kohärenzanalyse basiert auf einer Zielverfolgung, d. h. die zeitliche Veränderung der Bereiche in dem vom Sensor aufgenommenen Bild wird verfolgt. Eine solche Zielverfolgung wird optional im zweiten Ausführungsbeispiel des erfindungsgemäßen Verfahrens durchgeführt. Sie ist jedoch schwierig umzusetzen und nicht fehlerfrei. Im vorliegenden ersten Ausführungsbeispiel wird daher eine Kohärenzanalyse durchgeführt, welche keine Zielverfolgung erfordert.

Bei der zeitlichen Kohärenzanalyse dieser Ausgestaltung wird ein Akkumulationsfeld A gebildet, um zu bestimmen, ob die zugeordneten Konfidenzwerte zeitlich kohärent sind. Das Akkumulationsfeld A hat dieselben Dimensionen wie das ursprüngliche Bild. Bei der Erneuerung des Ackumulationsfeldes werden folgende Schritte durchgeführt:

1. Die Werte des Akkumulationsfeldes A reichen von 0 bis zu einem gegebenen Wert $M_A$, beginnend bei A = 0.

2. Wenn ein neues Bild $k$ gewonnen wurde:

(a) Verringern von A. Es wird ein Verfall der Akkumulation durch den Rechenschritt A = max(0, A - $d$) durchgeführt, wobei d eine feste Zahl ist, die den Verfallsanteil bestimmt: Beginnt man bei $M_A$, benötigt man $M_A/d$ Schritte, um 0 zu erhalten. Dabei kann d bei verschiedenen Zellen von dem Akkumulationsfeld A und durch ein Hystereseverfahren verschiedene Werte aus zwei Möglichkeiten annehmen.

(b) Ausbreiten von A. Die Werte jeder Zelle werden entsprechend der erwarteten Bewegung der Ziele ausgebreitet, um Konfidenzwerte, die von demselben Ziel herrühren, von Bild zu Bild zu kombinieren.

(c) Erhöhen von A. Nimmt man an, dass $A_i^{(k)}$ ein Koordinatensatz ist, der den Bereich i bildet, der bei dem gegenwärtigen Bild k detektiert wurde, und $v_i^{(k)}$ der entsprechende Konfidenzwert ist, wird folgende Erneuerungsformel verwendet: $A_{Ai}^{(k)} = \min(A^{(k-1)}{}_{Ai} + v_i^{(k)}, M_A)$, wobei $A_{Ai}$ für die Zelle von A steht, deren Koordinaten $A_i$ entsprechen.

Bei dem Ausbreitungsschritt wird eine Art Dilatation durchgeführt, die ähnlich der mathematischen Morphologie der Grauwerte ist, dessen strukturierendes Element jedoch bei verschiedenen Akkumulationszellen verschieden ist. Der Unterschied rührt von der erwarteten Bewegung für die verschiedenen Ziele im Bildraum her: Ziele in der Nähe des Horizonts bleiben relativ statisch von Bild zu Bild, wohingegen die Position näherer Ziele stärker variiert. Ferner bewegen sich entgegenkommende Fahrzeuge schneller in Richtung des unteren Rands des Bildes, wohingegen vorausfahrende Fahrzeuge ein solches Verhalten nicht zeigen. Daher wird das Akkumulationsfeld insbesondere für Bereiche verwendet, die ähnlicher solchen sind, die von Scheinwerfern herrühren, als solchen, die von Rücklichtern herrühren, und ein anderes Feld für die restlichen Bereiche. Dieses andere Feld wird entsprechend der Klassifikation gewählt, wenn diese einen höheren Ausgang während der Basisklassifikation hatte.

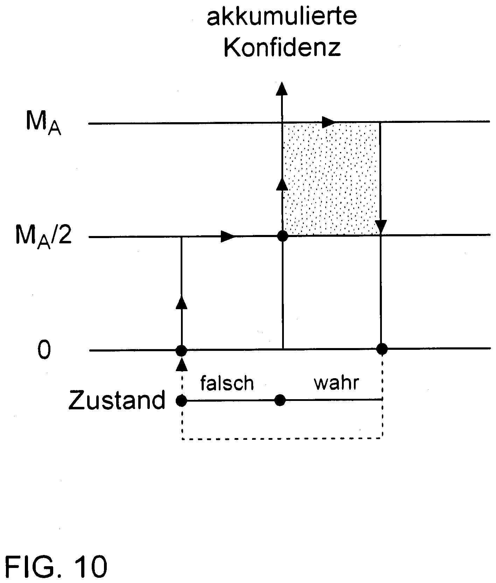

Die Bereiche für das Bild k werden schließlich als Fahrzeuglichter oder keine Fahrzeuglichter entsprechend einem Hysteresekriterium bezogen auf die entsprechenden Positionen des Ackumulationsfeldes klassifiziert. Dies bedeutet, dass jedes Akkumulationsfeld ein zugeordnetes Zustandsfeld S derselben Dimension hat. Die Hysterese wird dann, wie in Figur 10 gezeigt, wie folgt durchgeführt:

- Falls die Zelle $A_{i,j}$ null ist, wird der entsprechende Wert des Zustandsfeldes $S_{i,j}$ auf den Wert FALSCH gesetzt. Der nächste Verfallsanteil für $A_{i,j}$ ist $d = d_f$, wobei $d_f$ eine feste Zahl ist;
- falls $A_{i,j} \geq M_A/2$ ist, wird $S_{i,j}$ auf den Wert WAHR gesetzt und $d = d_t$, wobei $d_t$ ein fester Wert ist;
- falls $0 < A_{i,j} < M_A/2$ gilt, wird $S_{i,j}$ nicht verändert und es ergibt sich auch kein zugeordneter Verfall von $A_{i,j}$.

Folglich wird für einen gegebenen Bereich i mit $A_i^{(k)}$ bei Bild k die logische Operation ODER auf $S_{A_i}^{(k)}$ angewandt, um die Bereiche endgültig einem Fahrzeug oder keinem Fahrzeug zuzuordnen.

Während der zeitlichen Kohärenzanalyse wird der Maximalwert für das Hysteresekriterium auf $M_A = 2$ gesetzt, so dass die zu einer Zelle des Akkumulationsfeldes zugeordnete Hysterese den Zustand WAHR oberhalb $M_A/2 = 1$ annimmt und den Zustand FALSCH nicht erreicht, bevor wieder der Wert null erreicht wird, wie in Figur 10 dargestellt. Für die Steuerung des Verfalls werden folgende Werte gewählt: $(d_t, d_f) = (45, 15)$ Bilder, was bedeutet, dass, wenn ein Fahrzeug verschwindet, das System den neuen freien Bereich noch für etwa zwei Sekunden beleuchtet. Dieselben Werte werden für das Akkumulationsfeld der scheinwerferähnlichen Bereiche und für die rücklichtähnlichen Bereiche gewählt.

Wie erläutert, wird somit zur Bestimmung der zeitlichen Kohärenz ein Akkumulationsfeld gebildet, bei dem für die Bildpunkte des Bildes der Konfidenzwert aufakkumuliert wird. Bei einem Übergang von einem Bild zu einem folgenden Bild wird der Konfidenzwert für einen Bildpunkt um einen festen Wert verringert und um den Konfidenzwert des entsprechenden Bildpunkts des folgenden Bildes erhöht. Dabei wird sich beim Übergang von einem Bild zu einem folgenden Bild der Bereich in Abhängigkeit von der zu erwartenden Bewegung eines dem Bereich zugeordneten Objekts ausbreiten. Die endgültige Entscheidung, ob ein Bereich einem Fahrzeuglicht zugeordnet wird, wird an Hand der zeitlichen Entwicklung des Akkumulationsfeldes bestimmt, wobei die Konfidenzwerte des Akkumulationsfeldes einer zeitlichen Hysterese unterworfen sind. Diese endgültige Zuordnung wird mittels der Zuordnungseinheit 34 im Schritt 170 getroffen.

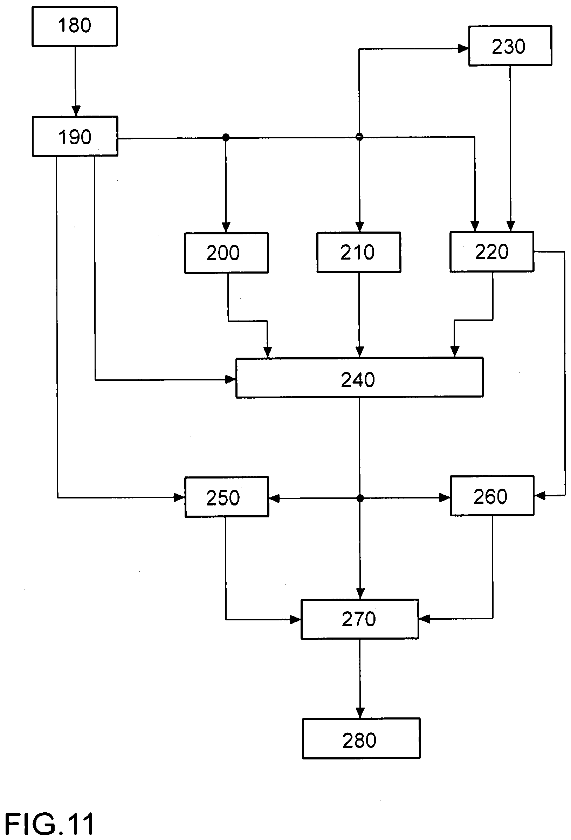

Im Folgenden wird an Hand von Figur 11 eine zweite Ausgestaltung der Verfahrensschritte zum Erfassen von anderen Verkehrsteilnehmern beschrieben:

Wie bei der ersten Ausgestaltung wird ein Sensor zum Aufnehmen eines Bildes eines Verkehrsbereichs im sichtbaren Spektrum und eine Bildverarbeitungsvorrichtung 15 verwendet. Die Detektion der Verkehrsteilnehmer, z.B. der Fahrzeuge erfolgt an Hand der Fahrzeuglichter, d. h. für entgegenkommende Fahrzeuge 11 an Hand der Lichtemission der vorderen Scheinwerfer, und für vorausfahrende Fahrzeuge 12 an Hand der Lichtemission der Rücklichter.

Im Schritt 180 wird wie im Schritt 100 der ersten Ausgestaltung ein Bild des Verkehrsbereichs vor dem eigenen Fahrzeug 10 aufgenommen. Im Schritt 190 werden wie im Schritt 110 des Verfahrens der ersten Ausgestaltung zusammenhängende Bereiche mit einer Helligkeit extrahiert, die einen Schwellwert überschreitet. Es werden somit in dem von dem Sensor erzeugten Bild zusammenhängende helle Bildpunkte gesucht, die eine vorgegebene Intensität und gegebenenfalls zusätzlich eine vorgegebene Größe überschreiten. Solche Bildbereiche können zu Lichtquellen eines anderen Fahrzeugs gehören, jedoch auch zu anderen Lichtquellen oder Reflexionen der Lichtemission des eigenen Fahrzeugs.

Als Ergebnis des Schrittes 190 erhält man ein Binärbild, in dem zusammenhängende Bereiche mit hellen Bildpunkten durch eine Umrandung festgelegt sind. Ferner werden wie in der ersten Ausgestaltung zu den Bereichen Eigenschaften wie insbesondere die Größe, die Helligkeit, die Farbe etc. bestimmt. Falls sich bei der Analyse eines einzelnen Bildes ergibt, dass ein Bereich mit hoher Wahrscheinlichkeit einem Fahrzeuglicht zugeordnet werden kann, kann das Verfahren für diese Bereiche direkt mit Schritt 250 fortfahren. Des Weiteren können die Bereiche an Hand der Eigenschaften der Bereiche im Schritt 240 klassifiziert werden. Schließlich können noch weitere Informationen zu den Bereichen gewonnen werden, wie es im Folgenden beschrieben wird:

Im Schritt 200 wird für jeden Bereich eine Umgebungsanalyse des Bereichs durchgeführt. Diese Umgebungsanalyse kann beispielsweise die in der ersten Ausgestaltung beschriebene Paarbildung auf Grund von Zwillingsbereichen umfassen, bei der zwei helle Bereiche einem Scheinwerferpaar oder einem Rücklichtpaar jeweils eines Fahrzeugs zugeordnet wird. Das Ergebnis der Umgebungsanalyse im Schritt 200 wird im Schritt 240 weiterverarbeitet.

Ein weiterer optionaler Verarbeitungsschritt betrifft das Verfolgen eines oder mehrerer Bereiche in einer Bildsequenz und die Bestimmung der Bewegung des Bereichs bzw. der Bereiche. Um das Wiederfinden eines Bereichs innerhalb der Bildsequenz zu erleichtern, wird hierfür im Schritt 230 eine globale Bewegungsschätzung durchgeführt. Dabei wird die Eigenbewegung des Fahrzeugs 10 berechnet und entsprechend bei der Verfolgung der Bereiche berücksichtigt. Die globale Bewegung kann im Schritt 230 an Hand der Korrelation der Bewegung mehrerer Objekte im Bild bestimmt werden. Sie kann auch über Werte, die von der Odometrie im Fahrzeug oder anderen Sensoren im Fahrzeug, wie z. B. Beschleunigungssensoren, zur Verfügung gestellt werden, bestimmt werden. Ebenso ist eine Kombination beider Ansätze möglich. Die Bildverarbeitungsvorrichtung 15 kann hierfür beispielsweise über das Steuergerät 16 mit dem Fahrzeugbus 17 gekoppelt sein. Im Schritt 220 wird unter Berücksichtigung der im Schritt 230 ermittelten globalen Bewegung des Fahrzeugs die Bewegung der einzelnen Bereiche in der Bildsequenz ermittelt.

Wenn die Bereiche mit der Bildverarbeitungsvorrichtung 15 über mehrere Bilder verfolgt werden, ist es ferner im Schritt 210 möglich, die internen Eigenschaften der Bereiche, die von Bild zu Bild etwas schwanken können, über mehrere Bilder zu stabilisieren. Hierzu werden die Eigenschaften der Bereiche im Schritt 210 über mehrere Bilder zeitlich gemittelt. Dieser Verfahrensschritt ist insbesondere für die Ermittlung der Farbe eines sehr kleinen Bereichs vorteilhaft:

Bei einem kleinen Bildbereich trifft das Licht auf nur sehr wenige Bildpunkte des Sensors. Bei einem Farbbildsensor sind die einzelnen Bildpunkte jeweils nur für eine Farbe, üblicherweise für rot, grün oder blau, empfindlich. Eine Farbbestimmung ist erst dann möglich, wenn der Bereich auf genügend Bildpunkte aller Farbkomponenten trifft. Wenn die Größe des Bereichs hierfür nicht ausreicht, können im Schritt 210 die Bildpunkte des Bereichs herangezogen werden, die für mehrere aufeinander folgende Bilder ermittelt wurden.

Die Daten, die in den Schritten 190, 200, 210 und/oder 220 gewonnen wurden, werden im Schritt 240 weiterverarbeitet. Wie in der ersten Ausgestaltung beschrieben, werden die Bereiche in Abhängigkeit von ihrer Größe sowie den weiteren in den vorangehenden Schritten gewonnenen Eigenschaften klassifiziert und es wird für die Bereiche wie vorstehend beschrieben ein Konfidenzwert, insbesondere der gewichtete Konfidenzwert, bestimmt. Je höher der Konfidenzwert ist, desto höher ist die Wahrscheinlichkeit, dass der Bereich einem Fahrzeuglicht, d. h. dem Scheinwerfer eines entgegenkommenden Fahrzeugs 11 oder dem Rücklicht eines vorausfahrenden Fahrzeugs 12, zugeordnet werden kann.

Reicht die Beobachtung eines Bereichs in einem Bild nicht aus, um eine eindeutige Klassifikation vorzunehmen, wird für jeden Bereich der Konfidenzwert im Schritt 260 über mehrere Bilder aufakkumuliert. Hierbei wird die im Schritt 220 ermittelte Bewegung jedes Bereichs berücksichtigt. Wenn ein Bereich über mehrere Bilder verfolgt werden kann, wird über die Akkumulation bzw. die Verringerung der Konfidenzwerte des Bereichs in mehreren aufeinander folgenden Bildern ein neuer Konfidenzwert bestimmt.

Parallel hierzu bzw. alternativ dazu kann der Konfidenzwert für jeden Bildpunkt akkumuliert bzw. verringert werden. Hierfür ist eine Verfolgung der Bereiche nicht erforderlich. Im Schritt 250 werden die Bildbereiche, d. h. die Bildpunkte innerhalb der Umrandung eines bestimmten Bereichs, der mittels der vorstehenden Schritte ermittelt worden ist, mit dem Konfidenzwert dieses Bereichs versehen. Von dem Konfidenzwert des Bereichs wird bei einem folgenden Bild ein bestimmter Wert, wie in der ersten Ausgestaltung erläutert, automatisch abgezogen, so dass der Konfidenzwert in Bereichen, in denen in folgenden Bildern keine hellen Bereiche mehr liegen, mit der Zeit auf null sinkt. Gleichzeitig wird bei jedem folgenden Bild auf den Konfidenzwert eines Bereichs die akkumulierte Konfidenz des darunter liegenden Bereichs addiert. Hieraus ergibt sich ein neuer Konfidenzwert, der nicht nur die aktuelle Konfidenz des Bereichs beinhaltet, sondern über eine zweidimensionale Akkumulation auch die Konfidenzen kurz vorangegangener Bereiche in diesem Bildbereich enthält. Darüber hinaus kann im Schritt 250 dieses zweidimensionale Konfidenzfeld eines Bereichs bei dem Verfall von Bild zu Bild vergrößert werden. Die Ausbreitungsrichtung bei der Vergrößerung dieses Konfidenzfeldes kann der erwarteten Objektbewegung bzw. der erwarteten Bewegung des eigenen Fahrzeugs 10 angepasst werden.

Somit kann sichergestellt werden, dass trotz der Bewegung eines Bereichs der Bereich noch auf Konfidenzwerten liegt, welche im vorausgegangenen Bild durch den gleichen Bereich generiert wurden.

Ergibt sich schließlich bei der im Schritt 240 erzeugten Klassifikation ein Konfidenzwert, der eine eindeutige Entscheidung für einen Bereich zulässt, ob er einem Fahrzeuglicht zugeordnet werden kann oder nicht, kann das Ergebnis des Schrittes 240 auch direkt weiterverarbeitet werden. Die auf diese Weise in den Schritten 240, 250 bzw. 260 bestimmten Konfidenzwerte werden im Schritt 270 zusammengeführt und es wird eine abschließende Entscheidung getroffen, ob es sich bei einem Bereich um ein relevantes Objekt handelt, d. h., ob die Helligkeit in diesem Bereich von einer Lichtquelle eines anderen Fahrzeugs herrührt oder nicht.

Im Schritt 280 werden schließlich Bereiche, die anderen Fahrzeugen 11, 12 zugeordnet werden können, mit den entsprechenden Koordinaten relativ zum eigenen Fahrzeug 10 ausgegeben. Aus diesen Koordinaten ergeben sich insbesondere die Winkelpositionen der detektierten vorausfahrenden oder entgegenkommenden Fahrzeuge 11, 12 relativ zum eigenen Fahrzeug 10.

Es wird darauf hingewiesen, dass die Schritte 200, 210 und 220 in Abhängigkeit von dem Ergebnis des Schrittes 190 insgesamt weggelassen werden können oder nur ein einzelner oder einzelne dieser Schritte durchgeführt wird bzw. werden. Ferner können die Schritte 250 und 260 parallel oder alternativ ausgeführt werden. Schließlich können sie auch in Abhängigkeit von dem Ergebnis des Schrittes 240 ganz weggelassen werden.

Schließlich kann die mit Bezug zu der ersten Ausgestaltung erläuterte Hysterese eingesetzt werden. Wenn ein Konfidenzwert überschritten wird, wird der Bereich als relevantes Objekt klassifiziert. Wenn ein niedrigerer Wert unterschritten wird, wird der Bereich nicht mehr als relevantes Objekt klassifiziert. Die Akkumulation der Konfidenzwerte bei den Verarbeitungsschritten 250 bzw. 260 bzw. die Akkumulation bei dem Verarbeitungsschritt 210 wird bei einem eingestellten Maximalwert abgeschnitten. Somit kann gewährleistet werden, dass die untere Hystereseschwelle in hinreichender Zeit wieder unterschritten wird.

Mittels der Kamera 18, welche den vorstehend beschriebenen Sensor umfasst, und der Bildverarbeitungsvorrichtung 15 wird somit erfasst, ob sich ein anderer, insbesondere beleuchteter Verkehrsteilnehmer in Fahrtrichtung vor dem eigenen Fahrzeug 10 befindet. Ferner wird die Position eines solchen Verkehrsteilnehmers relativ zu dem eigenen Fahrzeug ermittelt. Die Daten zu einem erfassten anderen Verkehrsteilnehmer werden von der Bildverarbeitungsvorrichtung 15 an das Steuergerät 16 übertragen.

Das Steuergerät 16 ist ferner mit einem Fahrzeugbus 17 verbunden, über welchen weitere im Fahrzeug erfasste Daten an das Steuergerät 16 übertragen werden können. Beispielsweise können über den Fahrzeugbus 17 geographischen Daten von einem Navigationssystem 28 an das Steuergerät 16 übertragen werden. Das Navigationssystem 28 kann die aktuelle Position des Fahrzeugs 10 mittels eines Empfangssensors bestimmen, der beispielsweise als GPS (Global Positioning System)-Empfänger 29 ausgebildet sein kann.

Die Scheinwerferanordnung kann ferner eine Einrichtung 25 zum Erfassen des Fahrverhaltens des Fahrzeugs 10 umfassen. Die Einrichtung 25 kann beispielsweise über den Fahrzeugbus 17 mit einer internen Uhr und einem Geschwindigkeitsmesser des Fahrzeugs gekoppelt sein und anhand der übertragenen Geschwindigkeit mittels des Zeitsignals der internen Uhr die Beschleunigung des Fahrzeugs 10 bestimmen. Über die zeitliche Entwicklung der Größe der Beschleunigung bzw. der Größe des absoluten Werts der Beschleunigung kann die Einrichtung 25 eine Fahrdynamik bestimmen und einer bestimmten Klasse für das Fahrverhalten zuordnen. Ferner kann der Einrichtung 25 ein Eingabesignal zum Beispiel des Fahrers übertragen werden, durch welches das Fahrverhalten vorgegeben wird. Schließlich kann die Einrichtung 25 das Fahrverhalten auch in Abhängigkeit von einem Fahrertyp bestimmen. Hierfür kann die Einrichtung 25 über den Fahrzeugbus 17 mit einer Einrichtung zum Bestimmen der Person des Fahrers gekoppelt sein. In der Einrichtung 25 können historische Daten zu diesem Fahrer gespeichert sein, so das die Einrichtung 25 dem aktuellen Fahrer eine bestimmten Fahrertyp zuordnen kann, welcher das Fahrverhalten bestimmt. Das von der Einrichtung 25 bestimmte Fahrverhalten wird an einen Zeitgeber 27 übertragen. Der Zeitgeber 27 bestimmt in Abhängigkeit von dem ermittelten Fahrverhalten ein Zeitintervall ΔT für den Übergang von einer Gesamtlichtverteilung zu einer anderen Gesamtlichtverteilung. Das bestimmte Zeitintervall ΔT wird von dem Zeitgeber 27 an das Steuergerät 16 übertragen, welche dieses weiterverarbeitet.

Das Steuergerät 16 ist ferner mit einer Verzögerungseinheit 26 verbunden. Die Verzögerungseinheit 26 bestimmt eine Verzögerungszeit, durch welche ein Umschalten zwischen zwei Gesamtlichtverteilungen oder zwischen zwei Leuchtzuständen für die Leuchtweite verzögert wird. Die Bestimmung der Verzögerungszeit mittels der Verzögerungseinheit 26 wird später im Detail beschrieben.

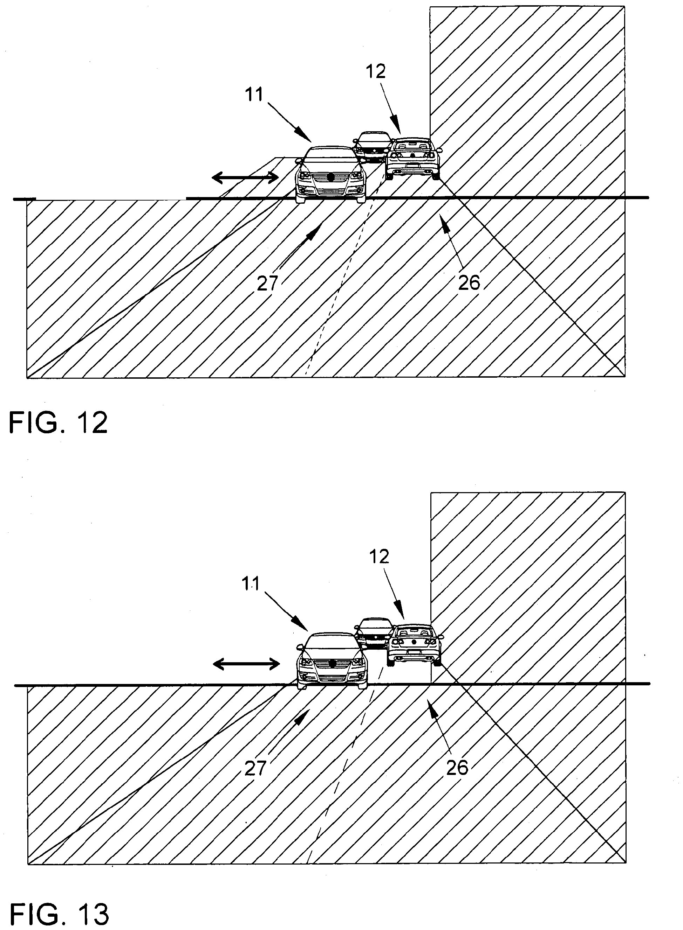

Im Folgenden wird beschrieben, wie die vorstehend beschriebene Scheinwerferanordnung bei einem Ausführungsbeispiel des erfindungsgemäßen Verfahrens gesteuert bzw. geregelt wird:
Mit Bezug zu den Figuren 12 und 13 wird erläutert, wie von der ersten Gesamtlichtverteilung 39 auf die zweite Gesamtlichtverteilung 40 umgeschaltet wird. Das Fahrzeug 10 fährt beispielsweise auf einer einspurigen Fahrbahn 26. Die Scheinwerferanordnung des Fahrzeugs 10 erzeugt die erste Gesamtlichtverteilung 39. Mittels der Kamera 18 und der Bildverarbeitungsvorrichtung 15 wird aufgrund anderer erfasster Verkehrsteilnehmer 11 und 12 ein Steuersignal an das Steuergerät 16 übertragen, dass von der ersten Gesamtlichtverteilung 39 auf das maskierte Dauerfernlicht der zweiten Gesamtlichtverteilung 40 umgeschaltet werden soll.

Beim Übergang von der ersten Gesamtlichtverteilung 39 zu der zweiten Gesamtlichtverteilung 40 wird der Aktuator 23 von dem Steuergerät 14 des linken Scheinwerfers 2 so angesteuert, dass die Lichtemissionsrichtung L des zweiten Scheinwerfers 2 horizontal nach außen in Richtung der Gegenfahrbahn von der Lichtemissionsrichtung L des ersten Scheinwerfers 1 weggeschwenkt wird. Da bei der ersten Gesamtlichtverteilung 39 die größere Leuchtweite im rechten Bereich der Gesamtlichtverteilung 39 unter anderem auch von der Lichtemission des zweiten, linken Scheinwerfers 2 erzeugt wird, ergibt sich das Problem, dass bei einem Schwenken des linken Scheinwerfers 2 um die vertikale Achse 38 andere Verkehrsteilnehmer 11 und 12 geblendet werden würden. Diese Situation ist schematisch in Figur 12 dargestellt.

Um diese Blendung anderer Verkehrsteilnehmer 11 und 12 während des Umschaltens von der ersten Gesamtlichtverteilung 39 auf die zweite Gesamtlichtverteilung 40 zu vermeiden, wird bei dem erfindungsgemäßen Verfahren die Leuchtweite des linken Scheinwerfers 2 (bei Rechtsverkehr) zunächst auf der rechten Seite der Mittelachse 36 zwischen den Fahrbahnen 26 und 27 zumindest so weit verringert, dass sie kleiner ist als der Abstand zu einem erfassten Verkehrsteilnehmer 11 bzw. 12. Erst danach wird die zweite Gesamtlichtverteilung 40 erzeugt, indem die Leuchtweite im linken Seitenbereich neben erfassten Verkehrsteilnehmern 11 und 12 erhöht wird, um für einen der Verkehrsteilnehmer 11 oder 12 bzw. für beide Verkehrsteilnehmer 11 und 12 einen Korridor mit geringerer Leuchtweite zu schaffen. In Figur 13 ist das Umschalten von der ersten Gesamtlichtverteilung 39 auf die zweite Gesamtlichtverteilung 40 gemäß dem erfindungsgemäßen Verfahren dargestellt. Dabei ist erkennbar, dass auch während des Umschaltvorgangs andere Verkehrsteilnehmer nicht geblendet werden.

Wenn umgekehrt von der zweiten Gesamtlichtverteilung 40 zurück auf die erste Gesamtlichtverteilung 39 umgeschaltet wird, wird entsprechend zunächst ein etwaiger linker Seitenbereich $S_2$ der zweiten Gesamtlichtverteilung 40 ausgeblendet, so dass die Leuchtweite in diesem Bereich der Leuchtweite im Mittelbereich M entspricht, danach wird der linke Scheinwerfer 2 um die vertikale Achse 38 zurück in die Stellung für die erste Gesamtlichtverteilung 39 geschwenkt und erst danach wird auch von dem linken Scheinwerfer 2 die für die erste Gesamtlichtverteilung 39 charakteristische asymmetrische Lichtverteilung erzeugt.

Wenn mit der Scheinwerferanordnung eine sogenannte Stadtlichtfunktion erzeugt werden kann, bei welcher die Asymmetrie der ersten Lichtverteilung 39 aufgehoben wird und eine so geringe maximale Leuchtweite bereitgestellt wird, dass andere Verkehrsteilnehmer nicht geblendet werden, kann auch beim Umschalten von der ersten Gesamtlichtverteilung 39 auf die zweite Gesamtlichtverteilung 40 zunächst auf die Stadtlichtfunktion umgeschaltet werden, danach der linke Scheinwerfer 2, und ggf. auch der rechte Scheinwerfer 1, um die vertikale Achse 38 nach außen geschwenkt werden, um danach schließlich das maskierte Dauerfernlicht der zweiten Gesamtlichtverteilung 40 zu erzeugen.

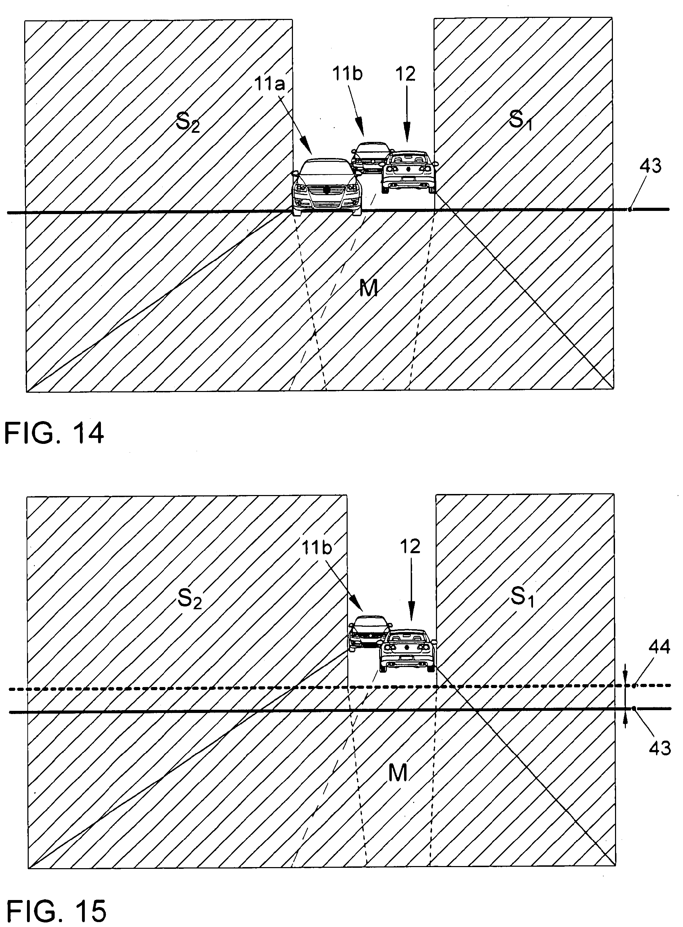

Mit Bezug zu den Figuren 14 und 15 wird die Regelung der Leuchtweite im Mittelbereich M bei der zweiten Gesamtlichtverteilung 40 erläutert. In diesem Fall wird bei der zweiten Gesamtlichtverteilung 40 anders als bei dem in Figur 10 gezeigten Beispiel ein Korridor mit verringerter Leuchtweite 43 in einem Mittelbereich M erzeugt, in welchem sich sowohl ein vorausfahrendes Fahrzeug 12 als auch entgegenkommende Fahrzeuge 11a, 11b befinden. Eine derart angepasste zweite Gesamtlichtverteilung 40 kann durch ein Steuersignal der Bildverarbeitungsvorrichtung 15 erzeugt werden, wenn eine erhöhte Verkehrsdichte vorliegt, bei welcher eine dauernde Regelung der Leuchtweite im linken Seitenbereich $S_2$ nachteilig wäre.

Die Seitenbereiche $S_1$ und $S_2$ der in den Figuren 14 und 15 gezeigten angepassten zweiten Gesamtlichtverteilung 40 werden beispielsweise dadurch erzeugt, dass die beiden Scheinwerfer 1 und 2 hinsichtlich ihrer Lichtemissionsrichtung L weiter um die vertikale Achse 38 auseinandergeschwenkt werden. Die inneren vertikalen Hell-Dunkel-Grenzen bei dem Korridor für die Fahrzeuge 11 und 12 werden durch Verlagerung der Blenden 8 und 9 mittels der Aktuatoren 21 und 24 erzeugt. Die horizontale Hell-Dunkel-Grenze im Mittelbereich M, d.h. die Leuchtweite 43 in diesem Mittelbereich M, wird jedoch ausschließlich durch die Leuchtweitenregulierung erzeugt, indem die Scheinwerfer 1 und 2 mittels der Aktuatoren 19 und 22 um die horizontale Achse 37 geschwenkt werden. Die Regelung erfolgt so, dass die Hell-Dunkel-Grenze 43 an den Abstand zu den erfassten Verkehrsteilnehmern 11 und 12 angepasst wird. Ist beispielsweise ausgehend von der Verkehrssituation, die in Figur 14 dargestellt ist, das entgegenkommende Fahrzeug 11a vorbeigefahren, wird die Leuchtweite auf den in Figur 15 dargestellten Wert 44 an das vorausfahrende Fahrzeug 12 herangeführt. Diese Art der Regelung der Leuchtweite 43 im Mittelbereich M der zweiten Gesamtlichtverteilung ist insbesondere auch bei Berg- und Talfahrten vorteilhaft.

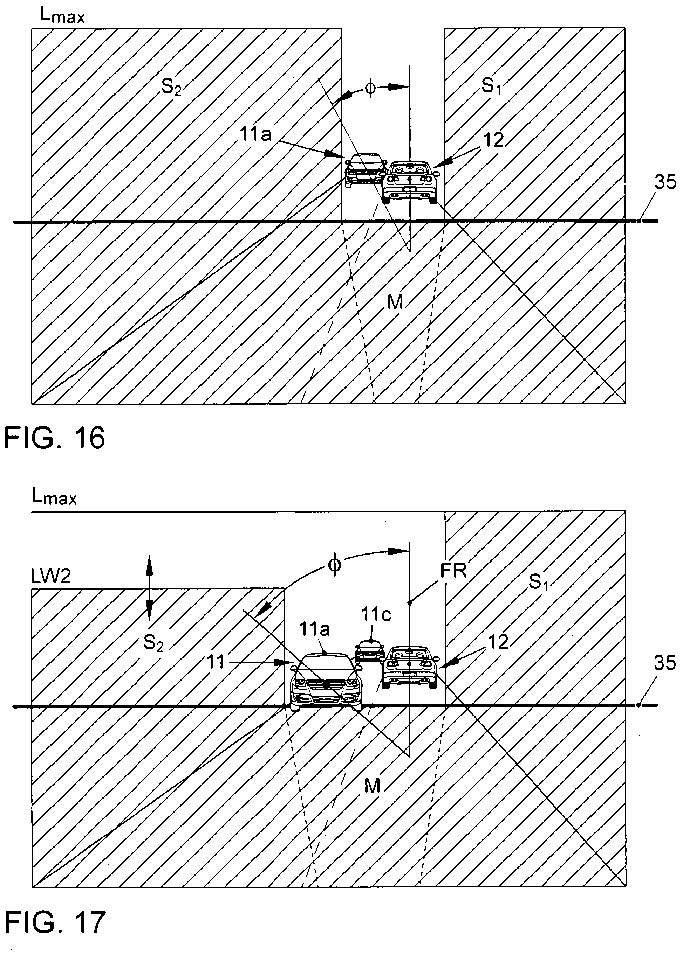

In den Figuren 16 bis 19 ist eine Weiterbildung der Regelung der zweiten Gesamtlichtverteilung 40 gezeigt. Wie in dem mit Bezug zu den Figuren 12 und 13 erläuterten Beispiel wird die Leuchtweite im Mittelbereich M so geregelt, dass sie bis zu dem nächsten erfassten Verkehrsteilnehmer 11, 12 reicht. Der Öffnungswinkel für den Mittelbereich M ist somit so gewählt, dass er die Richtung aller erfassten Verkehrsteilnehmer 11 und 12 in Fahrtrichtung vor dem eigenen Fahrzeug 10 erfasst. Auf der rechten Seite neben dem Mittelbereich M ist ein Seitenbereich $S_1$ mit größerer Leuchtweite gebildet. Gleichermaßen ist auf der linken Seite neben dem Mittelbereich M ein zweiter Seitenbereich $S_2$ mit erhöhter Leuchtweite gebildet.

Bei der in Figur 16 dargestellten Situation, bei welcher ein vorausfahrendes Fahrzeug 12 detektiert wurde und ein entgegenkommendes Fahrzeug 11a detektiert wurde, ist die Leuchtweite im linken Seitenbereich $S_2$ maximal, d.h. $L_{max}$. Nähert sich das entgegenkommende Fahrzeug 11a weiter dem Fahrzeug 10 mit der Scheinwerferanordnung an, ergibt sich das Problem, dass der Fahrer des Fahrzeugs 11a von dem linken Seitenbereich $S_2$ geblendet wird, wenn

der Mittelbereich M mit einem so geringen Öffnungswinkel wie möglich gebildet wird. Wenn sich das entgegenkommende Fahrzeug 11a dem eigenen Fahrzeug 10 annähert, wird der Öffnungswinkel für den Mittelbereich M vergrößert. Erreicht ein entgegenkommendes Fahrzeug 11a jedoch die linke vertikale Hell-Dunkel-Grenze zu dem Seitenbereich $S_2$, muss der linke Seitenbereich $S_2$ abgeschaltet werden, d.h. die Leuchtweite des linken Seitenbereichs $S_2$ muss auf die Leucht- weite des Mittelbereichs M abgesenkt werden, um eine Blendung des vorbeifahrenden Fahrzeugs 11a zu vermeiden. Je näher das Fahrzeug 11a an dem eigenen Fahrzeug 10 ist, umso höher ist die Geschwindigkeit, mit welcher die Leuchtweite des linken Seitenbereichs $S_2$ abgesenkt werden muss, um die Blendung zu vermeiden, da die relative Winkelgeschwindigkeit des vorbeifahrenden Fahrzeugs 11a sehr hoch wird und damit sehr wenig Zeit für das Absenken der Leuchtweite im linken Seitenbereich $S_2$ zur Verfügung steht.

Um die Gefahr einer Blendung eines vorbeifahrenden Fahrzeugs 11a zu vermeiden, wird bei dem erfindungs- gemäßen Verfahren die Leuchtweite $LW_2$ in Richtung des linken Seitenbereichs $S_2$ der zweiten Gesamtlichtverteilung in Abhängigkeit von dem horizontalen Winkel $\Phi$ zwischen der Fahrtrichtung FR des Fahrzeugs 10 und der Verbindungslinie von dem Fahrzeug 10 zu dem entgegenkommenden Fahrzeug 11a geregelt. Die Leuchtweite $LW_2$ im linken Sei- tenbereich $S_2$ der zweiten Gesamtlichtverteilung 40 wird rechtzeitig abgesenkt, so dass es nicht zu einer abrupten Veränderung der zweiten Gesamtlichtverteilung 40 kommt, wenn ein entgegenkommendes Fahrzeug 11a das eigene Fahrzeug 10 passiert. Die Leuchtweite im rechten Seitenbereich $S_1$ kann dabei unverändert bleiben. Die innere vertikale Hell-Dunkel-Grenze des zweiten Seitenbereichs $S_1$ wird in diesem Fall in Abhängigkeit von der Position des vorausfahrenden Fahrzeugs 12 geregelt.

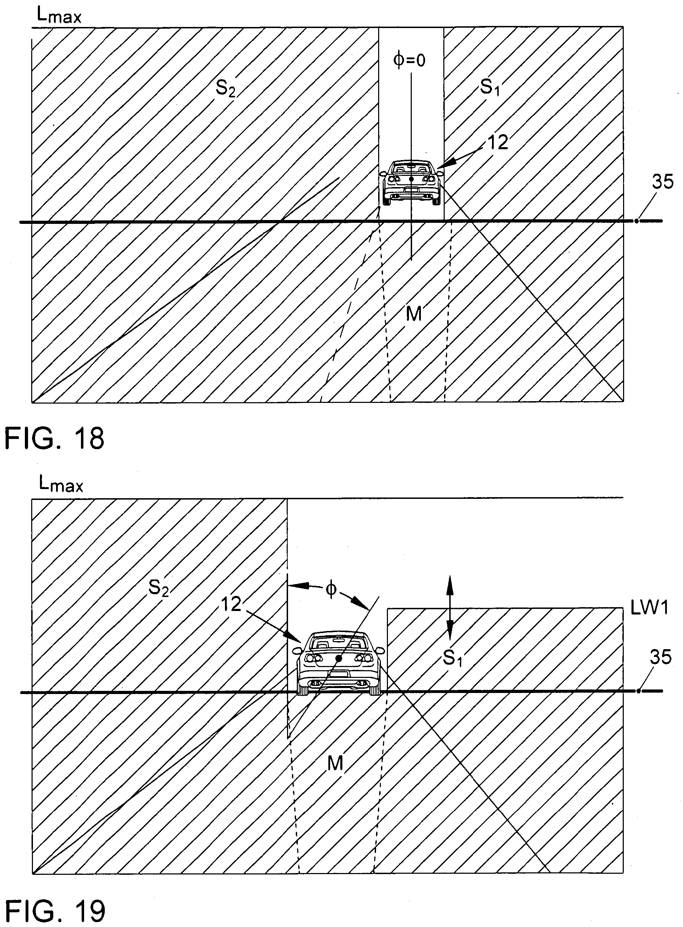

Mit Bezug zu den Figuren 18 und 19 wird die Regelung der zweiten Gesamtlichtverteilung bei einem Überholvorgang gezeigt. Vor dem eigenen Fahrzeug 10 befindet sich ein vorausfahrendes Fahrzeug 12, in dessen Richtung die Leuchtweite geringer als der Abstand zu dem vorausfahrenden Fahrzeug 12 ist. Bei einem Überholvorgang fährt das Fahrzeug 10 auf die Gegenfahrbahn und nähert sich dem vorausfahrenden Fahrzeug 12 an. In diesem Fall wird die Leuchtweite $LW_1$ im rechten Seitenbereich $S_1$ der Gesamtlichtverteilung 40 in Abhängigkeit von dem horizontalen Winkel $\Phi$ zwischen der Fahrtrichtung des Fahrzeugs 10 und der Verbindungslinie von dem Fahrzeug 10 zu dem vorausfahrenden Fahrzeug 12 geregelt. Je näher das Fahrzeug 10 an das vorausfahrende Fahrzeug 12 kommt, desto weiter wird die Leuchtweite $LW_1$ im rechten Seitenbereich $S_1$ abgesenkt. Die Regelung für die Absenkung des rechten Seitenbereichs $S_1$ kann automatisch auf Basis der von der Bildverarbeitungsvorrichtung 15 übertragenen Daten erfolgen. Die Regelung kann jedoch auch durch Setzen des Fahrtrichtungsanzeigers in Richtung der Gegenfahrbahn gegebenenfalls in Verbindung mit Daten zur Beschleunigung des Fahrzeugs 10 induziert werden.

Bei einem Überholvorgang fährt das Fahrzeug 10 auf die Gegenfahrbahn und nähert sich dem vorausfahrenden Fahrzeug 12 an. In diesem Fall wird die Leuchtweite $LW_1$ im rechten Seitenbereich $S_1$ der zweiten Gesamtlichtverteilung 40 in Abhängigkeit von dem horizontalen Winkel $\Phi$ zwischen der Fahrtrichtung des Fahrzeugs 10 und der Verbindungslinie von dem Fahrzeug 10 zu dem vorausfahrenden Fahrzeug 12 geregelt. Je näher das Fahrzeug 10 an das vorausfahrende Fahrzeug 12 kommt, desto weiter wird die Leuchtweite $LW_1$ im rechten Seitenbereich $S_1$ abgesenkt. Die Regelung für die Absenkung des rechten Seitenbereichs $S_1$ kann automatisch auf Basis der von der Bildverarbeitungsvorrichtung 15 übertragenen Daten erfolgen. Die Regelung kann jedoch auch durch Setzen des Fahrtrichtungsanzeigers in Richtung der Gegenfahrbahn gegebenenfalls in Verbindung mit Daten zur Beschleunigung des Fahrzeugs 10 induziert werden.

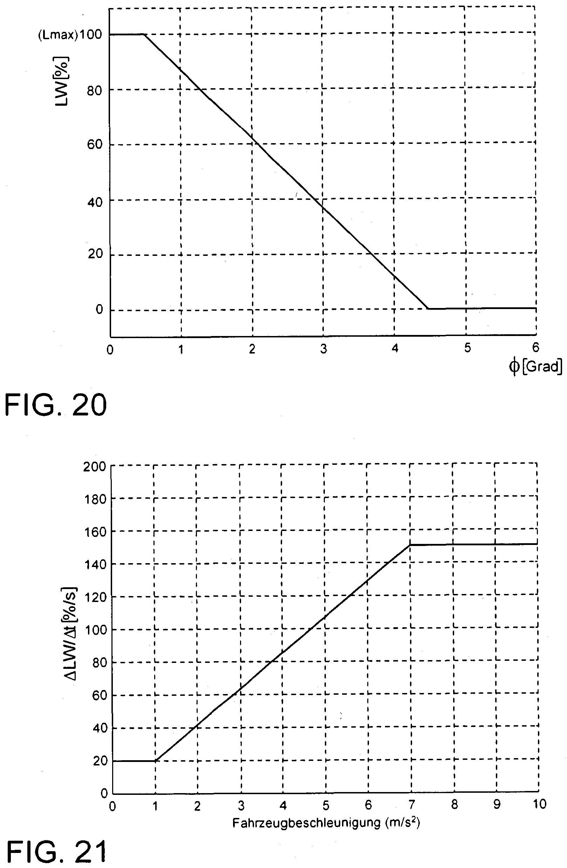

In Figur 20 ist ein Beispiel für einen funktionalen Zusammenhang der Leuchtweite LW, d.h. $LW_1$ bzw. $LW_2$, und dem horizontalen Winkel $\Phi$ zu einem anderen Verkehrsteilnehmer 11 bzw. 12 gezeigt. Bei diesem Beispiel ist der horizontale Winkel $\Phi$ sowohl in Richtung eines entgegenkommenden Fahrzeugs 11 als auch in Richtung eines vorausfahrenden Fahrzeugs 12, welches überholt wird, positiv. Bis zu einem Winkel von 0,5 Grad ist die Leuchtweite LW im Seitenbereich $S_1$ bzw. $S_2$ maximal, d.h. sie entspricht der Leuchtweite $L_{max}$. Bei größeren horizontalen Winkeln $\Phi$ wird die Leuchtweite LW linear abgesenkt, bis sie ab 4,5 Grad einen Minimalwert einnimmt, bei dem andere Verkehrsteilnehmer nicht mehr geblendet werden. Die Leuchtweite wird dabei wie folgt bestimmt:

$$LW = L_{max} \text{ für } \Phi < 0,5 \; Grad$$

$$LW = L_{max}(-0,25 \cdot \Phi + 1,125) \text{ für } 0,5 \; Grad \leq \Phi \leq 4,5 \; Grad \, ,$$

$$LW = 0 \text{ für } \Phi > 4,5 \; Grad$$

Die Steigung der in Figur 20 dargestellten Kurve kann auch variiert werden. Beispielsweise kann sie bis auf

0,4 Grad$^{-1}$ gesteigert werden oder bis auf 0,167 Grad$^{-1}$ abgesenkt werden. Die Grenzwinkel für den Abfall der Leuchtweite und das Erreichen der minimalen Leuchtweite können in diesem Fall auch variiert werden.

Wie vorstehend erläutert, kann außerdem von dem Steuergerät 16 das Zeitintervall für den Übergang von einer Gesamtlichtverteilung zu einer anderen Gesamtlichtverteilung vorgegeben werden. Dieses Zeitintervall wird dem Steuergerät 16 von dem Zeitgeber 27 übertragen. Das Zeitintervall bestimmt insbesondere ein Umschalten von der ersten Gesamtlichtverteilung 39 oder von der dritten Gesamtlichtverteilung 41 auf die zweite Gesamtlichtverteilung 40.

In Figur 21 ist ein Diagramm gezeigt, welches in der Einheit %/s die Veränderung der Leuchtweite ΔLW pro Zeiteinheit in Abhängigkeit von der Fahrzeugbeschleunigung darstellt. 0% bedeutet in diesem Fall, dass die Leuchtweite LW der Leuchtweite eines Abblendlichts entspricht und 100% entspricht der Leuchtweite einer Fernlichtfunktion. Eine Leuchtweitenveränderung von 100% pro Sekunde bewirkt somit ein Zeitintervall ΔT von einer Sekunde zum Wechsel von einer Leuchtweite für eine Abblendlichtfunktion zu einer Leuchtweite für ein maskiertes Dauerfernlicht. Entsprechend bedeutet eine Leuchtweitenveränderung von 20% pro Sekunde ein Zeitintervall ΔT von 5 Sekunden bis zur vollständigen Aktivierung des maskierten Dauerfernlichts.

Die Änderung der Leuchtweite ΔLW und damit das Zeitintervall ΔT für den Wechsel von einer Gesamtlichtverteilung zu einer anderen Gesamtlichtverteilung kann aus der Beschleunigung *B* wie folgt berechnet werden:

$$\Delta LW = B \cdot k_3$$

wobei für k$_3$ gilt

$$10\frac{\%s}{m} \le k_3 \le 200\frac{\%s}{m}$$

insbesondere

$$40\frac{\%s}{m} \le k_3 \le 80\frac{\%s}{m}$$

und bevorzugt gilt:

$$k_3 = 50\frac{\%s}{m}$$

und wobei gilt:

$$20\frac{\%}{s} \le \Delta LW \le 150\frac{\%}{s}$$

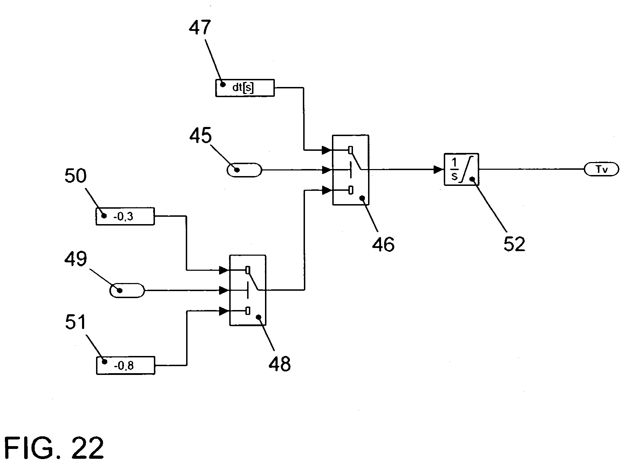

Im Folgenden wird mit Bezug zur Figur 22 beschrieben, wie mittels der Verzögerungseinheit 26 ein Zeitintervall Tv bestimmt wird, um welches das Umschalten zwischen zwei Gesamtlichtverteilungen oder zwei Leuchtzuständen einer Gesamtlichtverteilung in Abhängigkeit von der Erfassungsrate von anderen Verkehrteilnehmern 11, 12 bestimmt wird. Die Daten über das Auftreten und die Positionen anderer Verkehrsteilnehmer 11, 12 werden der Verzögerungseinheit 26 von der Bildverarbeitungsvorrichtung 15 über das Steuergerät 16 und den Fahrzeugbus 17 übertragen. Das Steuergerät 16 verarbeitet die von der Verzögerungseinheit 26 übertragene Verzögerungszeit so, dass ein Umschaltvorgang um dieses Zeitintervall Tv verzögert wird.

Im Folgenden wird ein Beispiel beschrieben, bei dem die Verzögerungseinheit 26 ein Zeitintervall Tv für die Verzögerungszeit für ein Umschalten von der ersten Gesamtlichtverteilung 39, d.h. zum Beispiel einem Abblendlicht, auf die zweite Gesamtlichtverteilung 40, d.h. zum Beispiel ein maskiertes Dauerfernlicht, bestimmt. Die Verzögerungseinheit 26 umfasst hierfür einen Signalgeber 45, der einen Wechsel von der zweiten Gesamtlichtverteilung 40 auf die erste Gesamtlichtverteilung 39 erfasst und bei jedem Wechsel ein Signal auf einen Schalter 46 gibt. Bei jedem Wechsel von der zweiten Gesamtlichtverteilung 40 auf die erste Gesamtlichtverteilung 39 wird durch das Signal des Signalgebers 45 der Schalter 46 so betrieben, dass auf seinen ersten Eingang ein positiver Zeitwert geschaltet wird, der von einem Zeitinkrementierer 47 erzeugt wird. Beispielsweise kann bei einem solchen Wechsel ein Zeitwert von 7 Sekunden auf den ersten Eingang des Schalters 46 gelegt werden, welcher diesen Wert an seinen Ausgang weiterleitet.

Nach einem Signal des Signalgebers 45 und der einmaligen Durchleitung des Zeitwerts des Zeitinkrementierers 47 schaltet der Schalter 46 auf einen zweiten Eingang, der mit dem Ausgang eines weiteren Schalters 48 verbunden ist. Der Schalter 48 ist mit einem weiteren Signalgeber 49 verbunden. Der Signalgeber 49 erfasst, ob die erste Gesamtlichtverteilung 39 aktiv ist. Wenn dies der Fall ist, schaltet er den ersten Eingang des Schalters 48 auf den Ausgang eines ersten Zeitgebers 50 für eine Abbaurate. Dieser erste Zeitgeber 50 gibt an den ersten Eingang des Schalters 48 kontinuierlich einen bestimmten negativen Zeitwert pro Zeiteinheit aus. Beispielsweise wird von dem ersten Zeitgeber 50 eine Abbaurate von $-0{,}3\ s^{-1}$ an den ersten Eingang des Schalters 48 ausgegeben, welcher diesen Wert über seinen Ausgang dem zweiten Eingang des Schalters 46 zuführt.

Wenn von dem Signalgeber 49 erfasst wird, dass die erste Gesamtlichtverteilung 39 nicht aktiv ist, schaltet sie den Schalter 48 auf den zweiten Eingang um, welcher mit einem zweiten Zeitgeber 51 für die Abbaurate verbunden ist. Der zweite Zeitgeber 51 bewirkt eine schnellere Verringerung der Verzögerungszeit. Beispielsweise überträgt der zweite Zeitgeber kontinuierlich an den zweiten Eingang des Schalters 48 eine Abbaurate von $-0{,}8\ s^{-1}$ welche an den zweiten Eingang des Schalters 46 weitergeleitet wird, wenn die erste Gesamtlichtverteilung 39 nicht aktiv ist.

Die am Ausgang des Schalters 46 erzeugten Zeitwerte werden an einen Integrator 52 übertragen, welcher die Werte aufsummiert. Der Integrator 52 enthält jedoch eine Begrenzung für die Verzögerungszeit Tv. Die Verzögerung Tv kann nur in einem Bereich zwischen 2 Sekunden und 200 Sekunden liegen. Die Verzögerungszeit Tv wird von dem Integrator 52 ausgegeben. Diese Verzögerungszeit Tv wird von der Verzögerungseinheit 26 an das Steuergerät 16 übertragen.

Es wird darauf hingewiesen, dass der Signalgeber 45 einen Wechsel von der zweiten Gesamtlichtverteilung 40 zu der ersten Gesamtlichtverteilung 39 insbesondere dann erfasst, wenn ein anderer Verkehrsteilnehmer, zum Beispiel ein entgegenkommendes Fahrzeug 11 oder ein vorausfahrendes Fahrzeug 12 auf der Nachbarfahrbahn erfasst worden ist. Somit ist die Verzögerungszeit Tv von der Erfassungsrate von anderen Verkehrsteilnehmern abhängig. Alternativ ist es jedoch auch möglich, dass der Signalgeber 45 unabhängig von einer tatsächlichen Veränderung der Gesamtlichtverteilung ein Signal an den Schalter 46 ausgibt, wenn ein anderer Verkehrsteilnehmer neu erfasst worden ist. Dabei handelt es sich bei dem anderen neu erfassten Verkehrsteilnehmer insbesondere um ein vorausfahrendes Fahrzeug 12 auf der Nachbarfahrbahn, welches das eigene Fahrzeug 10 überholt, oder ein entgegenkommendes Fahrzeug 11, welches den Erfassungsbereich der Kamera verlässt und an dem eigenen Fahrzeug vorbei fährt.

Die Verzögerungszeit Tv kann nicht nur zu einer Verzögerung beim Umschalten zwischen zwei Gesamtlichtverteilungen verwendet werden, sondern auch beim Umschalten zwischen zwei Leuchtzuständen einer Gesamtlichtverteilung. Wie vorstehend erläutert, kann beispielsweise die zweite Gesamtlichtverteilung 40, d.h. das maskierte Dauerfernlicht, zwei Leuchtzustände aufweisen. In einem ersten Standardleuchtzustand wird für einen erfassten Verkehrsteilnehmer oder mehrere erfasste Verkehrsteilnehmer 11, 12 ein Korridor gebildet, vor dem ein mittlerer Bereich M mit geringerer Leuchtweite gebildet ist, und seitlich daneben Seitenbereiche $S_1$ und $S_2$ mit größerer Leuchtweite gebildet sind (siehe Figuren 14 und 15). In einem anderen Leuchtzustand kann beispielsweise auf den linken Seitenbereich $S_2$ (bei Rechtsverkehr) verzichtet werden. In diesem Bereich wird dann dieselbe Leuchtweite bereitgestellt wie in dem Mittelbereich M. In diesem Fall ist es nicht erforderlich, wie im Bezug zu den Figuren 16 und 17 erläutert, die Leuchtweite im linken Bereich in Abhängigkeit von dem horizontalen Winkel $\Phi$ zu einem erfassten Verkehrsteilnehmer zu regeln. Wird in diesem Fall von dem Signalgeber 45 zu häufig zum Beispiel ein entgegenkommendes Fahrzeug 11 detektiert, wird die Leuchtweite in dem Seitenbereich $S_2$ nicht mehr in Abhängigkeit von dem horizontalen Winkel $\Phi$ zu einem entgegenkommenden Fahrzeug 11 geregelt, sondern es wird die Vergrößerung der Leuchtweite im Bereich $S_2$ um das Zeitintervall Tv verzögert, nachdem ein entgegenkommendes Fahrzeug 11 das eigene Fahrzeug 10 passiert hat. Wenn innerhalb dieses Zeitintervalls Tv erneut entgegenkommende Fahrzeuge 12 detektiert werden, und daher - wie mit Bezug zur Figur 22 erläutert - der Signalgeber 45 den Zeitwert des Zeitinkrementierers 47 dem Integrator 52 zuführt, wird die Leuchtweite im Seitenbereich $S_2$ für längere Zeit minimal bleiben und nicht zwischenzeitlich heraufgesetzt werden.

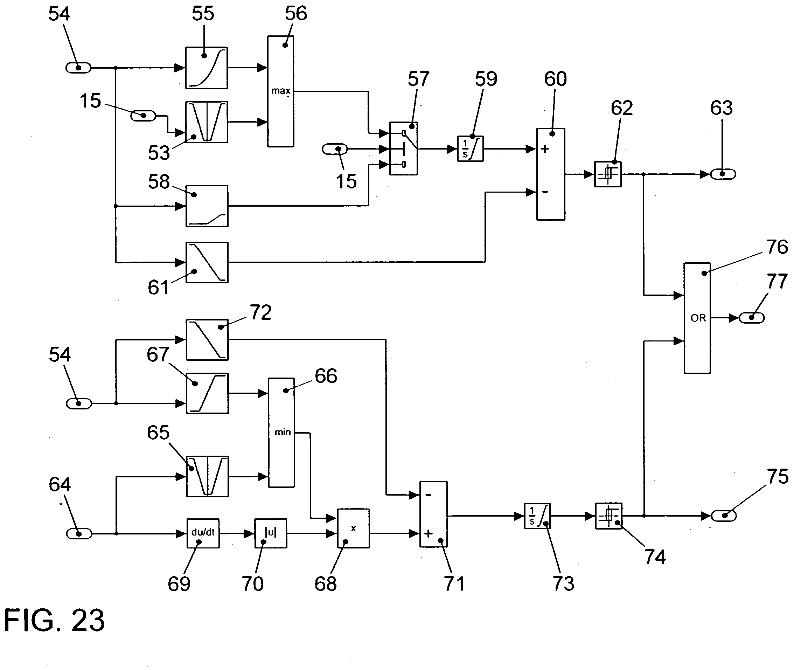

Des Weiteren kann in dem Steuergerät 16 bestimmt werden, unter welchen Bedingungen überhaupt zwischen zwei Gesamtlichtverteilungen oder zwei Leuchtzuständen einer Gesamtlichtverteilung umgeschaltet wird. Bei der Entscheidung, ob überhaupt eine Umschaltung erfolgt, kann das Steuergerät 16 die Statistik der erfassten Verkehrsteilnehmer und/oder die zeitliche Entwicklung des Lenkwinkels berücksichtigen. Dies wird im Folgenden anhand der Umschaltung zwischen der zweiten Gesamtlichtverteilung 40 und der dritten Gesamtlichtverteilung 41 mit Bezug zur Figur 23 erläutert:

Von der Bildverarbeitungsvorrichtung 15 wird dem Steuergerät 16 ein Signal übertragen, wenn ein neuer Verkehrsteilnehmer, zum Beispiel ein neues Fahrzeug, erfasst wurde. Dieses Signal wird dem Schalter 57 als Steuersignal zugeführt. Der Schalter 57 schaltet daraufhin den in Figur 23 gezeigten oberen ersten Eingang durch, welcher mit dem Ausgang der Logikeinheit 56 verbunden ist. Die Logikeinheit 56 weist zwei Eingänge auf, über welche Schrittweiten zugeführt werden. Über den ersten Eingang wird eine positionsabhängige Schrittweite der Logikeinheit 56 zugeführt. Hierfür wird die von der Bildverarbeitungsvorrichtung 15 übertragene Position des Objekts einem positionsabhängigen ersten Schrittweiteninkrementator 53 zugeführt, welcher mittels einer Kennlinie der Position des neuen Objekts eine Schrittweite zuordnet und sie an die Logikeinheit 56 ausgibt. Dem zweiten Eingang der Logikeinheit 56 wird eine geschwindigkeitsabhängige Schrittweite zugeführt. Hierfür wird mittels des Geschwindigkeitsmessers 54 die aktuelle Fahrzeuggeschwindigkeit einem geschwindigkeitsabhängigen zweiten Schrittweiteninkrementator 55 zugeführt. Anhand einer Kennlinie ermittelt der zweite Schrittweiteninkrementator 55 eine Schrittweite in Abhängigkeit von der Fahrzeuggeschwindigkeit und überträgt sie an die Logikeinheit 56. Die Logikeinheit 56 ermittelt die maximale Schrittweite, welche über die beiden Eingänge übertragen wurden, und überträgt diese maximale Schrittweite an den ersten Eingang des Schalters 57, welcher sie an einen Integrator 59 weiterleitet.

Danach schaltet der Schalter 57 auf den zweiten - in Figur 23 unten dargestellten - Eingang, der mit einem geschwindigkeitsabhängigen Schrittweitendekrementator 58 verbunden ist. Dem Schrittweitendekrementator 58 wird mittels des Geschwindigkeitsmessers 54 auch die aktuelle Fahrzeuggeschwindigkeit zugeführt. Anhand einer Kennlinie bestimmt der Schrittweitendekrementator 58 einen Schrittweitenwert, um den die Schrittweite des Integrators 59 pro Zeiteinheit dekrementiert werden soll. Der Schrittweitendekrementator 58 gibt somit eine geschwindigkeitsabhängige Abbaurate für die Schrittweite vor.

Die Schrittweite, welche von dem Integrator 59 bestimmt wird, kann beispielsweise auf einen Bereich von 30 bis 300 begrenzt werden. Die von dem Schrittweitendekrementator 58 vorgegebene Abbaurate kann in diesem Fall in einem Bereich von -40 bis -30 pro Sekunde liegen.

Des Weiteren erfolgt eine geschwindigkeitsabhängige Verschiebung des Schrittweitenwertes, um die Ein- und Ausschaltschwellen für die dritte Gesamtlichtverteilung 41 direkt über die Fahrzeuggeschwindigkeit zu beeinflussen. Hierfür wird die aktuelle Geschwindigkeit von dem Geschwindigkeitsmesser 54 ferner der Verschiebeeinheit 61 zugeführt, welche mittels einer Kennlinie eine Verschiebung für die Schrittweite bestimmt. Die von dem Integrator 59 ausgegebene Schrittweite wird einem positiven Eingang eines Rechenglieds 60 zugeführt, die von der Verschiebeeinheit 61 ausgegebene Schrittweite einem negativen Eingang des Rechenglieds 60 zugeführt. Das Rechenglied 60 subtrahiert die von der Verschiebeeinheit 61 übermittelte Schrittweite von der von dem Integrator 59 ausgegebenen Schrittweite und gibt das Ergebnis an eine Hysterese-Einheit 62 aus. Die Hysterese-Einheit 62 gibt Umschaltschwellen vor, so dass ein zu häufiges Umschalten zwischen den beiden Gesamtlichtverteilungen verhindert wird.

Schließlich wird in Abhängigkeit von der Schrittweite, die von dem Rechenglied 60 ausgegeben wird, über die erste Ausgabeeinheit 63 ein Kennzeichensignal entweder für die zweite oder für die dritte Gesamtlichtverteilung 40, 41 ausgegeben. Das Steuerglied 16 kann die Scheinwerferanordnung in Abhängigkeit von diesem Kennzeichensignal ansteuern. Es ist jedoch auch möglich, dass sie außerdem Lenkwinkeländerungen des Fahrzeugs 10 berücksichtigt, wie es im Folgenden erläutert wird:

In diesem Fall wird ferner kontinuierlich der Lenkwinkel des Fahrzeugs von einer Lenkwinkelerfassungseinheit 64 erfasst. Der erfasste Lenkwinkel wird einer Erzeugungseinheit 65 zum Erzeugen eines Gewichtungsfaktors zugeführt. Die Erzeugungseinheit 65 gibt einen lenkwinkelabhängigen Gewichtungsfaktor an den ersten Eingang einer Logikeinheit 66 aus.

Ferner wird die von dem Geschwindigkeitsmesser 54 ermittelte Geschwindigkeit einer zweiten Erzeugungseinheit 67 zum Erzeugen eines weiteren Gewichtungsfaktors zugeführt. Mittels einer Kennlinie erzeugt diese Einheit 67 einen Gewichtungsfaktor, welcher dem zweiten Eingang der Logikeinheit 66 zugeführt wird. Die Logikeinheit 66 bestimmt, welcher der beiden zugeführten Gewichtungsfaktoren der geringere ist und leitet diesen dem ersten Eingang einer Gewichtungseinheit 68 zu.

Der von der Lenkwinkelerfassungseinheit 64 bestimmte Lenkwinkel wird einem Differenziator 69 zugeführt, welcher die zeitliche Lenkwinkeländerung bestimmt. In dem Rechenglied 70 wird der Absolutbetrag der Winkeländerung bestimmt und dem zweiten Eingang der Gewichtungseinheit 68 zugeführt. In der Gewichtungseinheit 68 wird somit in Abhängigkeit von Kennlinien für die Fahrzeuggeschwindigkeit und in Abhängigkeit von dem Lenkwinkel bzw. der Lenkwinkeländerung eine Kenngröße ermittelt, welche einem positiven Eingang eines weiteren Rechenglieds 71 zugeführt wird. Die aktuelle Fahrzeuggeschwindigkeit wird von dem Geschwindigkeitsmesser 54 des weiteren einem Schwellwerterzeuger 72 zugeführt, welcher mittels einer Kennlinie einen geschwindigkeitsabhängigen Schwellenwert erzeugt und einem negativen Eingang des Rechenglieds 71 zuführt. In dem Rechenglied 71 wird der Schwellwert von der Kenngröße abgezogen und das Ergebnis einem Integrator 73 zugeführt. Der von dem Schwellwerterzeuger 72 erzeugte Schwellwert ist so gewählt, dass sich bei keiner bzw. nur einer geringen Lenkwinkeländerung ein Eingangswert für die Gewichtungseinheit 71 ergibt, welcher einen Abbau der von dem Integrator 73 ermittelten Kenngröße bewirkt. Die Schwelle zum Abbau der von dem Integrator 73 ermittelten Kenngröße für die Lenkwinkeländerung ist in einem Bereich zwischen 2° pro Sekunde bis 3° pro Sekunde.

Die von dem Integrator 73 aufintegrierte Kenngröße gibt eine Lenkwinkeländerung wieder. Der Integrator 73 überträgt die ermittelte Lenkwinkeländerung an eine Hysterese-Einheit 74, welche Ein- und Ausschaltschwellen für den Umschaltvorgang realisiert, um ein zu häufiges Hin- und Herschalten zu verhindern. Die Hysterese-Einheit 74 ist beispielsweise so eingestellt, dass oberhalb von aufintegrierten Lenkwinkeländerungen von etwa 200 Grad ein Umschalten von der zweiten Gesamtlichtverteilung 40 auf die dritte Gesamtlichtverteilung 41 erfolgt. Unterschreitet die aufintegrierte Lenkwinkeländerung etwa 100 Grad, wird die zweite Gesamtlichtverteilung wieder aktiv. Die Hysterese-Einheit 74 gibt über die zweite Ausgabeeinheit 75 ein Kennsignal aus, welches entweder die zweite oder die dritte Gesamtlichtverteilung 40, 41 kennzeichnet.

Das Steuergerät 16 kann mittels der ersten Ausgabeeinheit 63 oder mittels der zweiten Ausgabeeinheit 75 bestimmen, welche Gesamtlichtverteilung angesteuert werden soll. In dem Steuergerät 16 kann außerdem eine weitere Logikeinheit 76 vorgesehen sein, der die Kennsignale der ersten Ausgabeeinheit 63 und der zweiten Ausgabeeinheit 75 zugeführt werden. Aus diesen beiden Eingangssignalen ermittelt die Logikeinheit 76 ein Kennsignal, welches über die dritte Ausgabeeinheit 77 ausgegeben wird. In diesem Fall wird ein Kennsignal für die dritte Gesamtlichtverteilung 41 erzeugt, wenn ein solches Kennsignal von der ersten Ausgabeeinheit 63 oder der zweiten Ausgabeeinheit 75 ausgegeben wird. Dieses Kennsignal kann das Steuergerät 16 schließlich dazu verwenden, mittels der Scheinwerferanordnung die entsprechende Gesamtlichtverteilung zu erzeugen.

**Bezugszeichenliste**

| 1 | rechter Scheinwerfer |
|---|---|
| 2 | linker Scheinwerfer |
| 3 | Lichtquelle |
| 4 | Gehäuse |
| 5 | Lichtscheibe |
| 6 | Reflektor |
| 7 | Projektionslinse |
| 8 | erste Blende |
| 8a | Abschattungskante der ersten Blende |
| 9 | zweite Blende |
| 9a | Abschattungskante der zweiten Blende |
| 10 | Fahrzeug mit der Scheinwerferanordnung |
| 11 | entgegenkommendes Fahrzeug |
| 12 | vorausfahrendes Fahrzeug |
| 13 | Steuergerät für den rechten Scheinwerfer |
| 14 | Steuergerät für den linken Scheinwerfer |
| 15 | Bildverarbeitungsvorrichtung (Einrichtung zum Erfassen anderer Verkehrsteilnehmer) |
| 16 | Steuergerät |
| 17 | Fahrzeugbus |
| 18 | Kamera |
| 19 | erster Aktuator für den rechten Scheinwerfer |
| 20 | zweiter Aktuator für den rechten Scheinwerfer |
| 21 | dritter Aktuator für den rechten Scheinwerfer |
| 22 | erster Aktuator für den linken Scheinwerfer |
| 23 | zweiter Aktuator für den linken Scheinwerfer |
| 24 | dritter Aktuator für den linken Scheinwerfer |
| 25 | Einrichtung zum Erfassen des Fahrverhaltens |
| 26 | Verzögerungseinheit |
| 27 | Zeitgeber |
| 28 | Navigationsgerät |
| 29 | GPS-Empfänger |
| 30 | Mittelachse |
| 31 | Extraktionseinheit |
| 32 | Klassifikator |
| 33 | Konfidenzeinheit |
| 34 | Zuordnungseinheit |
| 35 | Horizontalebene |
| 36 | Mittelachse |
| 37 | horizontale Achse |
| 38 | vertikale Achse |
| 39 | erste Gesamtlichtverteilung/ Abblendlicht |

40 zweite Gesamtlichtverteilung/ maskiertes Dauerfernlicht
41 dritte Gesamtlichtverteilung/ gleitende Leuchtweite
42 15°-Anstieg der ersten Gesamtlichtverteilung
43 Leuchtweite
44 Leuchtweite
45 Signalgeber
46 Schalter
47 Zeitinkrementierer
48 Schalter
49 Signalgeber
50 erster Zeitgeber für Abbaurate
51 zweiter Zeitgeber für Abbaurate
52 Integrator
53 positionsabhängiger erster Schrittweiteninkrementator
54 Geschwindigkeitsmesser
55 positionsabhängiger zweiter Schrittweiteninkrementator
56 Logikeinheit
57 Schalter
58 positionsabhängiger Schrittweiteninkrementator
59 Integrator
60 Rechenglied
61 Verschiebeeinheit
62 Hystereseeinheit
63 erste Ausgabeeinheit
64 Lenkwinkelerfassungseinheit
65 erste Gewichtungsfaktor-Erzeugungseinheit
66 Logikeinheit
67 zweite Gewichtungsfaktor-Erzeugungseinheit
68 Gewichtungseinheit
69 Differenziator
70 Rechenglied
73 Schwellwerterzeuger

100-170 Verfahrensschritte
180-280 Verfahrensschritte

## Patentansprüche

1. Verfahren zum Steuern einer Scheinwerferanordnung für ein Fahrzeug (10), wobei die Scheinwerferanordnung zwei beabstandete Scheinwerfer (1, 2) aufweist, bei dem

- ein Verkehrsteilnehmer (11, 12) in Fahrtrichtung vor dem Fahrzeug (10) erfasst wird und
- eine erste Gesamtlichtverteilung (39) erzeugbar ist, bei der die Leuchtweite auf einer ersten Seite einer Mittelachse (36) größer ist als auf der anderen, zweiten Seite dieser Mittelachse (36) und die Leuchtweite auf der anderen, zweiten Seite bis zu einer Abschneidegrenze reicht, damit ein erfasster Verkehrsteilnehmer nicht geblendet wird, wobei die erste Gesamtlichtverteilung (39) von der Überlagerung einer ersten Teillichtverteilung des ersten Scheinwerfers (1) und einer zweiten Teillichtverteilung des zweiten Scheinwerfers (2) erzeugt wird, wobei die größere Leuchtweite auf der ersten Seite der Mittelachse (36) von der Lichtemission beider Scheinwerfer (1, 2) erzeugt wird, und
- eine zweite Gesamtlichtverteilung (40) erzeugbar ist, die von der Überlagerung der ersten Teillichtverteilung des ersten Scheinwerfers (1) und der zweiten Teillichtverteilung des zweiten Scheinwerfers (2) erzeugt wird, bei der die Gesamtlichtverteilung (40) so regelbar ist, dass sie in Richtung zumindest des erfassten Verkehrsteilnehmers (12) einen Mittelbereich (M) mit einer Leuchtweite aufweist, die geringer als der Abstand zu dem erfassten Verkehrsteilnehmer (12) ist und die beidseitig neben dem Mittelbereich (M) zwei Seitenbereiche ($S_1$, $S_2$) mit Leuchtweiten aufweist, die größer als der Abstand zu dem erfassten Verkehrsteilnehmer (12) sind, wobei
- der Abstand so definiert ist, dass er, wenn der erfasste Verkehrsteilnehmer (12) ein anderes Fahrzeug ist, bis zur Stoßstange des anderen Fahrzeugs reicht, oder, wenn der erfasste Verkehrsteilnehmer (12) ein Radfahrer

28

oder Fußgänger ist, bis zu dem Punkt reicht, bei dem der erfasste Verkehrsteilnehmer (12) den Boden berührt, **dadurch gekennzeichnet, dass**

- beim Umschalten von der ersten Gesamtlichtverteilung (39) auf die zweite Gesamtlichtverteilung (40), um eine Blendung des anderen Verkehrsteilnehmers(11) während des Umschaltens von der ersten Gesamtlichtverteilung (39) zur zweiten Gesamtlichtverteilung (40) zu vermeiden, zunächst die Leuchtweite zumindest des zweiten Scheinwerfers (2) auf der ersten Seite der Mittelachse (36) zumindest so weit verringert wird, dass sie kleiner ist als der Abstand zu dem erfassten Verkehrsteilnehmer (11, 12), danach die Lichtemissionsrichtung (L) des zweiten Scheinwerfers (2) um eine senkrechte Schwenkachse (38) geschwenkt wird und danach schließlich die zweite Gesamtlichtverteilung (40) erzeugt wird.

2.  Verfahren nach Anspruch 1,
    **dadurch gekennzeichnet, dass**
    die erste Gesamtlichtverteilung (39) eine Abblendlichtfunktion bereitstellt.

3.  Verfahren nach einem der vorhergehenden Ansprüche,
    **dadurch gekennzeichnet, dass**
    bei der zweiten Gesamtlichtverteilung (40) die Leuchtweite in Richtung des erfassten Verkehrsteilnehmers (12) so geregelt wird, dass sie bis zu dem erfassten Verkehrsteilnehmer (12) reicht.

4.  Verfahren nach einem der vorhergehenden Ansprüche,
    **dadurch gekennzeichnet, dass**
    bei der zweiten Gesamtlichtverteilung (40) die Seitenbereiche ($S_1$, $S_2$) jeweils eine vertikale Hell-Dunkel-Grenze zu dem Mittelbereich (M) bilden.

5.  Verfahren nach einem der vorhergehenden Ansprüche,
    **dadurch gekennzeichnet, dass**
    das Umschalten von der einen Gesamtlichtverteilung (39) auf die andere Gesamtlichtverteilung (40) automatisch in Abhängigkeit von dem Erfassen des Verkehrsteilnehmers (12) erfolgt.

6.  Verfahren nach einem der vorhergehenden Ansprüche,
    **dadurch gekennzeichnet, dass**
    der Verkehrsteilnehmer (11, 12) in Fahrtrichtung vor dem Fahrzeug (10) dadurch erfasst wird, dass

    - ein Bild eines Verkehrsbereichs im sichtbaren Spektralbereich aufgenommen wird,
    - aus dem Bild zusammenhängende Bereiche mit einer Helligkeit extrahiert werden, die einen Schwellwert überschreiten,
    - die Bereiche zumindest in Abhängigkeit von ihrer Größe klassifiziert werden,
    - für jeden Bereich ein Konfidenzwert, der ein Maß für die Ähnlichkeit des Bereichs des Bildes zu einem Fahrzeuglicht darstellt, aus der Klassifikation des Bereichs und einer physikalischen Größe, die dem Bereich zugeordnet ist, gebildet wird und
    - in Abhängigkeit von dem Konfidenzwert bestimmt wird, ob ein Bereich einem Fahrzeuglicht zugeordnet wird.

7.  Scheinwerferanordnung für ein Fahrzeug (10) mit

    - zumindest zwei beabstandeten Scheinwerfern (1, 2) zum Erzeugen einer Gesamtlichtverteilung (39, 40),
    - einer Einrichtung (15, 18) zum Erfassen von Verkehrsteilnehmern (11, 12) in Fahrtrichtung vor dem Fahrzeug (10) und
    - einer Steuervorrichtung, welche mit der Verkehrsteilnehmer-Erfassungsvorrichtung (18, 20) gekoppelt ist, mit welcher eine erste Gesamtlichtverteilung (39) erzeugbar ist, bei der die Leuchtweite auf einer ersten Seite einer Mittelachse (36) größer ist als auf der anderen, zweiten Seite dieser Mittelachse (36) und die Leuchtweite auf der anderen, zweiten Seite bis zu einer Abschneidegrenze reicht, damit ein erfasster Verkehrsteilnehmer nicht geblendet wird, wobei die erste Gesamtlichtverteilung (39) von der Überlagerung einer ersten Teillichtverteilung des ersten Scheinwerfers (1) und einer zweiten Teillichtverteilung des zweiten Scheinwerfers (2) erzeugbar ist, wobei die größere Leuchtweite auf der ersten Seite der Mittelachse (36) von der Lichtemission beider Scheinwerfer (1, 2) erzeugbar ist, und
    - mit welcher eine zweite Gesamtlichtverteilung (40) erzeugbar ist, die von der Überlagerung der ersten Teillichtverteilung des ersten Scheinwerfers (1) und der zweiten Teillichtverteilung des zweiten Scheinwerfers erzeugbar ist, bei der die Gesamtlichtverteilung (40) so regelbar ist, dass sie in Richtung des erfassten Verkehrsteilnehmers (12) einen Mittelbereich (M) mit einer Leuchtweite aufweist, die geringer als der Abstand zu dem erfassten Verkehrsteilnehmer (12) ist und die beidseitig neben dem Mittelbereich (M) zwei Seitenbereiche (S₁, S₂) mit Leuchtweiten aufweist, die größer als der Abstand zu dem erfassten Verkehrsteilnehmer (12) sind, wobei

- der Abstand so definiert ist, dass er, wenn der erfasste Verkehrsteilnehmer (12) ein anderes Fahrzeug ist, bis zur Stoßstange des anderen Fahrzeugs reicht, oder, wenn der erfasste Verkehrsteilnehmer (12) ein Radfahrer oder Fußgänger ist, bis zu dem Punkt reicht, bei dem der erfasste Verkehrsteilnehmer (12) den Boden berührt, **dadurch gekennzeichnet, dass**

- mit der Steuervorrichtung (16) die Scheinwerfer (1, 2) beim Umschalten von der ersten Gesamtlichtverteilung (39) auf die zweite Gesamtlichtverteilung (40) so ansteuerbar sind, dass, um eine Blendung des anderen Verkehrsteilnehmers(11) während des Umschaltens von der ersten Gesamtlichtverteilung (39) zur zweiten Gesamtlichtverteilung (40) zu vermeiden, zunächst die Leuchtweite zumindest des zweiten Scheinwerfers (2) auf der ersten Seite der Mittelachse (36) zumindest so weit verringert wird, dass sie kleiner ist als der der Abstand zu dem erfassten Verkehrsteilnehmer (12), danach die Lichtemissionsrichtung (L) des zweiten Scheinwerfers (2) um eine senkrechte Schwenkachse (38) geschwenkt wird und danach schließlich die zweite Gesamtlichtverteilung (40) erzeugt wird.

## Claims

1. Method for controlling a headlight arrangement for a vehicle (10), the headlight arrangement having two mutually spaced headlights (1, 2), in the case of which method

   - a road user (11, 12) is detected in the driving direction in front of the vehicle (10), and
   - it is possible to produce a first overall light distribution (39) in the case of which the light range is greater on a first side of a center axis (36) than on the other, second side of said center axis (36), and the light range on the other, second side reaches up to a cut-off boundary so that a detected road user is not blinded, wherein the first overall light distribution (39) is produced by the superposition of a first partial light distribution of the first headlight (1) and a second partial light distribution of the second headlight (2), wherein the greater light range on the first side of the centre axis (36) is produced by the light emission of both headlights (1, 2), and
   - it is possible to produce a second overall light distribution (40) which is produced by the superposition of the first partial light distribution of the first headlight (1) and the second partial light distribution of the second headlight (2), in the case of which the overall light distribution (40) can be regulated so that it has a central area (M) having a light range in the direction of at least the detected road user (12) that is smaller than the distance to the detected road user (12), and which has on both sides next to the central area (M) two lateral areas (S₁, S₂) having light ranges that are greater than the distance to the detected road user (12), wherein
   - the distance is defined such that, if the detected road user (12) is another vehicle, said distance reaches up to the bumper of the other vehicle or that, if the detected road user (12) is a cyclist or pedestrian, said distance reaches up to the point at which the detected road user (12) touches the ground, **characterized in that**
   - upon switchover from the first overall light distribution (39) to the second overall light distribution (40), in order to avoid blinding of the other road user (11) during the switchover from the first overall light distribution (39) to the second overall light distribution (40), firstly the light range of at least the second headlight (2) is reduced on the first side of the center axis (36) at least to the extent that it is smaller than the distance to the detected road user (11, 12), thereafter the light emission direction (L) of the second headlight (2) is swivelled about a perpendicular swivel axis (38) and thereafter finally the second overall light distribution (40) is produced.

2. Method according to Claim 1, **characterized in that** the first overall light distribution (39) provides a low beam function.

3. Method according to one of the preceding claims, **characterized in that**, in the case of the second overall light distribution (40), the light range in the direction of the detected road user (12) is regulated so that it reaches up to the detected road user (12).

4. Method according to one of the preceding claims, **characterized in that**, in the case of the second overall light distribution (40), the lateral areas (S₁, S₂) respectively form a vertical light/dark boundary relative to the central area (M).

5. Method according to one of the preceding claims, **characterized in that** switchover from the first overall light distribution (39) to the other overall light distribution (40) is performed automatically as a function of the detection of the road user (12).

6. Method according to one of the preceding claims, **characterized in that** the road user (11, 12) is detected in the driving direction in front of the vehicle (10) by virtue of the fact that

- an image of a traffic area is recorded in the visible spectral range, and
- coherent areas with a brightness that exceed a threshold value are extracted from the image,
- the areas are classified at least as a function of their size,
- for each area a confidence value that is a measure of the similarity of the area of the image to a vehicle light is formed from the classification of the area and a physical variable that is assigned to the area, and
- it is determined as a function of the confidence value whether an area is assigned to a vehicle light.

7. Headlight arrangement for a vehicle (10), having

- at least two mutually spaced headlights (1, 2) for producing an overall light distribution (39, 40),
- a device (15, 18) for detecting road users (11, 12) in the driving direction in front of the vehicle (10), and
- a control device that is coupled to the road user detection device (18, 20), can be used to produce a first overall light distribution (39) in the case of which the light range on a first side of a center axis (36) is greater than on the other, second side of said center axis (36), and the light range on the other, second side reaches up to a cut-off boundary so that a detected road user is not blinded, wherein the first overall light distribution (39) can be produced by the superposition of a first partial light distribution of the first headlight (1) and a second partial light distribution of the second headlight (2), wherein the greater light range on the first side of the centre axis (36) can be produced by the light emission of both headlights (1, 2), and
- can be used to produce a second overall light distribution (40), which can be produced by the superposition of the first partial light distribution of the first headlight (1) and the second partial light distribution of the second headlight (2), in the case of which the overall light distribution (40) can be regulated so that in the direction of the detected road user (12) it has a central area (M) having a light range that is smaller than the distance to the detected road user (12), and which has on both sides next to the central area (M) two lateral areas ($S_1$, $S_2$) having light ranges that are greater than the distance to the detected road user (12), wherein
- the distance is defined such that, if the detected road user (12) is another vehicle, said distance reaches up to the bumper of the other vehicle or that, if the detected road user (12) is a cyclist or pedestrian, said distance reaches up to the point at which the detected road user (12) touches the ground,
**characterized in that**
- upon switchover from the first overall light distribution (39) to the second overall light distribution (40) the control device (16) can be used to drive the headlights (1, 2) so that in order to avoid blinding of the other road user (11) during the switchover from the first overall light distribution (39) to the second overall light distribution (40), firstly the light range of at least the second headlight (2) is reduced on the first side of the center axis (36) at least to the extent that it is smaller than the distance to the detected road user (12), thereafter the light emission direction (L) of the second headlight (2) is swivelled about a perpendicular swivel axis (38) and thereafter finally the second overall light distribution (40) is produced.

**Revendications**

1. Procédé destiné à commander un ensemble de phares d'un véhicule (10), l'ensemble de phares comportant deux phares (1, 2) espacés, dans lequel

- un usager de la route (11, 12) se trouvant devant le véhicule (10) dans le sens de la marche est détecté et
- une première répartition lumineuse globale (39) peut être produite, pour laquelle la portée d'éclairement sur un premier côté d'un axe médian (36) est plus grande que sur l'autre deuxième côté de cet axe médian (36), et la portée d'éclairement sur l'autre deuxième côté atteint une limite de coupure afin qu'un usager de la route détecté ne soit pas ébloui, la première répartition lumineuse globale (39) étant produite par la superposition d'une première répartition lumineuse partielle du premier phare (1) et d'une deuxième répartition lumineuse partielle du deuxième phare (2), la portée d'éclairement plus grande étant produite sur le premier côté de l'axe médian (36) par l'émission lumineuse des deux phares (1, 2), et
- une deuxième répartition lumineuse globale (40) peut être produite, qui est produite par la superposition de la première répartition lumineuse partielle du premier phare (1) et de la deuxième répartition lumineuse partielle du deuxième phare (2), pour laquelle la répartition lumineuse globale (40) peut être régulée de telle sorte que, dans la direction d'au moins l'usager de la route (12) détecté, elle comporte une plage centrale (M) dotée d'une portée d'éclairement qui est plus faible que la distance à l'usager de la route (12) détecté et qui, des deux côtés près de la plage centrale (M), comporte deux plages latérales ($S_1$, $S_2$) dotées de portées d'éclairement qui sont plus grandes que la distance à l'usager de la route (12) détecté,
- la distance étant définie de telle sorte que, quand l'usager de la route (12) détecté est un autre véhicule, elle atteint le pare-chocs de l'autre véhicule ou, quand l'usager de la route (12) détecté est un cycliste ou un piéton, elle atteint le point où l'usager de la route (12) détecté touche le sol, **caractérisé en ce que**
- lors de la commutation à partir de la première répartition lumineuse globale (39) vers la deuxième répartition lumineuse globale (40), afin d'éviter un éblouissement de l'autre usager de la route (11) pendant la commutation à partir de la première répartition lumineuse globale (39) vers la deuxième répartition lumineuse globale (40), la portée d'éclairement d'au moins le deuxième phare (2) sur le premier côté de l'axe médian (36) est d'abord réduite au moins suffisamment pour être plus petite que la distance à l'usager de la route (11, 12) détecté, puis la direction d'émission lumineuse (L) du deuxième phare (2) est pivotée autour d'un axe de pivotement (38) perpendiculaire, et enfin la deuxième répartition lumineuse globale (40) est produite.

2. Procédé selon la revendication 1,
   **caractérisé en ce que**
   la première répartition lumineuse globale (39) fournit une fonction de feu de croisement.

3. Procédé selon l'une des revendications précédentes,
   **caractérisé en ce que**,
   pour la deuxième répartition lumineuse globale (40), la portée d'éclairement dans la direction de l'usager de la route (12) détecté est régulée de telle sorte qu'elle atteint l'usager de la route (12) détecté.

4. Procédé selon l'une des revendications précédentes,
   **caractérisé en ce que**,
   pour la deuxième répartition lumineuse globale (40), les plages latérales ($S_1$, $S_2$) forment respectivement une coupure verticale par rapport à la plage centrale (M).

5. Procédé selon l'une des revendications précédentes,
   **caractérisé en ce que**
   la commutation à partir de la répartition lumineuse globale (39) vers l'autre répartition lumineuse globale (40) s'effectue automatiquement en fonction de la détection de l'usager de la route (12).

6. Procédé selon l'une des revendications précédentes,
   **caractérisé en ce que**
   l'usager de la route (11, 12) se trouvant devant le véhicule (10) dans le sens de la marche est détecté par le fait que

   - une image d'une plage de trafic dans la plage spectrale visible est prise,
   - des plages contiguës dotées d'une luminosité qui dépasse une valeur de seuil sont extraites de l'image,
   - les plages sont classées au moins en fonction de leur grandeur,
   - pour chaque plage, une valeur de confiance qui représente une mesure de la ressemblance de la plage de l'image avec une lumière de véhicule est formée à partir du classement de la plage et d'une grandeur physique qui est affectée à la plage et,
   - en fonction de la valeur de confiance, il est défini si une plage est affectée à une lumière de véhicule.

7. Ensemble de phares pour un véhicule (10), avec

   - au moins deux phares (1, 2) espacés destinés à la production d'une répartition lumineuse globale (39, 40),
   - un équipement (15, 18) destiné à la détection d'usagers de la route (11, 12) se trouvant devant le véhicule (10) dans le sens de la marche et
   - un dispositif de commande qui est couplé au dispositif de détection d'usagers de la route (18, 20), avec lequel une première répartition lumineuse globale (39) peut être produite, pour laquelle la portée d'éclairement sur un premier côté d'un axe médian (36) est plus grande que sur l'autre deuxième côté de cet axe médian (36), et la portée d'éclairement atteint, sur l'autre deuxième côté, une limite de coupure afin qu'un usager de la route détecté ne soit pas ébloui, la première répartition lumineuse globale (39) pouvant être produite par la superposition d'une première répartition lumineuse partielle du premier phare (1) et d'une deuxième répartition lumineuse partielle du deuxième phare (2), la portée d'éclairement plus grande pouvant être produite sur le premier côté de l'axe médian (36) par l'émission lumineuse des deux phares (1, 2), et

- avec laquelle une deuxième répartition lumineuse globale (40) peut être produite, qui peut être produite par la superposition de la première répartition lumineuse partielle du premier phare (1) et de la deuxième répartition lumineuse partielle du deuxième phare, pour laquelle la répartition lumineuse globale (40) peut être régulée de telle sorte que, dans la direction de l'usager de la route (12) détecté, elle comporte une plage centrale (M) dotée d'une portée d'éclairement qui est plus faible que la distance à l'usager de la route (12) détecté et qui, des deux côtés près de la plage centrale (M), comporte deux plages latérales ($S_1$, $S_2$) dotées de portées d'éclairement qui sont plus grandes que la distance à l'usager de la route (12) détecté,

- la distance étant définie de telle sorte que, quand l'usager de la route (12) détecté est un autre véhicule, elle atteint le pare-chocs de l'autre véhicule ou, quand l'usager de la route (12) détecté est un cycliste ou un piéton, le point où l'usager de la route (12) détecté touche le sol,

**caractérisé en ce que**

- avec le dispositif de commande (16), lors de la commutation à partir de la première répartition lumineuse globale (39) vers la deuxième répartition lumineuse globale (40), les phares (1, 2) peuvent être pilotés de telle sorte que, pour éviter un éblouissement de l'autre usager de la route (11) pendant la commutation à partir de la première répartition lumineuse globale (39) vers la deuxième répartition lumineuse globale (40), la portée d'éclairement au moins du deuxième phare (2) sur le premier côté de l'axe médian (36) est d'abord suffisamment réduite pour être plus petite que la distance à l'usager de la route (12) détecté, puis la direction d'émission lumineuse (L) du deuxième phare (2) est pivotée autour d'un axe de pivotement (38) perpendiculaire, et enfin la deuxième répartition lumineuse globale (40) est produite.

FIG. 1

FIG. 2

**42**

**35**

min=0

fux=475 ; Emaxat (2,1-1,7) =44,5lx

max=44,5

**39**

# FIG. 3

**27**  **36**

**10**  **39**  **26**

# FIG. 4

FIG. 5

FIG. 6

FIG. 7

FIG. 8

FIG. 9

akkumulierte
Konfidenz

$M_A$

$M_A/2$

0

falsch        wahr

Zustand

FIG. 10

FIG.11

FIG. 12

FIG. 13

FIG. 14

FIG. 15

FIG. 16

FIG. 17

FIG. 18

FIG. 19

FIG. 20

FIG. 21

FIG. 22

FIG. 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007045150 A1
- DE 102007028658 A1
- DE 102007040042 A1

**In der Beschreibung aufgeführte Nicht-Patentliteratur**

- **R. SCHAPIRE ; Y. SINGER.** Improved boosting using confidence-rated predictions. *Machine Learning,* 1999, vol. 37 (3), 297-336